(19) Europäisches Patentamt
European Patent Office
Office européen des brevets

(11) **EP 2 564 923 A1**

(12) **EUROPEAN PATENT APPLICATION**
published in accordance with Art. 153(4) EPC

(43) Date of publication:
06.03.2013 Bulletin 2013/10

(51) Int Cl.:
**B01J 20/281** (2006.01)  **G01N 30/88** (2006.01)

(21) Application number: 11775110.7

(22) Date of filing: 28.04.2011

(86) International application number:
**PCT/JP2011/060370**

(87) International publication number:
**WO 2011/136329 (03.11.2011 Gazette 2011/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 03.12.2010  JP 2010270421
21.06.2010  JP 2010140691
28.04.2010  JP 2010104201

(71) Applicant: **Hitachi High-Technologies Corporation**
**Tokyo 105-8717 (JP)**

(72) Inventors:
• **NUNOSHIGE, Jun**
**Hitachi-shi**
**Ibaraki 319-1292 (JP)**
• **KAGAWA, Hiroyuki**
**Hitachi-shi**
**Ibaraki 319-1292 (JP)**

• **ITO, Shinya**
**Hitachinaka-shi**
**Ibaraki 312-8504 (JP)**
• **KANDA, Katsuhiro**
**Hitachinaka-shi**
**Ibaraki 312-8504 (JP)**
• **WAKI, Izumi**
**Kokubunji-shi**
**Tokyo 185-8601 (JP)**
• **ARAYA, Kotaro**
**Hitachi-shi**
**Ibaraki 319-1292 (JP)**
• **TAMURA, Terumi**
**Hitachinaka-shi**
**Ibaraki 312-8504 (JP)**

(74) Representative: **Strehl Schübel-Hopf & Partner**
**Maximilianstrasse 54**
**80538 München (DE)**

(54) **ADSORBENT AND METHOD FOR PRODUCING SAME**

(57)     An adsorbent that enables solid phase extraction with high efficiency and good selectivity of solutes having a broad chromatographic polarity range including high-polarity solute molecules while suppressing adsorption of impurities, and a solid phase extraction method therefor are provided. A heterocyclic-ring-containing copolymer adsorbent that is provided herein comprises a copolymer that comprises: a multifunctional heterocyclic-ring-containing monomer having a heterocyclic ring containing at least two heteroatoms in the ring system; and a monomer that is copolymerizable with the multifunctional heterocyclic-ring-containing monomer, wherein the multifunctional heterocyclic ring constitutes the main chain structure. Furthermore, the solid phase extraction method comprises a step of bringing a solution containing any one of a low-polarity solute molecule, a moderate-polarity solute molecule, and a high-polarity solute molecule as a solute into contact with the heterocyclic-ring-containing copolymer adsorbent, so that one or more types of solute are selectively adsorbed and held.

Fig. 1

**Description**

Technical Field

The present invention relates to an adsorbent, a method for producing same, and a solid phase extraction method using the adsorbent.

Background Art

In recent years, microanalysis technology for drug concentrations in biological samples has advanced, and thus clinical pharmacological examination based on drug concentrations has been conducted for many drugs. As a result, it has become understood that pharmacodynamic action depends on drug concentration more strongly than dosage, and thus blood drug concentration, can serve as an important criterion for determination of therapeutic effects or the expression of adverse reaction. Also conventionally, it has been revealed that most therapeutic effects thought to be exhibited by drugs in significantly different ways on individuals are not derived from sensitivity but from individual differences in drug concentration.
A medication method referred to as therapeutic drug monitoring (TDM) to be used for medicines with strong adverse reactions is of particular interest. In general, regarding the amount of a medicine to be administered, the dosage (standard dose) thereof is determined based on the results of clinical trial, clinical examination, and the like. Even if the same dose of a medicine is administered, the resulting blood drug concentrations are not always the same and are varied among patients. This is due to individual differences in *in vivo* drug disposition such as absorption, tissue distribution, protein binding, liver metabolism, renal excretion, and the like. In a normal situation, optimization of the dose for an individual patient's symptoms is most desirable. TDM is medical technology that involves measuring blood drug concentrations of individual patients in order to individualize the dose and/or method so as to keep a desirable effective therapeutic concentration.
As methods for measuring blood drug concentrations for TDM, separation and analysis methods involving immunoassay with an antibody against a medicine to be measured, mass spectroscopy (MS), high performance liquid chromatography (HPLC), and the like are mainly used. Immunoassay is broadly used as a TDM analysis technique since measurement can be performed conveniently and rapidly. However, immunoassay is problematic in that low-molecular-weight (molecular weight of 1,500 or less) molecules have low selectivity for antibodies and thus the resulting analytical accuracy is low. HPLC analysis is being introduced as a technique for analyzing a low-molecular-weight drug. However, the technique is problematic in that the measurement throughput is low and the sensitivity is insufficient for testing a sample with a low concentration.
Meanwhile, MS analysis is problematic in terms of decreased measurement sensitivity due to the effects of impurities, miniaturization of an apparatus for MS analysis, and the like. However, MS analysis is an analytical method that is excellent in detection sensitivity and selectivity, and thus it is of interest as a TDM analytical method that can address the problems of HPLC analysis. Also, as a technology for compensating for decreased sensitivity of MS analysis, a pretreatment method for specimens based on solid phase extraction (SPE) has been proposed (Non-patent Document 1).
Solid phase extraction is a technique that is employed for preparation of a sample for quantitative analysis such as MS analysis, by which matrix components (impurities-contaminants) other than the analytical subject contained in a specimen can be separated and removed, allowing the measurement subject to be concentrated and purified. Here, some impurities may contain a component that causes a decrease in the measurement sensitivity of quantitative analysis. Solid phase extraction is performed, so that the effects of such impurities on quantitative analysis can be reduced. Therefore, solid phase extraction is a useful separation technology. Specifically, solid phase extraction is a useful technique for analysis of trace amounts of organic matter, such as trace analysis of water quality, soil, and the like, and quantitative analysis of trace additives, poisons, agricultural chemicals, and the like. Solid phase extraction is used in wide-ranging fields including environmental contamination, pharmaceutical development, food nutritional evaluation, functional food nutritional evaluation, drinking water purity evaluation, and biotechnology. Solid phase extraction is further effective for removal of blood plasma proteins, phospholipids, and other matrix components that are disturbance components for TDM analysis. Solid phase extraction is also effective for analysis of *in vivo* drugs and metabolites thereof.
Regarding the theory and practice of SPE technology, methods described in Non-patent Document 2, Non-patent Document 3, and the like can be exemplified. Solid phase extraction of an aqueous solution is performed by the following process. First, a sample solution is applied to a column or a cartridge filled with an adsorbent within a cylinder, a subject substance is adsorbed to the surface of the adsorbent, and thus matrix components are caused to flow out intact. Subsequently, a washing solvent is applied to wash the adsorbent, and the subject substance is removed with an elution solvent and concentrated. At this time, affinity between the solvent and the adsorbent, adsorption strength between the object and the adsorbent, and the surface area of the adsorbent are important factors for determination of solid phase extraction performance.

For general-purpose solid phase extraction, in general, a syringe or a column- or cartridge-shaped container is used. Examples of such a cartridge include not only general cylindrical cartridges, but also discs or disc cartridges, multi-well plates, SPE pipette chips, and robot interchangeable large reservoirs. When a syringe or a column-or cartridge-shaped container is used for medicine screening and clinical testing, high capacity of processing samples is required in both cases. Examples of major analytical means include a liquid chromatography mass spectroscopy (LC-MS) system and a flow injection analysis mass spectroscopy (FIA-MS) system. Examples of a cartridge that can be used for both cases include multi-well plate systems (e.g., a 96-well plate, a 384-well plate, and a 1536-well plate).

Known examples of an adsorbent that is broadly used for solid phase extraction include silica particles and porous silica particles the surface of which is modified with a hydrophobic octyl (C8) functional group, an octadecyl (C18) functional group, or the like (Non-patent Document 4). A surface-modified silica particle adsorbent is immersed before use in an aqueous solution of a polar organic solvent. The solvation of a hydrophobic functional group and a polar organic solvent increases the affinity between the functional group and water, and the surface area where the solute is adsorbed and held is increased. Meanwhile, in the case of insufficient solvation with a polar organic solvent or a dry adsorbent, hydrophobic functional group aggregation decreases the capacity to hold the solute, making separation by solid phase extraction difficult. Therefore, solid phase extraction should be performed while always retaining (conditioning) the sufficient solvation of the surface of the adsorbent with a polar organic solvent, resulting in very complicated operation. Also, silanol groups remaining on the silica surface tend to be easily affected by pH and ion intensity. Thus, the capacity to hold a solute can be decreased depending on solid phase extraction conditions.

As an example of technology using an adsorbent alternative to silica, technology using resin particles with styrene-divinylbenzene or methacrylic acid ester as the main chain for polymerization is known (Patent Documents 1 to 3). Resin particles have higher stability against the effects of pH and ion intensity than silica particles and have a wide surface area, so that the capacity to hold a solute is higher than that of silica particles. However, the surface is hydrophobic, so that complicated operation such as conditioning or the like with a polar organic solvent is essential similarly to the case of surface-modified silica. Also, all of these particles are problematic in that the capacity to hold a solute is varied depending on solute polarity and solid phase extraction conditions, and thus the measurement reliability differs depending on solid phase extraction conditions.

As a method for decreasing the hydrophobicity of the above resin particles, a method that involves using an adsorbent comprising a hydrophobic monomer-hydrophilic monomer copolymer (copolymer of a hydrophobic monomer and a hydrophilic monomer) prepared by introducing a hydrophilic monomer such as N-vinylpyrrolidone or vinylpyridine into a hydrophobic monomer such as divinylbenzene is known (Patent Document 4). An example thereof having such a structure is a copolymer of divinylbenzene and N-vinylpyrrolidone such as OASIS (registered trademark) HLB (Waters). The adsorbent contains a hydrophilic molecular structure, so that wettability between a polar solvent such as water and the adsorbent is improved and the capacity of the hydrophilic group to hold a solvent is high. Thus, the above-described excessive conditioning is not required. However, a compound having a high-polarity structure, such as some medicines (e.g., a medicine having a large ring structure or molecular weight) and metabolites of medicines, cannot be sufficiently held on the surface of the adsorbent. In solid phase extraction, unintentional desorption and elution of polar solute molecules take place during a step of introducing and/or washing the solution of a medicine, resulting in a decreased solute recovery rate. In particular, a recovery rate is decreased in solid phase extraction of a moderate-polarity solute molecule and a high-polarity solute molecule, resulting in significant loss of the sample by solid phase extraction and deteriorated reliability of analytical results. The reason for this is assumed to be as follows. The hydrophilic adsorption site is small and isolated in the case of the copolymer, so that firm molecular adsorption cannot be formed by hydrophilic interaction, and adsorption with a high-polarity molecule is weak. Furthermore, hydrophilic functional groups contained in the adsorbent have bulky structures, which may lead to steric hindrance upon adsorption of the medicine and also a decreased solute recovery rate.

Also, resin particles, the surface of which is modified with sulfonic acid or amine, are commercially available for the purpose of using ionic bonding. However, increased surface polarity results in a relatively decreased recovery rate of a low-polarity solute molecule. With simple improvement in hydrophilicity alone, the recovery of solutes having a broad chromatographic polarity range cannot be achieved.

As an example of an adsorbent targeting a high-polarity medicine, a polymeric adsorbent is disclosed, which is prepared by treating the surface of styrene-divinylbenzene copolymer particles in order of nitration, reduction, and acetylation, and thus forming a hydrophilic surface capable of holding polar solute molecules (Patent Document 5). Spherical particles, the surfaces of which are covered with an acetyl group, are prepared, so that the hydrophilic surface is formed and the surface exhibits performance excellent in the capacity to hold a polar solute. However, the surface is covered with a hydrophilic group, so that the capacity to hold a molecule having a non-polar structure on the surface of an adsorbent is lowered, and thus sufficient solid phase extraction performance cannot be exhibited. Furthermore, surface hydrophilicity is very high, resulting in problems that differ from those of a copolymer of hydrophobic and hydrophilic monomers, such as the occurrence of unintentional adsorption of impurities other than a medicine and inhibition of desorption due to firm adsorption between a medicine and an adsorbent.

Also, Patent Document 6 describes a method for producing an adsorbent, comprising reacting a specific compound with a particulate polymer having specific solubility parameter, for example.

Prior Art Documents

Patent Documents

Patent Document 1 U.S. Patent No. 5,618,438 (specification)
Patent Document 2 U.S. Patent No. 5,882,521 (specification)
Patent Document 3 U.S. Patent No. 6,106,721 (specification)
Patent Document 4 International Publication 97/38774 (pamphlet)
Patent Document 5 International Publication 03/102061 (pamphlet)
Patent Document 6 JP Patent Publication (Kokai) No. 2000-5598 A

Non-patent Documents

Non-patent Document 1 P. McDonald, Solid Phase Extraction Applications Guide and Bibliography, sixth edition, Waters, Milford, MA (1995)
Non-patent Document 2 E. M. Thurman and M. S. Mills, Solid-Phase Extraction Principles and Practice, Wiley and Sons, New York, NY (1998)
Non-patent Document 3 N. J. K. Simpson, Solid-Phase Extraction: Principles, Techniques and Application, Marcel Dekker, New York, NY (2000)
Non-patent Document 4 Bakerbond SPE Bibliography, JTBaker, Inc., Phillipsburg, NJ (1995)

Summary of the Invention

Problem to be Solved by the Invention

As described above, the decreased measurement sensitivity of an analyzer due to the effects of impurities (contaminants) is a significant problem for solid phase extraction. Pretreatment performed by solid phase extraction is an effective means for concentration and purification of a measurement subject. In complicated component analysis for composition (e.g., trace analysis of water quality, soil, and the like, quantitative analysis of trace additives, poison, agricultural chemicals, and the like, evaluation of environmental contamination, pharmaceutical development, food nutritional evaluation, functional food nutritional evaluation, drinking water purity evaluation, and TDM analysis), an adsorbent capable of strongly holding a solute that is a measurement subject is required. Also, regarding an adsorbent to which a solute has been adsorbed, an adsorbent, from which impurities can be removed by washing the adsorbent with water, an aqueous solution, or an organic solvent, is required. Also, in a washing step, increased measurement sensitivity of MS analysis can be expected by removing impurities that can interfere with mass spectroscopic detection so as to cause ion suppression. Also, it is desirable that an adsorbent be easily solvated with water or a polar solvent, be able to maintain the solvated state for a long time period, and exhibit solid phase extraction equivalent performance under wet and dry conditions.

In particular, reduction of the amounts of impurities by the pretreatment is essential in quantitative analysis of medicines for TDM. Meanwhile, medicines that are measurement subjects have a wide variety of molecular structures and the presence or the absence of polarity and the level of polarity thereof differ depending on the molecular structures. Therefore, an adsorbent for solid phase extraction is strongly required to have adsorption performance by which solutes having even a wider chromatographic polarity range can be held highly efficiently. Also, a plurality of measurement subjects may likely be simultaneously performed for the purposes of reducing the number of MS analyses, achieving high efficiency, screening for medicine components contained in blood, and the like. Therefore, selectivity for adsorbing only a component as a measurement subject is also important for an adsorbent.

With the adsorbent described above (Patent Document 4), simplification of conditioning becomes possible by improvement in wettability of the surface of the adsorbent, and thus solid phase extraction excellent in processability can be performed. However, when the adsorbent is used, hydrophilic interaction with the hydrophilic structure of a medicine is insufficient to cause adsorption, and thus there is a tendency such that the higher the polarity of a molecule, the lower the amount of the sample recovered by solid phase extraction. Furthermore, the hydrophilic functional group serves as steric hindrance, so as to inhibit solute adsorption. Anticonvulsants or antibiotics, which are kinds of target medicine for TDM analysis, include many medicines having cyclic molecular structures, medicines having large molecular weights, and high-polarity medicines. Development of an adsorbent that allows highly efficient solid phase extraction of these medicines to be performed is strongly expected. On the other hand, as described above (Patent Document 5), hydrophobic interaction with a non-polar structure such as a hydrocarbon group in a structure covered with a hydrophilic structure becomes weakened, and decreased efficiency of low-polarity medicine recovery is an issue of concern. Such a structure can be an additional factor of impurity adsorption, so that the functionality of an adsorbent cannot be improved with only a simple increase in the amount of the hydrophilic structure on the surface of the adsorbent.

Also, according to the technology described in Patent Document 4, affinity between a hydrophobic monomer and a hydrophilic monomer to be used upon production of an adsorbent is low. Hence, the polymerization ratio, particle size, and the like of the thus obtained polymer may be significantly varied depending on the polymerization conditions upon copolymerization thereof. Therefore, the thus produced adsorbent is problematic in that the performance of the adsorbent is unstable. Accordingly, the polymerization conditions must be strictly controlled to stabilize the performance. The resulting high production cost is also a problem.

Also, an adsorbent according to the technology described in Patent Document 6 is a hydrophobic adsorbent prepared by covering the resin surface with a long-chain hydrocarbon (alkyl) group. The adsorbent is problematic in low performance of solid phase extraction of a high-polarity medicine.

An object of the present invention is to obtain an adsorbent that enables highly efficient and highly selective solid phase extraction of solutes (including high-polarity solute molecules) having a broad polarity range, which has not been currently obtained. Therefore, the following copolymer adsorbent and solid phase extraction method using the same were examined in order to achieve the object and to address other problems.

Furthermore, the present invention has been completed to achieve the above object. An object of the present invention is to provide an adsorbent that is inexpensive and excellent in extraction performance and a method for producing the same.

Means for Solving the Problem

The present inventors have focused on a heterocyclic-ring-containing copolymer adsorbent as a means for solving technical problems such as achievement of the high polarity of a hydrophilic functional group, application of a hydrophilic functional group capable of reducing steric hindrance, and achievement of both suppression of impurity adsorption and medicine recovery performance. As a result of intensive studies on the adsorbent, the present inventors have completed the present invention. The means for solving the problems of the present invention are as disclosed as follows.

One means for solving the problems of the present invention is a heterocyclic-ring-containing copolymer adsorbent characterized by comprising a copolymer that contains:

at least one type of multifunctional heterocyclic-ring-containing monomer that has a heterocyclic ring containing at least 2 heteroatoms in the ring system, and has two or more polymerizable functional groups; and
at least one type of monomer that has one or more polymerizable functional groups co-polymerizable with the multifunctional heterocyclic-ring-containing monomer, wherein
the heterocyclic ring constitutes the main chain structure.

A heterocyclic ring is incorporated into the main chain structure through employment of the multifunctional monomers, so that a plane adsorption site with low steric hindrance can be formed. Desirable examples of heteroatoms to be contained in a ring system include main group elements having electronegativity higher than that of carbon. Such a heteroatom is an atom capable of inducing hydrophilic interaction with a hydrophilic part of a solute via another hydrophilic structure, a hydrogen bond, or the like. Furthermore, a heterocyclic ring structure has heteroatoms having unshared electron pairs so as to cause polarity bias within the heterocyclic ring, thereby exhibiting hydrophilic interaction with the polar site of the solute. Here, if only one heteroatom is contained in a heterocyclic ring, a sufficient polarity difference with the ring system cannot be obtained and the adsorption force of a high-polarity medicine or the like is weak. However, if a structure is prepared to have two or more heteroatoms, a high polarity difference within the ring system can be obtained. Furthermore, a plurality of hydrophilic structures are contained, so that a polar group contained in one solute can be held by a plurality of adsorption sites within the heterocyclic ring. A bridged hydrophilic bond is formed for one polar group of a solute, for example, in such a form of a polydentate ligand in a complex. Furthermore, a ladder-structured hydrophilic bond is formed for a plurality of polar groups of a solute. Therefore, such bond formation makes it possible to firmly adsorb and stably hold a medicine.

As another means for solving the problems of the present invention, a solid phase extraction method for separating a solute contained in a solution is disclosed. The method is a solid phase extraction method characterized by comprising a step of selectively adsorbing and holding one or more types of solute. Specifically, the step involves bringing a solution containing as a solute one or more types of low-polarity solute molecule, moderate-polarity solute molecule, and high-polarity solute molecule into contact with the above heterocyclic-ring-containing copolymer adsorbent, so as to cause wetting. Examples of a solution include a biomatrix, an environmental sample, and a medicinal sample containing specimens. Examples of an apparatus for solid phase extraction include a solid phase extraction cartridge and a solid phase extraction column prepared by filling a container having an open end with the above-mentioned heterocyclic-ring-containing copolymer adsorbent. Examples of the application of the means for solving the problems include a liquid chromatography mass spectroscopy (LC-MS) system and a flow injection analysis mass spectroscopy (FIA-MS) system, which are characterized by using a solid phase extraction apparatus for pretreatment of a specimen.

As a result of examination of an amphiphatic copolymer adsorbent and a solid phase extraction method using the adsorbent, the following (1) to (29) are provided as means for solving other problems in the present invention.

(1) An amphiphatic copolymer adsorbent provided with a contact surface to which a solute can be adsorbed, which comprises:

a copolymer containing one or more types of monomer unit that is composed of a high-polarity monomer having a high-polarity molecular structure and one or more types of monomer unit that is composed of a low-polarity monomer having a solubility parameter (SP value) of 10.0 or less, wherein the SP value difference between the two monomers is at least 2.2.

(2) An amphiphatic copolymer adsorbent provided with a contact surface to which a solute can be adsorbed, which comprises:

a copolymer containing one or more types of monomer unit that is composed of a high-polarity monomer having an SP value of 11.5 or more and a monomer unit that is composed of a low-polarity monomer having an SP value of 10.0 or less.

(3) The amphiphatic copolymer adsorbent according to (1) or (2) above, wherein the SP value of the copolymer is 9.5 or more.

(4) The amphiphatic copolymer adsorbent according to any one of (1) to (3) above, wherein the high-polarity monomer is selected from N-phenyl maleimide, maleic anhydride, fumaric acid, maleic acid, and triallyl isocyanurate.

(5) An amphiphatic copolymer adsorbent provided with a contact surface to which a solute can be adsorbed, which comprises:

a copolymer containing
one or more types of monomer unit that is composed of a high-polarity monomer having a plural number of high-polarity molecular structures of one or more types selected from an ester bond, an urethane bond, an amide bond, a thioester bond, a tetrahydrofuran ring, a furan ring, a carboxyl group, an amino group, an alkylamino group, and a dialkylamino group, wherein the number of carbon atoms contained between two structures each of the plural number of high-polarity molecular structures is 4 or less, and
one or more types of monomer unit that is composed of a low-polarity monomer having an SP value of 10.0 or less.

(6) The amphiphatic copolymer adsorbent according to (5) above, wherein the high-polarity monomer is selected from methylenebis acrylamide, tetrahydrofurfuryl acrylate, tetrahydrofurfuryl methacrylate, diallyl phthalate, divinyl isophthalate, diallyl isophthalate, divinyl terephthalate, diallyl terephthalate, furfuryl acrylate, and furfuryl methacrylate.

(7) An amphiphatic copolymer adsorbent provided with a contact surface to which a solute can be adsorbed, which comprises:

a copolymer containing one or more types of monomer unit that is composed of a high-polarity monomer and a high-polarity molecular structure selected from an isocyanuric acid ester backbone, a cyanuric acid ester backbone, a hexahydrotriazine backbone, a maleimide backbone, and an imidazole backbone, and one or more types of monomer unit that is composed of a low-polarity monomer having an SP value of 10.0 or less.

(8) The amphiphatic copolymer adsorbent according to (7) above, wherein the high-polarity monomer is selected from N-phenyl maleimide, triallyl isocyanurate, triallyl cyanurate, 1,3,5-triacryloylhexahydro-1,3,5-triazine, N-phenyl maleimide, and 1-vinylimidazole.

(9) An amphiphatic copolymer adsorbent provided with a contact surface to which a solute can be adsorbed, which comprises:

a copolymer containing
one or more types of monomer unit that is composed of a high-polarity monomer having one or more types of high-polarity molecular structure selected from an ether bond, an ester bond, an urethane bond, an amide bond, a thioester bond, a carboxyl group, an amino group, an alkylamino group, a dialkylamino group, and a hetero ring, wherein the weight ratio of heteroatoms in the high-polarity monomer accounts for 30 wt% or more, and one or more types of monomer unit that is composed of a low-polarity monomer having an SP value of 10.0 or less.

(10) The amphiphatic copolymer adsorbent according to (9) above, wherein the high-polarity monomer is selected from N,N-dimethylacrylamide, maleic acid, fumaric acid, methacrylic acid, and acrylic acid.

(11) The amphiphatic copolymer adsorbent according to any one of (1) to (10) above, wherein at least one type of monomer constituting the copolymer is a multifunctional monomer containing two or more polymerizable unsaturated functional groups.

(12) The amphiphatic copolymer adsorbent according to any one of (1) to (11) above, wherein the low-polarity monomer is selected from allyl glycidyl ether (SP value of 8.7), styrene (SP value of 9.2), divinylbenzene (SP value of 9.3), methyl methacrylate (SP value of 9.4), methyl acrylate (SP value of 9.5), vinyl acetate (SP value of 9.5) and bisvinylphenylethane (SP value of 9.9).

(13) An amphiphatic copolymer adsorbent provided with a contact surface to which a solute can be adsorbed, which contains:

a monomer unit that is composed of a high-polarity monomer selected from triallyl isocyanurate, maleic anhydride, diallyl isophthalate, tetrahydrofurfuryl acrylate, triallyl cyanurate, and N,N-dimethylacrylamide; and a monomer unit that is composed of divinylbenzene as a low-polarity monomer.

(14) The amphiphatic copolymer adsorbent according to any one of (1) to (13) above, which is prepared in the form of particles by suspension polymerization, emulsion polymerization, emulsion polymerization, a spray-drying method, grinding, or crushing.

(15) The amphiphatic copolymer adsorbent according to (14) above, which is a massive particle.

(16) The amphiphatic copolymer adsorbent according to (14) above, which is a spherical particle.

(17) The amphiphatic copolymer adsorbent according to (16) above, wherein the particle size ranges from 0.5 $\mu$m to 100 $\mu$m.

(18) A solid phase extraction method, comprising a step of bringing a solution containing as a solute one or more types of molecule selected from a non-polar solute molecule, a low-polarity solute molecule, a moderate-polarity solute molecule, and a high-polarity solute molecule into contact with the amphiphatic copolymer adsorbent according to any one of (1) to (17) above, so as to adsorb and hold the solute in the solution to the amphiphatic copolymer adsorbent.

(19) The solid phase extraction method according to (18) above, wherein the solution contains a polar solvent.

(20) The solid phase extraction method according to (19) above, wherein the polar solvent is water or a mixed solvent of water and a polar organic solvent.

(21) The solid phase extraction method according to (19) above, wherein the polar solvent contains one or more types selected from methanol, ethanol, propanol, 2-propanol, acetone, methyl ethyl ketone, methyl isobutyl ketone, methyl acetate, ethyl acetate, acetonitrile, tetrahydrofuran, 1,4-dioxane, N,N-dimethylformamide, and dimethylsulfoxide.

(22) The solid phase extraction method according to any one of (18) to (21) above, wherein the solution contains blood plasma, serum, blood, urine, a spinal fluid, a synovial fluid, a biological tissue extract, an aqueous solution, ground water, surface water, a soil extract, cosmetics, a food substance, or an extract of a food substance.

(23) The solid phase extraction method according to any one of (18) to (22) above, wherein a solute to be subjected to solid phase extraction is a medicine, an antibacterial agent, a drug, an insecticide, a herbicide, poison, a biomolecule, a contaminant, or a metabolite or degraded product thereof.

(24) The solid phase extraction method according to (23) above, wherein the biomolecule is a protein, a vitamin, a hormone, a polypeptide, a polynucleotide, a lipid, or a carbohydrate.

(25) A solid phase extraction cartridge, which is prepared by filling a container having an open end with the amphiphatic copolymer adsorbent according to any one of (1) to (17) above.

(26) A solid phase extraction column, which is prepared by filling a container having an open end with the amphiphatic copolymer adsorbent according to any one of (1) to (17) above.

(27) A liquid chromatography/ultraviolet spectroscopy (LC-UV) system, by which solid phase extraction of a solute is performed as pretreatment using the solid phase extraction cartridge according to (25) above or the solid phase extraction column according to (26) above.

(28) A liquid chromatography/mass spectroscopy (LC-MS) system, by which solid phase extraction of a solute is performed as pretreatment using the solid phase extraction cartridge according to (25) above or the solid phase extraction column according to (26) above.

(29) A flow injection analysis mass spectroscopy (FIA-MS) system, by which solid phase extraction of a solute is performed as pretreatment using the solid phase extraction cartridge according to (25) above or the solid phase extraction column according to (26) above.

As a result of intensive studies to achieve the above objects, the present inventors have further discovered, as another means for solving the problems, that an inexpensive adsorbent having good adsorption performance and a method for producing the same can be provided by binding a hydrophilic group with a specific solubility parameter to a part of the surface of a hydrophobic resin with a specific solubility parameter. Thus, the present inventors have completed the present invention.

This description includes part or all of the contents as disclosed in the descriptions and/or drawings of Japanese Patent Application Nos. 2010-270421, 2010-104201, and 2010-140691, which are priority documents of the present application.

Effects of the Invention

According to the present invention, through application of a heterocyclic ring having a plurality of hetero elements having unshared electron pairs, a heterocyclic-ring-containing copolymer adsorbent that is capable of firmly adsorbing and holding a solute with hydrophilic functional groups and a high-polarity structure through hydrophilic interaction can be obtained. Also, a multifunctional heterocyclic ring is employed, so that hydrophilic groups cannot exist as a side chain, as in the case of a polymer comprising a monofunctional monomer, but can exist being surrounded by the main chain structure. Accordingly, steric hindrance caused by functional groups against the adsorption surface of a solute is reduced, enabling the highly efficient adsorption of the solute. Furthermore, through introduction of a heterocyclic ring having a plurality of heteroatoms, hydrophilic adsorption sites are formed, so as to enable solute adsorption with efficiency higher than a case in which a single hydrophilic group is contained. This makes it possible to suppress the copolymerization ratio of the hydrophilic monomer to another monomer(s), compared with an adsorbent having a single hydrophilic group. As described in Background Art, when the hydrophilicity of an adsorbent is enhanced, adsorption of polar impurities (e.g., phospholipids) other than a medicine takes place more easily in TDM analysis, for example. Through application of the heterocyclic-ring-containing copolymer adsorbent, both suppression of the adsorption of polar impurities and maintenance of the solute recovery performance can be performed simultaneously. Also, through the use of the adsorbent, a solid phase extraction method with high efficiency and good selectivity, solid phase extraction apparatuses (e.g., a solid phase extraction cartridge and solid phase extraction column), by which a solute and the adsorbent can be more firmly bound during the adsorption process and the solute can be more easily recovered, an LC-MS system, an FIA-MS system, and the like using these solid phase apparatuses for pretreatment of specimens can be provided for solutes having a broad chromatographic polarity range. Problems, compositions, and constitutions other than those described above are clarified by the explanation for the following embodiments.

Also, according to the present invention, as another means for solving the problems, an amphiphatic copolymer adsorbent that is capable of adsorbing and holding highly efficiently both the high-polarity structure and the low-polarity structure of solutes can be obtained through preparation of the adsorbent copolymer in which both the high-polarity structure and the low-polarity structure coexist. Furthermore, through the use of the adsorbent, a solid phase extraction method with high efficiency and good selectivity, by which solutes having a broad chromatographic polarity range and an adsorbent are more firmly bound during the adsorption process and the solutes can be easily recovered, and solid phase extraction apparatuses such as a solid phase extraction cartridge and a solid phase extraction column can be provided. Furthermore, the solid phase extraction method of the present invention is performed as pretreatment, so that an LC-MS system, a FIA-MS system, and the like with high measurement sensitivity can be provided.

Furthermore, according to the present invention, an inexpensive adsorbent with good adsorption performance and a method for producing the same can be provided.

Brief Description of the Drawings

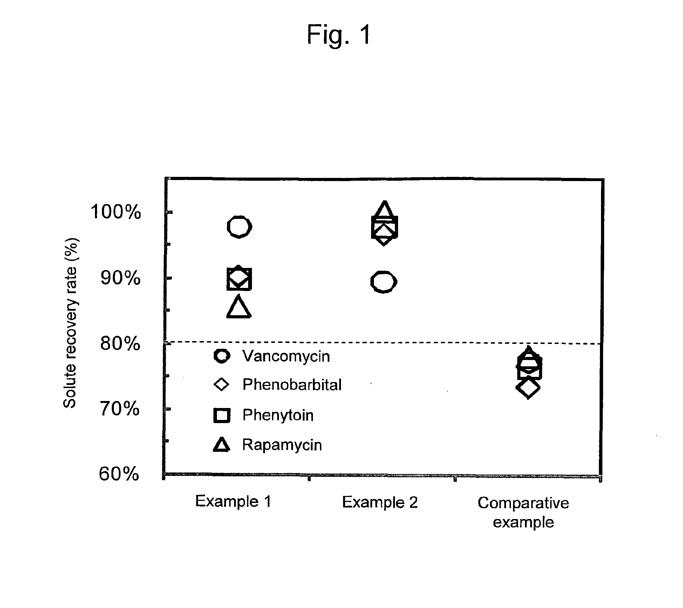

Fig. 1 is a graph showing the results of performing solid phase extraction of each solute using the heterocyclic-ring-containing copolymer adsorbents of Examples 1 and 2 and the resin particles of a comparative example and comparing the solute recovery rates by LC-MS analysis (phenobarbital and phenytoin) and FIA-MS analysis (vancomycin and rapamycin).

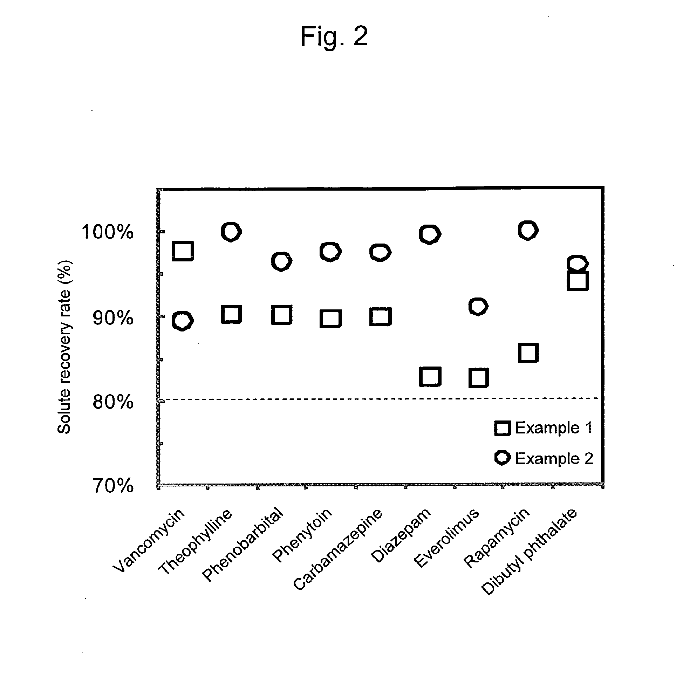

Fig. 2 is a graph showing the results of evaluating the solid phase extraction performance of the heterocyclic-ring-containing copolymer adsorbents of Examples 1 and 2 for each solute molecule by LC-MS analysis (phenobarbital, phenytoin, carbamazepine, and diazepam) and FIA-MS analysis (vancomycin, theophylline, everolimus, rapamycin, and dibutyl phthalate).

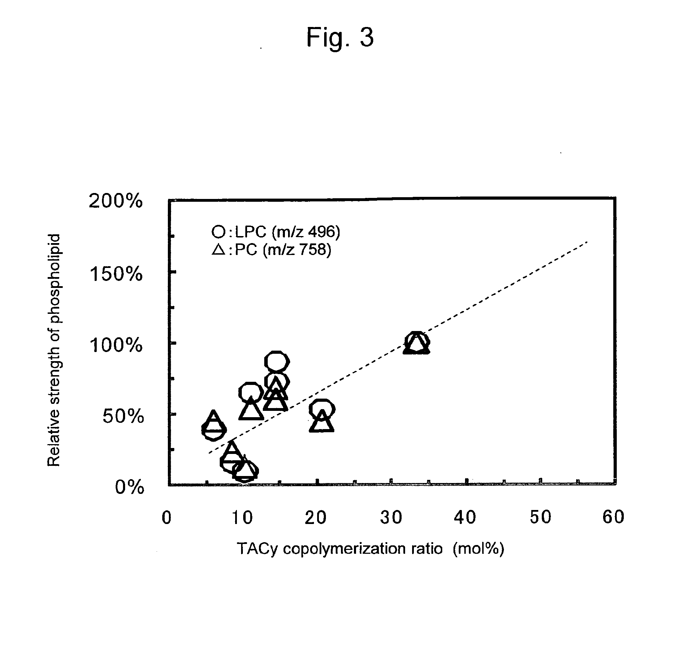

Fig. 3 is a graph showing the relationship between the triallyl cyanurate (TACy) copolymerization ratios of the divinylbenzene-triallyl cyanurate copolymers of Examples 2 to 9 and each relative strength found from the peak height of signal strength in LC-MS corresponding to the mass-to-charge ratio (LPC: m/z496, PC: m/z758) of lysophosphatidylcholine (LPC) or phosphatidylcholine (PC) that is a kind of phospholipid. Here, the peak height in Example 9 (TACy copolymerization ratio = 33.4 mol%), which was the highest peak height of signal strength in LC-MS was designated as 100%, and then each relative strength of LPC and PC in the cases of other copolymers was found.

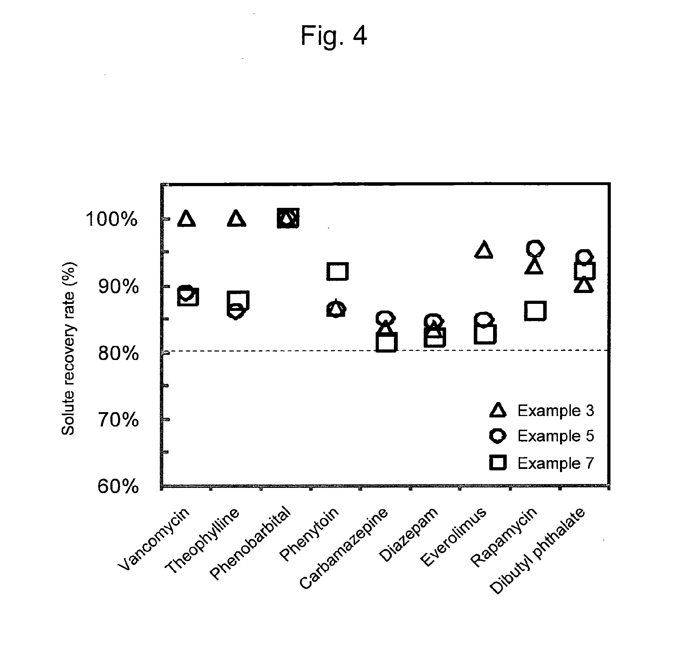

Fig. 4 is a graph showing the results of evaluating the solid phase extraction performance of the divinylbenzene-triallyl cyanurate copolymers of Examples 3, 5, and 7 for solute molecules (vancomycin, theophylline, phenobarbital, phenytoin, carbamazepine, diazepam, everolimus, rapamycin, and dibutyl phthalate) by FIA-MS.

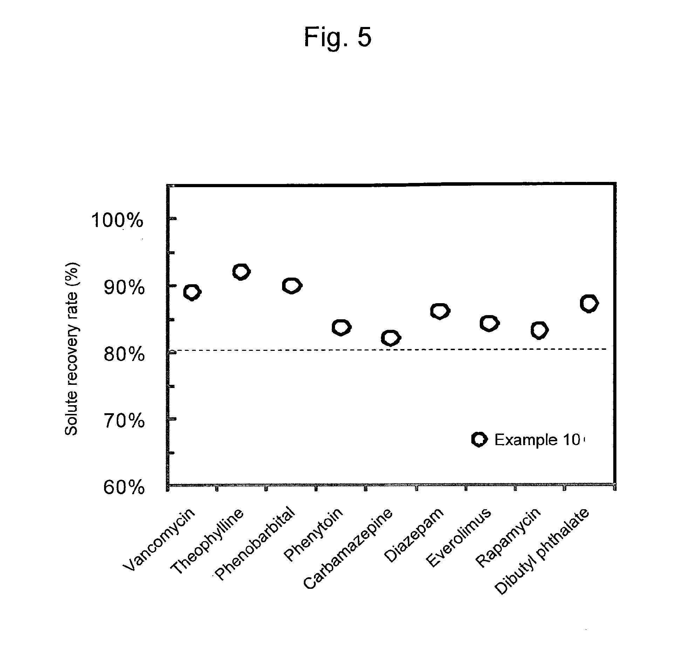

Fig. 5 is a graph showing the results of evaluating the solid phase extraction performance of a monolith column comprising the divinylbenzene-triallyl cyanurate copolymer of Example 10 for solute molecules (vancomycin, theophylline, phenobarbital, phenytoin, carbamazepine, diazepam, everolimus, rapamycin, and dibutyl phthalate) by FIA-MS.

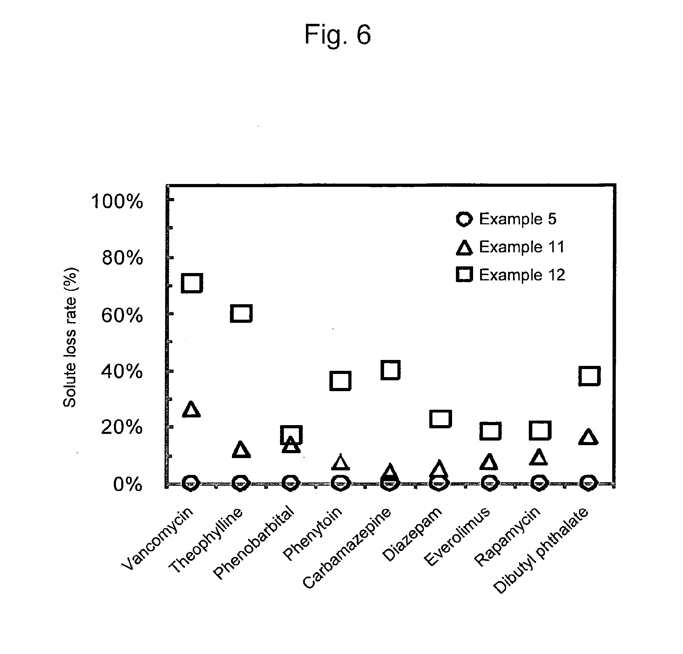

Fig. 6 is a graph showing the results of evaluating the recovery rates (solute loss) (of solute components (vancomycin, theophylline, phenobarbital, phenytoin, carbamazepine, diazepam, everolimus, rapamycin, and dibutyl phthalate) contained in a solution (100 $\mu$L) (obtained after solute adsorption) or pure water (200 $\mu$L) added for washing the adsorbents) of the divinylbenzene-triallyl cyanurate copolymers of Examples 5, 11, and 12 having different particle sizes of adsorbents and particle size distributions.

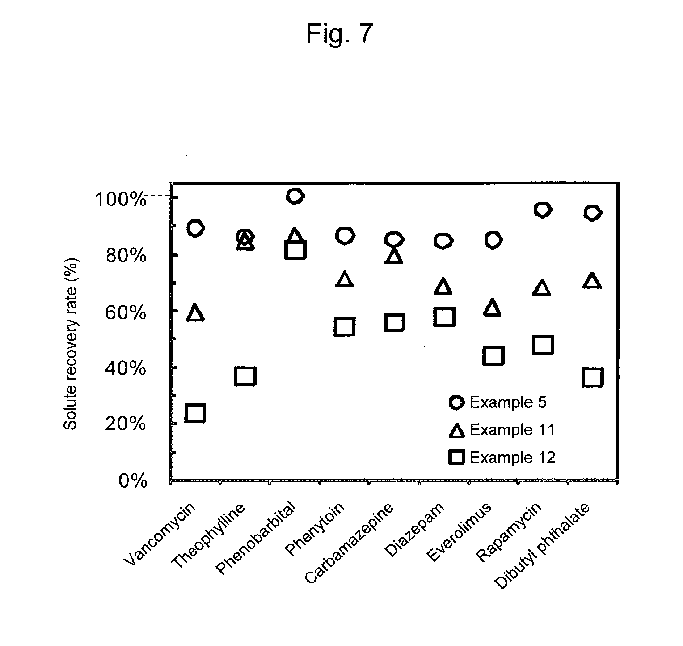

Fig. 7 is a graph showing the results of evaluating the solid phase extraction performance of the divinylbenzene-triallyl cyanurate copolymers of Examples 5, 11, and 12 having different particle sizes of adsorbents and particle size distributions for solute molecules (vancomycin, theophylline, phenobarbital, phenytoin, carbamazepine, diazepam, everolimus, rapamycin, and dibutyl phthalate) by FIA-MS.

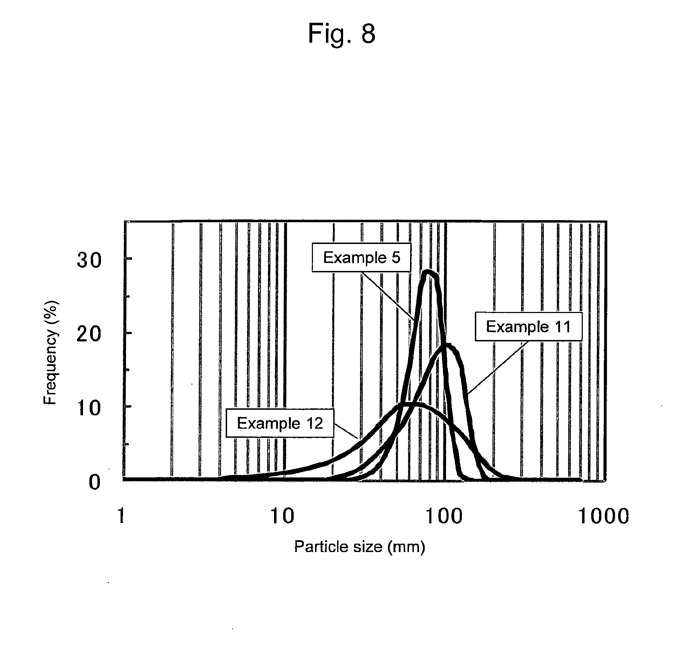

Fig. 8 is a graph showing the results of measuring particle size distributions of the divinylbenzene-triallyl cyanurate copolymers of Examples 5, 11, and 12 having different particle sizes of adsorbents and particle size distributions.

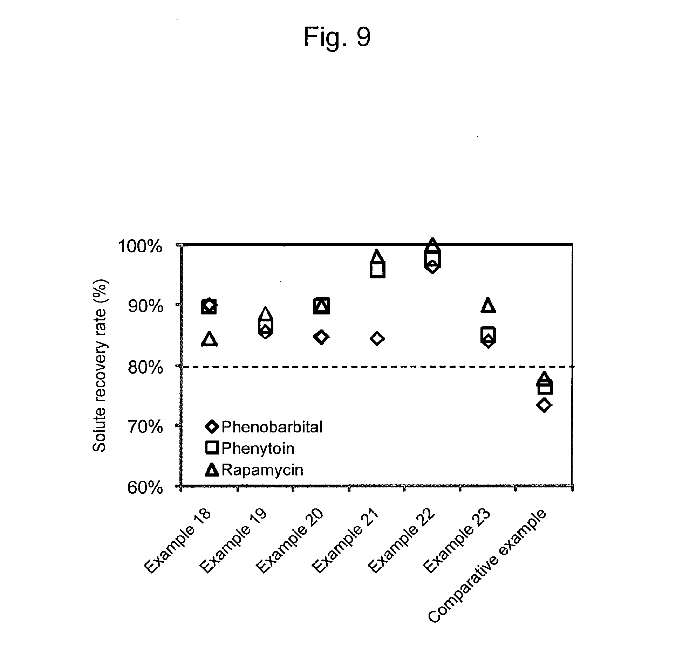

Fig. 9 is a graph showing the results of performing solid phase extraction for the solution containing each solute using the amphiphatic copolymer adsorbents of Examples 18 to 23 and the adsorbent of comparative example and then measuring solute recovery rates by LC-UV analysis (phenobarbital and phenytoin) and FIA-MS analysis (rapamycin).

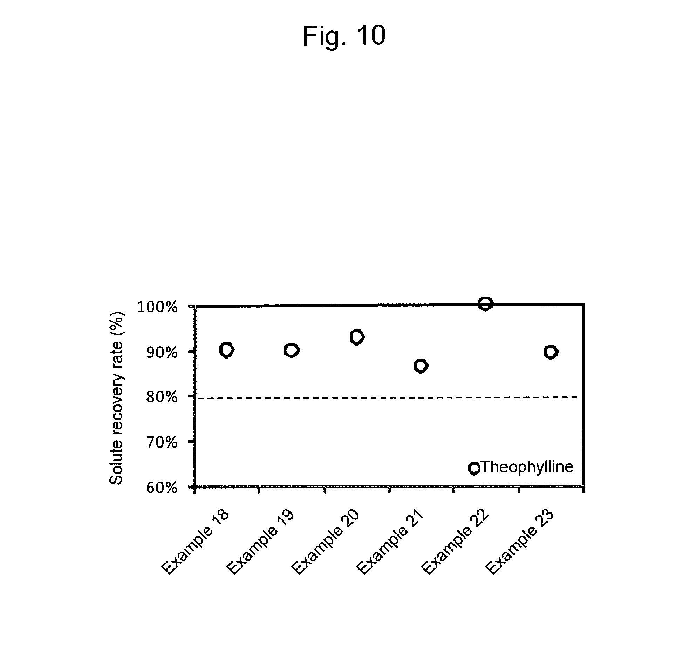

Fig. 10 is a graph showing the results of performing solid phase extraction for a solution containing a high-polarity solute molecule (theophylline) using the amphiphatic copolymer adsorbents of Examples 18 to 23 and then measuring solute recovery rates by LC-MS.

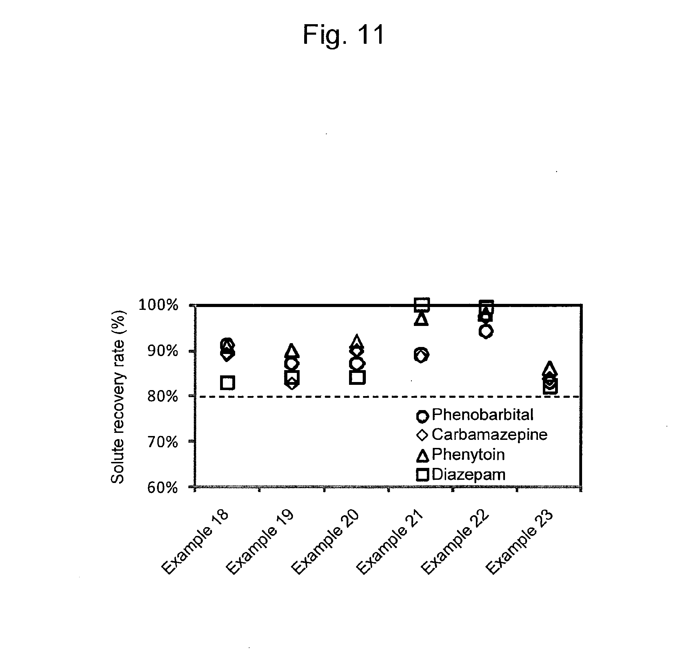

Fig. 11 is a graph showing the results of performing solid phase extraction for mixed solutions containing moderate-polarity solute molecules (phenobarbital, phenytoin, carbamazepine, and diazepam) using the amphiphatic copolymer adsorbents of Examples 18 to 23 and then measuring solute recovery rates by LC-MS.

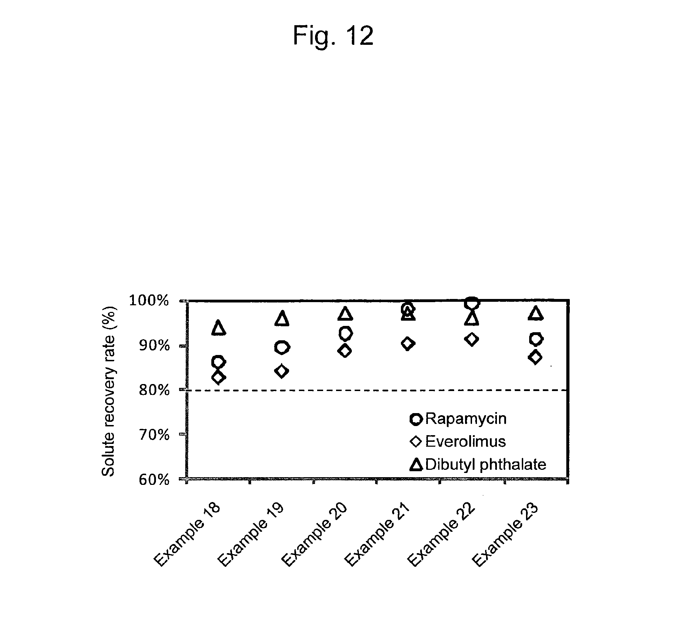

Fig. 12 is a graph showing the results of performing solid phase extraction for mixed solutions containing low-polarity solute molecules (everolimus, rapamycin, and dibutyl phthalate) using the amphiphatic copolymer adsorbents of Examples 18 to 23 and then measuring solute recovery rates by FIA-MS.

Embodiments for Carrying out the Invention

First, a heterocyclic-ring-containing copolymer adsorbent that is a first embodiment of the present invention and a solid phase extraction method using the same are as described below.

In conventional adsorbent technology, a copolymer having a hydrophobic-hydrophilic structure has been proposed for improving the wettability of a polar solvent. However, the copolymer is problematic in that a major feature is the introduction of monomers with low hydrophilicity and the contribution of hydrophilic interaction to adsorption formation is low, compared with a heterocyclic ring as the main chain structure according to the present invention. In particular, the capacity of such a conventional adsorbent to recover high-polarity solute molecules by solid phase extraction tends to be lowered and adsorption resulting from hydrophilic interaction merely plays a supporting part. In the present invention, the following three items were focused as indices for achievement of highly efficient medicine adsorption: (1) improvement of the adsorption capacity of a hydrophilic adsorption site; (2) reduction of steric hindrance of medicine adsorption sites; and (3) suppression of adsorption of polar impurities. Thus, a multifunctional heterocyclic-ring-containing monomer was defined. In the present invention, medicines and chemicals were assumed to be subject solutes and described. However, subject solutes in the present invention are not particularly limited, as long as they are substances that are recovered by solid phase extraction. Examples of preferable subject solutes include chemicals, medicines, antibacterial agents, anticonvulsants, immunosuppressive agents, drugs, insecticides, herbicides, poisons, biomolecules, contaminants, metabolic medicines, and degraded products of metabolites.

The term "multifunctional heterocyclic-ring-containing monomer" in the present invention refers to a monomer group having a heterocyclic ring that contains at least two heteroatoms in the ring system, and having two or more polymerizable functional groups. All members of the monomer group have a plurality of hydrophilic adsorption sites within a heterocyclic ring, so that the plurality of sites are inferred to cause hydrophilic interaction in a concerted manner. Hence, a solute is adsorbed and held more easily and firmly than the case of a single hydrophilic group. Furthermore, the heterocyclic ring is incorporated into the main chain of the copolymer because of the presence of two or more polymerizable functional groups. Accordingly, the resulting hydrophilic adsorption sites are inferred to have no bulky structure such as that in the case of conventional functional groups existing as side chains, but have a plane structure with respect to the main chain of the copolymer. As a result, the effects of steric hindrance upon solute adsorption are suppressed, the hydrophilic part of the solute easily causes hydrophilic interaction with an adsorbent, and thus adsorption takes place. Subsequently, the hydrophobic sites of the solute are adsorbed and stabilized through the hydrophobic interaction with the hydrophobic backbone of the adsorbent. Thus, the overall solute is inferred to be adsorbed and held. Also, solvation and wettability with a polar solvent are improved through introduction of a heterocyclic ring as the main chain structure.

A monomer containing functional groups copolymerizable with the multifunctional heterocyclic-ring-containing monomer in the present invention is not particularly limited in terms of the structure of polymerization sites, the main chain structure, and the structure of functional groups, as long as it is copolymerizable with the above multifunctional heterocyclic-ring-containing monomer. Regarding solute adsorption in the present invention, hydrophilic interaction is an effect that mainly results from the heterocyclic ring structure. Thus, it is inferred that solute adsorption does not depend on the structure of a monomer to be copolymerized therewith. When a hydrophobic solute having many hydrophobic sites is adsorbed, introduction of a monomer having many hydrophilic sites as in conventional cases can cause unintentional results such as decreased adsorption performance and increased amounts of adsorbed impurities. Accordingly, desired monomers to be copolymerized are members of a monomer group having a hydrophobic structure, such as a hydrocarbon group, a hydrocarbon ring, and aromatic hydrocarbon. The monomer group has high affinity for a hydrophobic structure such as a hydrocarbon group and causes adsorption by hydrophobic interaction. Also through the formation of a polarity contrast with a heterocyclic ring structure, the surface of an adsorbent having good capacity to adsorb and hold any of a high-polarity solute molecule, a moderate-polarity solute molecule, and a low-polarity solute molecule can be provided.

The term "adsorption" in the present invention refers to a state of reversible binding of a solute with an adsorbent through hydrophilic interaction and hydrophobic interaction. The term "hydrophilic interaction" mainly refers to general intermolecular force in which a polar structure is involved, such as hydrogen bonding, dipole-dipole interaction, ion-dipole interaction, dipole-induced dipole interaction, and London dispersion force.

The polarity of a solute in the present invention is defined as follows on the basis of octanol·water distribution coefficient (logP). The term "high-polarity solute molecule" refers to a molecule having a logP value ranging from -2.0 to 1.5. Similarly, the term "moderate-polarity solute molecule" refers to a molecule having a logP value ranging from 1.5 to 3.0. The term "low-polarity solute molecule" refers to a molecule having a logP value of 3.0 or more. In addition, a logP value is a numeric representation of the polarity of a solute, to which both a value found by molecular structure calculation and an actual value can be applied. Also, classification with "low polarity," "moderate polarity," or "high polarity" is intended to explain the embodiments of the present invention. Thus, the scope of the present invention is not limited by the classification.

An object of the present invention is to provide an adsorbent that enables adsorption and solid phase extraction of solutes (including high-polarity solute molecules) having a broad chromatographic polarity range, with high efficiency and good selectivity. Specifically, the object of the present invention is to develop an adsorbent capable of easily adsorbing, holding, and recovering all solutes such as high-polarity solute molecules (e.g., theophylline (logP = -0.02)), moderate-polarity solute molecules (e.g., phenobarbital (logP = 1.7), phenytoin (logP = 2.5), carbamazepine (logP = 2.5), and diazepam (logP = 2.9)), low-polarity solute molecules (e.g., everolimus (logP = 3.4), rapamycin (logP = 3.5), and dibutyl phthalate (logP = 4.7)) by solid phase extraction.

As also described in Background Art, commercially available polymer adsorbents of prior art differ in solute types that can be held by the adsorbents depending on composition and surface structure. In particular, when a solute with polarity, which cannot be easily adsorbed to such a polymer adsorbent of prior art, is subjected to adsorption, the resulting recovery efficiency obtained by solid phase extraction can be decreased and the solute cannot be recovered according to circumstances. Also, solute outflow takes place during the washing process, so that washing conditions and the number of washings are limited and a decrease in the purity of a recovered solute is an issue of concern.

However, through employment of the following constitutions, the polymer adsorbent of the present invention can overcome the problems of such commercially available adsorbents. The adsorbent in the present invention is characterized by the following constitutions.

(1) A heterocyclic-ring-containing copolymer adsorbent, which comprises a copolymer containing:

at least one type of multifunctional heterocyclic-ring-containing monomer that has a heterocyclic ring containing at least two heteroatoms in the ring system, and two or more polymerizable functional groups; and
at least one type of monomer that has one or more polymerizable functional groups copolymerizable with the multifunctional heterocyclic-ring-containing monomer, wherein
the heterocyclic ring constitutes the main chain structure.

(2) The heterocyclic-ring-containing copolymer adsorbent according to (1) above, wherein the polymerizable functional group is a functional group containing unsaturated hydrocarbon.
(3) The heterocyclic-ring-containing copolymer adsorbent according to (1) or (2) above, wherein the heteroatoms contained in the multifunctional heterocyclic-ring-containing monomer are of one or more types selected from the group consisting of nitrogen, oxygen, phosphorus, sulfur, selenium, and tellurium.
(4) The heterocyclic-ring-containing copolymer adsorbent according to any one of (1) to (3) above, wherein the heterocyclic ring contained in the multifunctional heterocyclic-ring-containing monomer is a 5-membered ring or a 6-membered ring.
(5) The heterocyclic-ring-containing copolymer adsorbent according to (4) above, wherein the heterocyclic ring contained in the multifunctional heterocyclic-ring-containing monomer is a diazole ring, a triazole ring, a tetrazole ring, a diazine ring, a triazine ring, or a tetrazine ring.
(6) The heterocyclic-ring-containing copolymer adsorbent according to (4) or (5) above, wherein the multifunctional heterocyclic-ring-containing monomer is one or more types selected from the group consisting of triallyl cyanurate or a derivative thereof, triallyl isocyanurate or a derivative thereof, and a melamine derivative.
(7) The heterocyclic-ring-containing copolymer adsorbent according to any one of (4) to (6) above, wherein the multifunctional heterocyclic-ring-containing monomer is one or more types selected from the group consisting of triallyl isocyanurate, diallyl isocyanurate, triallyl cyanurate, and 1,3,5-triacryloylhexahydro-1,3,5-triazine.
(8) The heterocyclic-ring-containing copolymer adsorbent according to any one of (1) to (7) above, wherein the monomer having one or more polymerizable functional groups is a hydrophobic monomer.
(9) The heterocyclic-ring-containing copolymer adsorbent according to any one of (1) to (8) above, wherein the monomer having one or more polymerizable functional groups is one or more types selected from the group consisting of allyl glycidyl ether, styrene, divinylbenzene, methyl methacrylate, methyl acrylate, vinyl acetate, and bisvinylphenylethane.
(10) The heterocyclic-ring-containing copolymer adsorbent according to any one of (1) to (9) above, wherein the copolymer is a random copolymer, an alternating copolymer, or a block copolymer.
(11) The heterocyclic-ring-containing copolymer adsorbent according to any one of (1) to (10) above, wherein the copolymerization ratio of the multifunctional heterocyclic-ring-containing monomer ranges from 0.5 mol% to 35 mol%.
(12) The heterocyclic-ring-containing copolymer adsorbent according to any one of (1) to (11) above, which is a copolymer particle prepared by suspension polymerization, emulsion polymerization, emulsion polymerization, a spray-drying method, grinding, or crushing.
(13) The heterocyclic-ring-containing copolymer adsorbent according to (12) above, which is a massive copolymer particle.
(14) The heterocyclic-ring-containing copolymer adsorbent according to (12) above, which is a spherical copolymer particle.
(15) The heterocyclic-ring-containing copolymer adsorbent according to any one of (12) to (14) above, which is a porous copolymer particle through which water and an organic solvent can pass.
(16) The heterocyclic-ring-containing copolymer adsorbent according to any one of (12) to (15) above, wherein the 50% average particle size of the copolymer particle ranges from 0.5 $\mu$m to 100 $\mu$m.
(17) The heterocyclic-ring-containing copolymer adsorbent according to any one of (12) to (15) above, wherein the 50% average particle size of the copolymer particle ranges from 0.5 $\mu$m to 80 $\mu$m and the 80% average particle size of the same ranges from 0.5 $\mu$m to 100 $\mu$m.
(18) The heterocyclic-ring-containing copolymer adsorbent according to any one of (1) to (11) above, which comprises a monolith-shaped porous polymer structure prepared by bulk polymerization or solution polymerization.
(19) The heterocyclic-ring-containing copolymer adsorbent according to any one of (1) to (11) above, comprising a porous polymer membrane structure prepared by bulk polymerization, solution polymerization, or solid phase polymerization.

As a result of intensive studies to design an adsorbent that can be used for isolation of solutes having a broad chromatographic polarity range, we have focused on the molecular structure of the adsorbent and thus discovered that an adsorbent capable of satisfying the performance of interest can be obtained by combining multifunctional monomers having a specific heterocyclic ring structure with polarity higher than conventional adsorbents so as to prepare a heterocyclic-ring-containing copolymer. Specifically, through introduction of the multifunctional heterocyclic-ring-containing monomer, high-polarity sites can be topically formed in the adsorbent, and thus an adsorbent with a low polarity-high polarity structure having a contrast between low-polarity sites and high-polarity sites can be obtained. Also, through preparation of a multifunctional heterocyclic-ring-containing monomer having two or more polymerizable functional groups, the heterocyclic ring is incorporated into the main chain of the copolymer, the effects of steric hindrance upon solute adsorption is suppressed, and adsorption due to hydrophilic interaction with the hydrophilic part of the solute takes place more easily.

Through preparation of such an adsorbent having the structure, hydrophilic interaction due to a specific heterocyclic ring structure and hydrophobic interaction due to a low-polarity structure take place independently, firm adsorption is formed between the solute and the adsorbent, and thus the solid phase extraction efficiency of moderate-polarity molecules and high-polarity solute molecules can be significantly improved. Furthermore, because of the high polarity of the heterocyclic ring structure exhibiting hydrophilicity, the adsorbent exhibits sufficient ability to adsorb solutes while maintaining wettability with water or a polar organic solvent compared with copolymers such as conventional adsorbents even under conditions where, regarding the copolymerization ratio, a high-polarity monomer accounts for a low percentage in the copolymer. Furthermore, techniques employed in the present invention differ from conventional techniques such as hydrophilic surface treatment. Hence, the hydrophobic structure of the adsorbent is maintained intact and can exhibit performance excellent in adsorption with low-polarity solute molecules. As described above, through application of a heterocyclic-ring-containing copolymer having a high polarity-low polarity structure with a contrast between low-polarity sites and high-polarity sites, an adsorbent that is compatible with various solutes can be obtained.

An example of a heterocyclic-ring-containing copolymer appropriate for the present invention is a copolymer of: a multifunctional heterocyclic-ring-containing monomer having a heterocyclic ring that contains at least two heteroatoms in the ring system and having two or more polymerizable functional groups; and a monomer containing a polymerizable functional group that is copolymerizable with the multifunctional heterocyclic-ring-containing monomer. The heterocyclic ring is incorporated into the main chain structure through the use of such multifunctional monomers, so that plane adsorption sites with low steric hindrance can be formed. As an example of such a polymerizable functional group, an unsaturated hydrocarbon group, or the like, the copolymerization ratio of which can be easily controlled by radical copolymerization or the like, is more desired.

Examples of heteroatoms to be contained in the ring system are desirably of one or more types selected from the group consisting of nitrogen, oxygen, phosphorus, sulfur, selenium, and tellurium, and are more desirably nitrogen, oxygen, and sulfur. These heteroatoms are main group elements having electronegativity higher than that of carbon and are atoms capable of inducing hydrophilic interaction with the hydrophilic part of a solute via other hydrophilic structures, hydrogen bonds, or the like. In particular, the possession of two or more heteroatoms increases the polarity of the ring system. Furthermore, adsorption and holding of a solute(s) achieved by a plurality of hydrophilic structures in a concerted manner enable firmer and more stable adsorption and holding of the solute. Such a heterocyclic ring containing at least two heteroatoms in the ring system is not particularly limited, as long as it satisfies conditions. In view of the polarity of a ring system, the likelihood of adsorption and holding of a solute(s) achieved by a plurality of hydrophilic structures in a concerted manner, a 5-membered heterocyclic ring or a 6-membered heterocyclic ring, such as an azole ring, a triazole ring, a tetrazole ring, a diazine ring, a triazine ring, a tetrazine ring, and the like are desired. A more desirable example is a 6-membered heterocyclic ring. Specific examples of the heterocyclic ring structure include an imidazole ring, an imidazoline ring, an imidazolidine ring, a pyrazole ring, a pyrazoline ring, a pyrazolidine ring, an oxazole ring, an oxazoline ring, an oxazolidine ring, an isoxazole ring, an isoxazoline ring, an isoxazolidine ring, a thiazole ring, a thiazoline ring, a thiazolidine ring, an isothiazole ring, an isothiazoline ring, an isothiazolidine ring, a tellurazole ring, a selenazole ring, a furazan ring, a sydnone ring, a urazole ring, a guanazole ring, a pyrazine ring, a piperazine ring, a pyrimidine ring, a pyridazine ring, a morpholine ring, a selenomorpholine ring, a thiomorpholine ring, a triazine ring, a quinazoline ring, a phthalazine ring, a pteridine ring, a benzodiazepine ring, a benzimidazole ring, a purine ring, a phenoxazine ring, and a phenothiazine ring. Derivatives of these rings containing functional groups may also be used herein. More preferable examples thereof include derivatives of heterocyclic rings containing heteroatoms with high electronegativity such as a carbonyl group. These heteroatoms are contained, so that the polarity and hydrophilicity of the heterocyclic ring are increased, and interaction with a hydrophilic structure is even more enhanced. The heterocyclic ring in the present invention can be appropriately modified according to a solute to be subjected to adsorption. Desired examples of a multifunctional heterocyclic-ring-containing monomer to be used in the present invention include triallyl isocyanurate, diallyl isocyanurate, triallyl cyanurate, and 1,3,5-triacryloylhexahydro-1,3,5-triazine.

A monomer containing a polymerizable functional group copolymerizable with the multifunctional heterocyclic-ring-containing monomer in the present invention is not particularly limited, as long as it is a monomer copolymerizable with the above multifunctional heterocyclic-ring-containing monomer. The structure thereof can be appropriately varied according to the structure of a polymerization site of a multifunctional heterocyclic-ring-containing monomer. A more desired example of a polymerizable functional group is an unsaturated hydrocarbon group the copolymerization ratio of which can be more easily controlled by radical copolymerization or the like. Desired examples of a hydrophobic monomer having unsaturated hydrocarbon to be used in the present invention include aromatic vinyl compounds such as styrene, vinyltoluene, α-methylstyrene, m-divinylbenzene, p-divinylbenzene, 1,2-diisopropenylbenzene, 1,3-diisopropenylbenzene, 1,4-diisopropenylbenzene, 1,3-divinylnaphthalene, 1,8-divinylnaphthalene, 1,4-divinylnaphthalene, 1,5-divinylnaphthalene, 2,3-divinylnaphthalene, 2,7-divinylnaphthalene, 2,6-divinylnaphthalene, 4,4'-divinylbiphenyl, 4,3'-divinylbiphenyl, 4,2'-divinylbiphenyl, 3,2'-divinylbiphenyl, 3,3'-divinylbiphenyl, 2,2'-divinylbiphenyl, 2,4-divinylbiphenyl, 1,2-divinyl-3,4-dimethylbenzene, 1,3-divinyl-4,5,8-tributylnaphthalene, 2,2'-divinyl-4-ethyl-4'-propylbiphenyl, bisvinylphenylethane, 1,2,4-trivinylbenzene, 1,3,5-trivinylbenzene, 1,2,4-triisopropenylbenzene, 1,3,5-triisopropenylbenzene, 1,3,5-trivinylnaphthalene, 3,5,4'-trivinylbiphenyl; unsaturated carboxylic acid esters such as methyl (meth)acrylate, 2-hydroxyethyl methacrylate, t-butyl (meth)acrylate, n-hexyl (meth)acrylate, cyclohexyl (meth)acrylate, 2-ethyl hexyl (meth)acrylate, lauryl (meth)acrylate, stearyl (meth)acrylate, benzyl (meth)acrylate, mono- or di(meth)acrylate of (poly)ethylene glycol, mono- or di-(meth)acrylate of (poly)propylene glycol, mono- or di-(meth)acrylate of 1,4-butanediol, and mono-, di-, or tri-(meth)acrylate of trimethylolpropane; allyl compounds such as allyl glycidyl ether, vinyl acetate, bisvinylphenylethane, diallyl phthalate, diallyl acrylamide, triallyl (iso)cyanurate, and triallyl trimellitate; and (poly)oxyalkylene glycol di(meth)acrylate such as (poly)ethylene glycol di(meth)acrylate, and (poly)propylene glycol di(meth)acrylate. Further examples thereof include monomers containing functional groups include, but are not limited to, acrylic acid, methacrylic acid, itaconic acid, fumaric acid, glycidyl methacrylate, vinylpyridine, diethylaminoethyl acrylate, N-methylmethacrylamide, and acrylonitrile. Here, the monomer group desirably has a structure with high affinity for a hydrophobic structure such as a hydrocarbon group. Hence, a more desired example thereof is a hydrophobic monomer group having a hydrophobic structure such as a hydrocarbon group, a hydrocarbon ring, and aromatic hydrocarbon. Through application of the hydrophobic monomer group, hydrophobic interaction with a hydrophobic structure such as a hydrocarbon group takes place, so that the performance of adsorbing a solute is enhanced. These hydrophobic monomers may be used independently or two or more types thereof can be used in combination.

The above monomer containing a functional group copolymerizable with the multifunctional heterocyclic-ring-containing monomer is more desirably a multifunctional monomer having a plurality of copolymerizable functional groups particularly in view of suppression of the steric hindrance of a copolymer. Desired examples of the monomer include, but are not limited to, multifunctional aromatic monomers such as m-divinylbenzene, p-divinylbenzene, 1,2-diisopropenylbenzene, 1,3-diisopropenylbenzene, 1,4-diisopropenylbenzene, 1,3-divinylnaphthalene, 1,8-divinylnaphthalene, 1,4-divinylnaphthalene, 1,5-divinylnaphthalene, 2,3-divinylnaphthalene, 2,7-divinylnaphthalene, 2,6-divinylnaphthalene, 4,4'-divinylbiphenyl, 4,3'-divinylbiphenyl, 4,2'-divinylbiphenyl, 3,2'-divinylbiphenyl, 3,3'-divinylbiphenyl, 2,2'-divinylbiphenyl, 2,4-divinylbiphenyl, 1,2-divinyl-3,4-dimethylbenzene, 1,3-divinyl-4,5,8-tributylnaphthalene, 2,2'-divinyl-4-ethyl-4'-propylbiphenyl, bisvinylphenylethane, 1,2,4-trivinylbenzene, 1,3,5-trivinylbenzene, 1,2,4-triisopropenylbenzene, 1,3,5-triisopropenylbenzene, 1,3,5-trivinylnaphthalene, and 3,5,4'-trivinylbiphenyl. Steric hindrance of the adsorbent surface structure can be reduced by application of the monomer, making it possible to provide an adsorbent more appropriate for solid phase adsorption. Also, a firm crosslinking network structure is formed within the resin, and thus an adsorbent having good mechanical strength and thermal stability can be obtained. Also, swelling due to a solvent or the like can be suppressed, and thus deformation, denaturation, softening, dissolution and the like of the adsorbent can be suppressed.

The above heterocyclic-ring-containing copolymer can be prepared by known copolymerization. Examples thereof include random polymerization, alternating copolymerization, block copolymerization, and graft polymerization. Particularly preferable examples thereof among the above polymerization methods are random polymerization and alternating copolymerization, by which a structure having a contrast between hydrophobic sites and hydrophilic sites can be formed.

The above heterocyclic-ring-containing copolymer can be prepared by known copolymerization. Examples thereof include suspension polymerization, emulsion polymerization, emulsion polymerization, a spray-drying method, grinding, crushing, bulk polymerization, and solution polymerization. Of the above polymerization methods, more preferable methods are those by which uniform spherical particles can be obtained. Suspension polymerization and emulsion polymerization are more preferably employed. Also, the process for polymerization and other treatment methods may include ring-opening reaction, dehydration and condensation, intermolecular bonding, and other reaction steps with other intramolecular structural changes, and these are not particularly limited in the present invention.

A preferable example of a polymerization method is a method using suspension polymerization. First, an aqueous solution prepared by uniformly dissolving a surfactant is mixed with a monomer solution (a monomer, a polymerization initiator, or a solvent immiscible with water), and then heating and agitation are performed under a nitrogen atmosphere, so that polymerization proceeds. At this time, the concentration of an aqueous surfactant solution is not particularly limited, but is limited to a saturation concentration at a polymerization temperature and preferably ranges from 0.5 wt% to 10 wt%. Also preferably a surfactant has an HLB value (Hydrophile-Lipophile Balance) ranging from 9 to 16 and more preferably ranging from 10 to 14. Such a surfactant is dissolved in water and acts as an emulsifier for an oil-in-water (oil droplets in aqueous phase) (O/W) emulsion. Values can be adjusted in accordance with the viscosity of an aqueous solution and the solubility of a surfactant.

Furthermore, the mixing ratio of an aqueous solution of a surfactant to a monomer solution is also not particularly limited, but is preferably adjusted appropriately in view of various conditions including the reactivity of a monomer, polymerization initiator types, reaction temperatures, agitating speed, the shape of the polymerization container, polymerization scale, and the like. These conditions can also be employed in the present invention without particular limitation. As a preferable example of a polymerization initiator, a general organic reaction reagent is used. An example thereof is preferably a radical reaction initiator and is more preferably a radical reaction initiator such as azobisisobutyronitrile, which is slightly soluble in water. Polymerization proceeds only in oil droplets because of the use of the radical reaction initiator, so that a reaction with a monomer dissolved in aqueous phase can be suppressed and spherical resin particles can be obtained. The reaction temperature is appropriately adjusted depending on the half-life of a radical initiator, monomer types, and the like. As a preferable example, the temperature ranges from 60°C to 90°C. Also, a preferable example of agitating speed ranges from 100 rpm to 600 rpm. Agitating speed higher than this speed range enables microparticulation of copolymer particles, but can cause breakage to generate broken particles depending on conditions.

Furthermore, when the amount of a heterocyclic ring structure to be introduced is increased, adsorption of polar impurities such as phospholipid tends to occur more frequently as the number of hydrophilic adsorption sites increases. Also, adsorption strength of a solute can be too high depending on solute type, so as to inhibit desorption upon the elution of the adsorbed solute. This further results in the concern that the solute would remain on the adsorbent surface. Therefore, an adsorbent is desirably prepared so that, regarding the copolymerization ratio, a monomer containing a hydrophilic group accounts for a percentage in the copolymer as low as possible, without affecting solid phase extraction performance. In the present invention, a specific heterocyclic-ring main chain backbone with which a solute can be adsorbed with high efficiency is applied, so that excellent adsorption performance can be realized even under low-copolymerization-ratio conditions. Specifically, regarding the copolymerization ratio, a multifunctional heterocyclic-ring-containing monomer desirably accounts for 0.5 mol% to 35 mol%, more desirably accounts for 1 mol% to 30 mol%, and particularly desirably accounts for 2 mol% to 20 mol% in the copolymer.

Furthermore, the 50% average particle size of the copolymer particles preferably ranges from 0.5 $\mu$m to 100 $\mu$m in order to ensure the specific surface area and appropriate filling density for an adsorbent. When the particle size is too great, the effective surface area of the adsorbent is low, solution outflow takes place before adsorption during the solution introduction process, and thus sufficient solid phase extraction performance cannot be exhibited. The 50% average particle size of particles more preferably ranges from 1 $\mu$m to 90 $\mu$m, and even further preferably ranges from 10 $\mu$m to 80 $\mu$m.

In addition, it has been revealed that under solid phase extraction conditions in the present invention, when the proportion of particles with a particle size of 100 $\mu$m or more is increased, such particles have a tendency to be unable to exhibit sufficient solid phase extraction performance. An assumed major reason for this is that in the case of particles with a particle size of 100 $\mu$m or more, only particle surfaces are involved in adsorption at the time of solution introduction, and the solution does not penetrate and pass through the particles. As a result of intensive studies on solid phase extraction conditions, the present inventors have discovered that extraction efficiency can be improved by controlling the particle size distribution of adsorbent particles to lower the content of particles with a particle size of 100 $\mu$m or more. Specifically, the present inventors have discovered desired particle distribution conditions such that the 50% average particle size of particles ranges from 0.5 $\mu$n to 80 $\mu$m and the 80% average particle size ranges from 0.5 $\mu$m to 100 $\mu$m. In the case of particles that satisfy the conditions, the solution penetrates and passes through the particles, the effective surface area of the adsorbent involved in adsorption is increased, and thus more efficient solute adsorption becomes possible. On the other hand, when particle size is too low, pressure loss in the flow path is drastically increased, and thus solid phase extraction efficiency is deteriorated. Accordingly, polymerization conditions are desirably adjusted so that the particle size of particles to be prepared is within a predetermined range, or known classification techniques (e.g., classification sieving, wet classification, and dry classification) are desirably applied. Polymerization conditions and classification methods are not particularly limited in the present invention.

Furthermore, the present invention relates to an adsorbent prepared by using a heterocyclic-ring-containing copolymer, which exhibits solid phase extraction performance even when the adsorbent has a shape other than particles. For example, when the heterocyclic-ring-containing copolymer is a porous bulk polymer prepared by bulk polymerization or solution polymerization, the polymer is thought to exhibit good solid phase extraction performance. An example of the porous bulk polymer is a monolith-shaped porous polymer structure integrated with a column, and has low pressure loss upon fluid penetration. Although such a structure requires dimensional control in accordance with column shape, continuity of holes is high, and the sizes are uniform. Hence, there is no need to consider gaps and the like upon filling with particles. Therefore, the adsorbent can be more easily handled compared with adsorbents in the form of particles. Furthermore, a film-shaped porous polymer membrane structure is formed from the heterocyclic-ring-containing copolymer by bulk polymerization, solution polymerization, or solid phase polymerization. For example, the resultant can be applied as a carrier for thin-layer chromatography or the like, a solid phase adsorption film for simple tests, or the like. The heterocyclic-ring-containing copolymer of the present invention can exhibit adsorption performance in accordance with the above various copolymer shapes and morphologies.

When the heterocyclic-ring-containing copolymer adsorbent of the present invention is prepared, it is more preferable not only to confirm the incorporation of a high-polarity monomer and a high-polarity structure into the adsorbent, but also to determine the copolymerization ratio and the entire structure of the adsorbent. In this respect, various measurement techniques can be employed and they are not limited. For example, for evaluation of the copolymer adsorbent of the present invention, Fourier-transform infrared spectroscopy (FTIR), a solid phase 13C nuclear magnetic resonance method, elementary analysis (based on a combustion method), or the like can be employed. Such evaluation is performed by known procedures, by which structures can be identified and analyzed.

Furthermore, the solid phase extraction method in the present invention is characterized by the following configurations. (20) A solid phase extraction method, comprising a step of: bringing a solution containing as a solute one or more types selected from the group consisting of a non-polar solute molecule, a low-polarity solute molecule, a moderate-polarity solute molecule, and a high-polarity solute molecule into contact with the heterocyclic-ring-containing copolymer adsorbent of any one of (1) to (19) above, so as to adsorb and hold one or more types of solute contained in the solution.

(21) The solid phase extraction method according to (20) above, wherein the solution contains a polar solvent.

(22) The solid phase extraction method according to (21) above, wherein the polar solvent is water or a mixed solvent of one or more types of polar organic solvent and water.

(23) The solid phase extraction method according to (21) above, wherein the polar solvent contains one or more types selected from the group consisting of methanol, ethanol, propanol, 2-propanol, acetone, methyl ethyl ketone, methyl isobutyl ketone, methyl acetate, ethyl acetate, acetonitrile, tetrahydrofuran, 1,4-dioxane, N,N-dimethylformamide, and dimethylsulfoxide.

(24) The solid phase extraction method according to any one of (20) to (23) above, wherein the solution to be brought into contact with the heterocyclic-ring-containing copolymer adsorbent contains blood plasma, serum, blood, urine, a spinal fluid, a synovial fluid, a biological tissue extract, an aqueous solution, ground water, surface water, a soil extract, cosmetics, a food substance, or an extract of a food substance.

(25) The solid phase extraction method according to any one of (20) to (24) above, wherein the solute to be subjected to solid phase extraction, is a chemical, a medicine, an antibacterial agent, an anticonvulsant, an immunosuppressive agent, a drug, an insecticide, a herbicide, a poison, a biomolecule, a contaminant, a metabolic medicine, or a metabolite thereof, or a degraded product thereof.

(26) The solid phase extraction method according to (25) above, wherein the biomolecule is a protein, a vitamin, a hormone, a polypeptide, a polynucleotide, a lipid, or a carbohydrate.

(27) A solid phase extraction cartridge, which is provided with the heterocyclic-ring-containing copolymer adsorbent of any one of (1) to (19) above in a container having an open end.

(28) A solid phase extraction column, which is provided with the heterocyclic-ring-containing copolymer adsorbent of any one of (1) to (19) above in a container having an open end.

(29) A liquid chromatography mass spectroscopy (LC-MS) system, wherein the solid phase extraction cartridge of (27) above is used for pretreatment of a specimen.

(30) A liquid chromatography mass spectroscopy (LC-MS) system, wherein the solid phase extraction column of (28) above is used for pretreatment of a specimen.

(31) A flow injection analysis mass spectroscopy (FIA-MS) system, wherein the solid phase extraction cartridge of (27) above is used for pretreatment of a specimen.

(32) The flow injection analysis mass spectroscopy (FIA-MS) system, wherein the solid phase extraction column of (28) above is used for pretreatment of a specimen.

The solid phase extraction method wherein the heterocyclic-ring-containing copolymer adsorbent of the present invention is used is appropriate as a means for isolating a subject substance from a sample for particularly analyzing components in a complicated composition (e.g., trace analysis of water quality, soil, or the like, quantitative analysis of microadditives, poisons, agricultural chemicals, or the like, evaluation of environmental contamination, pharmaceutical development, food nutritional evaluation, functional food nutritional evaluation, drinking water purity evaluation, and TDM analysis). An example of a specimen therefor is a biomatrix (e.g., whole blood, blood plasma, saliva, or urine) containing a subject substance such as a medicine. Examples of a specimen also include beverage water and an environmental sample such as polluted water. Preferable examples of a solution to be used as a sample in the present invention include solutions such as blood plasma, serum, blood, urine, a spinal fluid, a synovial fluid, a biological tissue extract, an aqueous solution, ground water, surface water, a soil extract, cosmetics, a food substance, and an extract of a food substance. Furthermore, preferable examples of the solute of the present invention include a medicine, an antibacterial agent, an anticonvulsant, an immunosuppressive agent, a drug, an insecticide, a herbicide, a poison, a biomolecule, a contaminant, a metabolic medicine, and a degraded product of a metabolite. Further preferred examples of a biomolecule among these examples include a protein, a vitamin, a hormone, a polypeptide, a polynucleotide, a lipid, and a carbohydrate.

A more preferable solid phase extraction method for isolating a solute as a measurement subject from a solution is a method comprising a step of bringing a solution containing the aforementioned heterocyclic-ring-containing copolymer adsorbent and any one of a low-polarity solute molecule, a moderate-polarity solute molecule, and a high-polarity solute molecule as a solute into contact with the heterocyclic-ring-containing copolymer adsorbent, so as to adsorb and hold the solute. In this embodiment, the isolation method comprises four general steps of: conditioning an adsorbent using a solvent that enhances surface properties; introducing a sample solution; washing the entire adsorbent with a washing solvent (water or an organic solvent); and causing the elution of the solute with an elution solvent (organic solvent). A solvent, a washing solvent, and an elution solvent that can be used for the solution are not particularly limited, but are more preferably polar solvents in order to maintain hydrophilicity of the surface. Further preferable examples thereof include water or a hydrous solvent such as a mixed solvent of a polar organic solvent and water, and polar organic solvents such as methanol, ethanol, propanol, 2-propanol, acetone, methyl ethyl ketone, methyl isobutyl ketone, methyl acetate, ethyl acetate, acetonitrile, tetrahydrofuran, 1,4-dioxane, N,N-dimethylformamide, and dimethylsulfoxide. These solvents may be used independently or in combination.

In the conditioning process, an adsorbent is washed with a polar organic solvent and then washed with water, so that the adsorbent surface can be adjusted. In a preferable example of conditioning, a support such as a column is filled with an adsorbent, the adsorbent is treated with methanol and then treated with water (e.g., 1 ml each). The use of methanol causes the appropriate swelling of the adsorbent, increasing the effective surface area. Treatment with water removes excessive methanol and at the same time hydrates the surface. Subsequently, an excessive solvent can be removed, and thus the adsorbent can be maintained in a completely hydrated state.

When a solution of a substance to be subjected to solid phase extraction is a low-viscosity solution such as a medicine solution, serum or whole blood components, from which a protein component and the like have been removed, such a solution can be introduced into an adsorbent without specific treatment. In the case of a solution with high viscosity such as blood plasma, the solution is desirably introduced as a diluted aqueous solution (at least 1 : 1 dilution). Particularly, blood plasma has high viscosity, so that it can inhibit the adsorption of an adsorbent to a solute. Furthermore, a protein among blood plasma components can be denatured by an organic solvent, and then precipitated to pollute the adsorbent surface. Hence, dilution with an organic solvent is desirably avoided. Also, it is desired to adjust the flow rate of a solution to a level appropriate for adsorbing and holding a solute.

In an embodiment of the present invention, a solute (e.g., medicine) can be present at the level of 1 ng to 10 μg per mL. Furthermore, the amount of a sample that can be applied to a solid phase extraction apparatus depends on the volume of each apparatus. In the case of a solid phase extraction plate, approximately 1 μL to 100 μL of a measurement sample can be applied. In the case of a solid phase extraction column, approximately 100 μL to 1 mL of a measurement sample can be applied. Examples of using such a solid phase extraction plate are as described below.

Subsequently, an adsorbent to which a solute has been adsorbed can be washed with water and an organic washing solvent. More preferably, the adsorbent is washed with water. An arbitrary amount of a solvent can be used for washing and preferably approximately 50 μL to 500 μL of a solvent is used. Through washing with water, salts and impurities such as water soluble substrates and protein substances other than measurement subjects, which can exist in a sample are removed. Also, when water-insoluble substrate constituents or organic impurities adhering to the surface of an adsorbent are contained in a sample, they can be removed using an organic washing solvent. At this time, washing conditions are preferably adjusted so as not to disrupt the adsorption of a solute to the surface of an adsorbent. When many known silica adsorbents and polymer adsorbents are used for separation, many measurement subject solutes can be removed from the adsorbents in the washing step.

Next, a solute is eluted from the surface of an adsorbent using an elution solvent. Elution takes place when an elution solvent reaches and becomes contact with the adsorption interface of the solute and the adsorbent, and can be performed by applying a specific amount of an elution solvent. A representative elution solvent is selected from a polar organic solvent and an aqueous solution. At least about 80 wt% to 90 wt% of an organic solvent is desirably contained. Examples of a representative organic solvent include, but are not limited to, alcohol solutions such as methanol, ethanol, and 2-propanol, and acetonitrile. A trailing ion such as trifluoroacetic acid can also be used as an elution solvent component, and it is known to be useful for efficiently disrupting polar interaction between a polar medicine and an adsorbent. In the present invention, elution is preferably performed using a methanol solvent. An arbitrary amount of a solvent can be used for elution. Preferably, approximately 50 μL to 200 μL of a solvent is used. With the use of such a solvent, 90% to almost the total amount of all solutes having wide-ranging polarities that have been adsorbed to and held on the adsorbent can be recovered.

Furthermore, pretreatment of a sample containing impurities can be performed by a method that involves solid phase extraction using the heterocyclic-ring-containing copolymer adsorbent of the present invention in combination. The pretreatment process with high efficiency and high selectivity is performed, so that an elution solution resulting from solid phase extraction is collected using an analysis technique such as mass spectroscopy (MS), liquid chromatography (LC), gas chromatography (GC) or a combination thereof, and thus a solute adsorbed to and held by the adsorbent can be identified. Also, even when a predetermined solute is present in a trace amount (< 1 ng) in a measurement solution, it can be analyzed by evaporating the elution solution, re-dissolving the resultant, and then introducing the resultant into the mobile phase of LC or LC/MS. In this microanalysis, suppressing the solute loss due to the pretreatment process to as low a level as possible is of utmost importance. The solute loss before or after pretreatment accounts for preferably 20% or less, more preferably 10% or less, and further preferably 5% or less of the total amount of the solute in the art, although it differs depending on the sensitivity and the content of a detection subject.

A strong point of the heterocyclic-ring-containing copolymer adsorbent and the solid phase extraction method of the present invention is that an eluted solution can be directly applied to an apparatus for identification of a solute. This was not possible to achieve to date with adsorbents of prior art, but now it can be achieved as follows. Specifically, the heterocyclic-ring-containing copolymer with a low polarity-high polarity structure (the structure having a contrast between low-polarity sites and high-polarity sites) is applied, so that an adsorbent compatible with various solutes can be obtained. According to prior art, the adsorption and holding of adsorbed wide-ranging solutes and the separation and the recovery of such solutes by solid phase extraction have been difficult because of ion suppression effects of adsorbents in MS analysis and polarity dependence of a solute. Unnecessary components are contained in an elution solution because of ion suppression effects, making identification of a solute significantly difficult. Also, measurement sensitivity is lowered due to a decrease in recovered amount, so that sufficient MS analysis cannot be conducted. On the other hand, with the adsorbent of the present invention, a solid phase extraction apparatus is used for pretreatment and thus can be easily used in combination with an LC-MS system, a FIA-MS system, a HPLC system, and other analysis systems, for example.

Next, an amphiphatic copolymer that is a second embodiment of the present invention and a solid phase extraction method using the same are as described below.

SP values (solubility parameters: $\delta$) of monomers composing the amphiphatic copolymer of the present invention and the copolymer are as defined by the following formula on the basis of the Hildebrand-Scatchard solution theory.

$$\delta = (\Delta Ev/V)^{1/2}$$

Here, $\Delta Ev$ denotes evaporation energy (cal/mol), V denotes molecular volume (cm$^3$/mol), and $\Delta Ev/V$ denotes cohesive energy density (cal/cm$^3$). The higher the SP value, the higher the polarity of the molecule. Some methods for determining such SP values have been reported. In the present invention, SP values were mainly determined from molecular structures of monomers and actual values of copolymerization ratio by calculation using the method reported by Fedors et al., (F. Fedors, A Method for Estimating Both the Solubility Parameters and Molar Volumes of Liquids, Polymer Engineering and Science, Vol. 14, No. 2 (1974)).

The term "high-polarity monomer" in the present invention refers to a monomer that satisfies at least one of the following conditions: (1) a monomer having an SP value that is higher by 2.2 or more than the SP value of 10.0 or less of a low-polarity monomer to be applied to a copolymer; (2) a monomer having an SP value of 11.5 or more; (3) a monomer having a plural number of high-polarity molecular structures of one or more types selected from an ester bond, an urethane bond, an amide bond, a thioester bond, a tetrahydrofuran ring, a furan ring, a carboxyl group, an amino group, an alkylamino group, and a dialkylamino group, wherein the number of carbon atoms to be contained between two structures each of the plural number of high-polarity molecular structures is 4 or less; (4) a monomer having a high-polarity molecular structure selected from an isocyanuric acid ester backbone, a cyanuric acid ester backbone, a hexahydrotriazine backbone, a maleimide backbone, and an imidazole backbone; and (5) a monomer having one or more types of high-polarity molecular structure selected from an ether bond, an ester bond, an urethane bond, an amide bond, a thioester bond, a carboxyl group, an amino group, an alkylamino group, a dialkylamino group, and a hetero ring, wherein, regarding the weight ratio, heteroatoms in the monomer account for 30 wt% or more. All members of the monomer group have high-polarity molecular structures and are capable of forming firm hydrophilic interaction with the polar structure of a solute. Furthermore, these monomers can be solvated with a polar solvent, improving wettability. In conventional adsorbent technology, copolymers having hydrophobic-hydrophilic structures have been proposed in order to improve wettability with polar solvents. However, these attempts mainly involves the introduction of low-polarity monomers, unlike high-polarity monomers of the present invention, so that the contribution of hydrophilic interaction to adsorption formation is low. In particular, conventional adsorbents tend to exhibit decreased capacity to recover high-polarity solute molecules via solid phase extraction, and can merely play an auxiliary role in hydrophilic-interaction-mediated adsorption. In the present invention, the present inventors have focused on the following three items as indices of a high-polarity structure: (1) SP value; (2) specific molecular structure; and (3) intramolecular heteroatom content, so that they have finally defined a high-polarity monomer. In particular, the "SP value" item can be said as the optimum evaluation item for providing an absolute index for polarity.

The term "low-polarity monomer" in the present invention refers to a monomer having an SP value of 10.0 or less, which is not included in the above high-polarity monomers. The low-polarity monomer group has high affinity for a hydrophobic structure such as a hydrocarbon group, so as to cause adsorption via hydrophobic interaction. Also, through the formation of a polarity contrast with a high-polarity monomer, the surface of an adsorbent, which exhibits good capacity to adsorb and hold any of high-polarity solute molecules, moderate-polarity solute molecules, and low-polarity solute molecules can be provided.

The term "adsorption" in the present invention refers to, as described above, a state of reversible binding of a solute to an adsorbent through hydrophilic interaction and hydrophobic interaction. The term "hydrophilic interaction" refers to general intermolecular force in which a polar structure is involved, such as mainly hydrogen bonding, dipole-dipole interaction, ion-dipole interaction, dipole-induced dipole interaction, or London dispersion force.

Furthermore, the polarity of a solute in the present invention is defined as follows on the basis of an octanol·water distribution coefficient (logP). The term "high-polarity solute molecule" refers to a molecule having a logP value ranging from -2.0 to 1.5. Similarly, the term "moderate-polarity solute molecule" refers to a molecule having a logP value ranging from 1.5 to 3.0. The term "low-polarity solute molecule" refers to a molecule having a logP value of 3.0 or more.

An object of the present invention is, as described above, to provide an adsorbent that enables adsorption and solid phase extraction with high efficiency and good selectivity, for solutes having a broad chromatographic polarity range including high-polarity solute molecules. Specifically, an object of the present invention is to develop an adsorbent capable of easily adsorbing, holding, and recovering through solid phase extraction all solutes including high-polarity solute molecules (e.g., theophylline (logP = -0.02)), moderate-polarity solute molecules (e.g., phenobarbital (logP = 1.7), phenytoin (logP = 2.5), carbamazepine (logP = 2.5), and diazepam (logP = 2.9)), and low-polarity solute molecules (e.g., everolimus (logP = 3.4), rapamycin (logP = 3.5), and dibutyl phthalate (logP = 4.7)).

As described above, commercially available conventional polymer adsorbents differ in solute types that can be held by the polymer adsorbents depending on composition and surface structure. In particular, when a solute with polarity, which cannot be easily adsorbed to such an adsorbent of prior art, is subjected to adsorption, the recovery efficiency resulting from solid phase extraction can be decreased and the solute cannot be recovered in accordance with circumstances. Also, solute outflow takes place during the washing process, so that washing conditions and the number of washing are limited and a decrease in the purity of a recovered solute is an issue of concern. However, through employment of the above constitutions, the polymer adsorbent of the present invention becomes possible to overcome the conventional problems of such commercially available adsorbents.

As a result of intensive studies on an adsorbent that can be used for isolating solutes having a broad chromatographic polarity range, the present inventors have focused on the molecular structure of an adsorbent and thus have discovered that an adsorbent satisfying the performance of interest can be obtained by preparing an amphiphatic copolymer by combining high-polarity monomers with polarities higher than those of conventional absorbents. Specifically, through introduction of high-polarity monomers, high-polarity sites are topically formed in an adsorbent, so that the adsorbent with a low polarity-high polarity structure having a contrast between low-polarity sites and high-polarity sites can be obtained.

An adsorbent is prepared to have such a contrast structure. Therefore, hydrophilic interaction due to the high-polarity sites of the structure and hydrophobic interaction due to the low-polarity sites of the structure are established independently, a firm adsorption state is formed between the solute and the adsorbent, and thus the efficiency of solid phase extraction of moderate-polarity soluble molecules and high-polarity solute molecules can be significantly improved. Also, because of high polarity of the hydrophilic sites of the structure, the adsorbent can exhibit sufficient ability to adsorb a solute while enduring wettability with water or a polar organic solvent, even under conditions where the copolymerization ratio of a high-polarity monomer is lower than that of conventional copolymers. Furthermore, unlike a technique such as hydrophilic surface treatment, the hydrophobic sites of the adsorbent are maintained intact, and the ability to adsorb low-polarity solute molecules is also good. As described above, an adsorbent compatible with various solutes can be obtained through the use of an amphiphatic copolymer having a low polarity-high polarity structure that has a contrast between low-polarity sites and high-polarity sites.

An example of the amphiphatic copolymer of the present invention is a copolymer containing a monomer unit that is composed of a high-polarity monomer and a monomer unit that is composed of a low-polarity monomer having an SP value of 10.0 or less, wherein a difference in SP value between the two monomers is at least 2.2. Also, another example of the same is a copolymer containing a monomer unit that is composed of a high-polarity monomer having an SP value of 11.5 or more and a monomer unit that is composed of a low-polarity monomer having an SP value of 10.0 or less. All of these examples are used for a method for enhancing ability to recover solutes by solid phase extraction using the polarity difference between a low-polarity monomer and a high-polarity monomer. In particular, a high-polarity monomer having an SP value of 11.5 or more is excellent in wettability and solvation with water and a polar organic solvent, and it has high capacity to adsorb and hold a high-polarity solute molecule. Hence, these high-polarity monomers are appropriate as monomers that constitute the amphiphatic copolymer adsorbent of the present invention. Furthermore, the copolymer is designed to have an SP value of 9.5 or more, so that affinity of a solute for and the wettability with a solvent are further improved. In particular, solid phase extraction performance of the high-polarity solute molecule is even further increased. Preferable examples to be used as such a high-polarity monomer include N-phenyl maleimide (SP value of 12.3), maleic anhydride (SP value of 12.9), fumaric acid (SP value of 13.5), maleic acid (SP value of 13.5), and triallyl isocyanurate (SP value of 13.6).

Another example of the amphiphatic copolymer of the present invention is a copolymer containing:

a monomer unit that is composed of a high-polarity monomer having a plural number of high-polarity molecular structures of one or more types selected from an ester bond, an urethane bond, an amide bond, a thioester bond, a tetrahydrofuran ring, a furan ring, a carboxyl group, an amino group, an alkylamino group, and a dialkylamino group, wherein the number of carbon atoms contained between two high-polarity molecular structures each among the plurality of high-polarity molecular structures is 4 or less; and
a monomer unit that is composed of a low-polarity monomer having an SP value of 10.0 or less.

Here, the carbon atoms among the high-polarity molecular structures do not include the high-polarity molecular structures' own carbon atoms (e.g., C in an ester bond COO). Through the use of a high-polarity monomer in which a high-polarity molecular structure(s) is localized, even when all the monomer molecules have low SP values in the structure, a low polarity-high polarity structure(s) having a contrast between high polarity and low polarity (that is, a feature of the present invention) is established, so that an adsorbent having good ability to adsorb a solute can be obtained. Of the above structures, a monomer having particularly an ester bond, a urethane bond, and an amide bond has high affinity of a solute for a solvent and high wettability of a solute with a solvent, and the ability to adsorb high-polarity solute molecules is high. In addition, when high-polarity molecular structures are located at too great a distance from each other, it is assumed that: properties peculiar to the high-polarity molecular structures (e.g., intermolecular association or dipole interaction between adjacent atoms, formation of a conjugated structure, mesomeric effects, and intramolecular association) become insignificant; polarities in the copolymer are averaged; and the low polarity-high polarity structure having a contrast between low-polarity sites and high-polarity sites, which is a feature of present invention, also becomes insignificant. Furthermore, this also causes the effects such as a decrease in the capacity to adsorb and hold polar molecules, and a decrease in hydrophobic interaction due to non-localization of polar molecules. Thus, solid phase extraction performance is decreased. Preferable examples of such a high-polarity monomer to be used herein include methylenebis acrylamide, tetrahydrofurfuryl acrylate, tetrahydrofurfuryl methacrylate, diallyl phthalate, divinyl isophthalate, diallyl isophthalate, divinyl terephthalate, diallyl terephthalate, furfuryl acrylate, and furfuryl methacrylate.

Another example of the amphiphatic copolymer of the present invention is a copolymer containing:

one or more types of monomer unit that is composed of a high-polarity monomer having a high-polarity molecular structure selected from an isocyanuric acid ester backbone, a cyanuric acid ester backbone, a hexahydrotriazine backbone, a maleimide backbone, and an imidazole backbone that are high-polarity cyclic heteroatom-containing backbones;
one or more types of monomer unit that is composed of a low-polarity monomer having an SP value of 10.0 or less. The cyclic heteroatom-containing backbone is a high-polarity ring structure in which high-polarity molecules are localized. Accordingly, even in the case of a structure(s) in which the SP values of the entire monomer molecules are low, a low polarity-high polarity structure having a contrast between low-polarity sites and high-polarity sites (that is, a feature of the present invention) is formed, and thus an adsorbent having good ability to adsorb a solute can be obtained. Preferable examples of such a high-polarity monomer to be used herein include N-phenyl maleimide, triallyl isocyanurate, triallyl cyanurate, 1,3,5-triacryloylhexahydro-1,3,5-triazine, N-phenyl maleimide, and 1-vinylimidazole.

Another example of the amphiphatic copolymer of the present invention is a copolymer containing:

a monomer unit that is composed of a high-polarity monomer having one or more types of high-polarity molecular structure selected from an ether bond, an ester bond, a urethane bond, an amide bond, a thioester bond, a carboxyl group, an amino group, an alkylamino group, a dialkylamino group, and a hetero ring, wherein, regarding the weight ratio, heteroatoms in the monomer accounts for 30 wt% or more; and
a monomer unit that is composed of a low-polarity monomer having an SP value of 10.0 or less.

Heteroatoms having high electronegativity are responsible for the polar structure of a high-polarity monomer. In particular, oxygen and nitrogen atoms have high electronegativity so as to tend to form molecules having polarity. Moreover, the higher the number of specific polar structures contained in a monomer molecule, the higher the polarity of the molecule. In particular, a carboxyl group is a functional group exhibiting acidity and having a structure also suitable for adsorption of ionic solute molecules. Preferable examples of such a high-polarity monomer to be used herein include N,N-dimethylacrylamide, maleic acid, fumaric acid, methacrylic acid, and acrylic acid.

In the above amphiphatic copolymer, at least one type of monomer is desirably a multifunctional monomer containing two or more polymerizable unsaturated functional groups. Through the use of such a multifunctional monomer, a crosslinking network structure is formed within the copolymer, and thus an adsorbent having good mechanical strength and thermal stability can be obtained. Also, swelling due to a solvent or the like can be suppressed, and thus deformation, denaturation, softening, dissolution and the like of the adsorbent can be suppressed.

As a low-polarity monomer in the amphiphatic copolymer of the present invention, any low-polarity monomer can be used, as long as it does not fall under the category of the above high-polarity monomer and is a monomer having an SP value of 10 or less. Preferable examples of a low-polarity monomer to be used herein include allyl glycidyl ether (SP value of 8.7), styrene (SP value of 9.2), divinylbenzene (SP value of 9.3), methyl methacrylate (SP value of 9.4), methyl acrylate (SP value of 9.5), vinyl acetate (SP value of 9.5), and bisvinylphenylethane (SP value of 9.9). In particular, divinylbenzene is a multifunctional monomer and is a particularly preferable example of a low-polarity monomer of the adsorbent, since a polymer having good mechanical strength and thermal stability can be obtained therewith.

The amphiphatic copolymer can be obtained by known copolymerization. Examples thereof include random polymerization, alternating copolymerization, block copolymerization, and graft polymerization. Among these examples, random polymerization and alternating copolymerization are particularly preferable, since a low polarity-high polarity structure having a contrast between low-polarity sites and high-polarity sites can be formed.

The amphiphatic copolymer can be produced using a known polymerization method. Examples thereof include suspension polymerization, emulsion polymerization, emulsion polymerization, a spray-drying method, grinding, and crushing. Among these polymerization methods, methods by which massive particles or uniform spherical particles can be obtained are preferred. From this view point, the use of suspension polymerization and emulsion polymerization is particularly preferable. Also, the process for polymerization and other treatment methods may include ring-opening reaction, dehydration and condensation, intermolecular bonding, and other steps with intramolecular structural changes, and these are not particularly limited in the present invention.

A preferable example of a polymerization method is a method using suspension polymerization. First, an aqueous solution prepared by uniformly dissolving a surfactant is mixed with a monomer solution (containing a monomer, a polymerization initiator, and a solvent immiscible with water), and then heating and agitation are performed under a nitrogen atmosphere, so that polymerization proceeds.
At this time, the concentration of a surfactant in an aqueous solution is not particularly limited, but is preferably limited to a saturation concentration at a polymerization temperature and preferably ranges from 0.5 wt% to 10 wt%. Also preferably a surfactant has an HLB value (Hydrophile-Lipophile Balance) ranging from 9 to 16 and more preferably ranging from 10 to 14. Such a surfactant is dissolved in water and acts as an emulsifier for an oil-in-water (O/W) emulsion. Values can be adjusted in accordance with the viscosity of an aqueous solution and the solubility of a surfactant.

Furthermore, the mixing ratio of a surfactant in an aqueous solution to a monomer solution is also not particularly limited, but is preferably adjusted appropriately in view of various conditions including the reactivity of a monomer, polymerization initiator types, reaction temperatures, agitating speed, the shape of the polymerization container, polymerization scale, and the like. Furthermore, for the purpose of stabilizing emulsion dispersion, achieving a higher yield of resin particles, and accelerating a reaction, for example, suspension polymerization may be performed by appropriately adding an additive to an aqueous solution and a monomer solution. Examples of a water-soluble additive include electrolytes comprising ionic crystal such as salts, nonelectrolytes such as sugars, and water soluble resins such as polyvinyl alcohol. An example of an additive for a monomer solution is higher alcohol slightly soluble in water. These conditions can be employed in the present invention without particular limitation.

As a preferable example of a polymerization initiator, a general organic reaction reagent is used. Preferably a radical polymerization initiator, and more preferably a radical polymerization initiator such as azobisisobutyronitrile, which is slightly soluble in water, are used. Polymerization proceeds only in oil droplets by the use of a radical polymerization initiator, so that a reaction with a monomer dissolved in aqueous phase can be suppressed and spherical particles can be obtained. The reaction temperature is appropriately adjusted in view of the half-life temperature of a radical initiator, monomer types, and the like. As a preferable example, the temperature ranges from 60°C to 90°C. Also, a preferable example of agitating speed ranges from 100 rpm to 400 rpm. Care should be taken since agitating speed higher than this speed range can break copolymer particles to generate broken particles.

Furthermore, the average particle size of the copolymer particles preferably ranges from 0.5 $\mu$m to 100 $\mu$m in order to ensure the specific surface area and appropriate filling density for an adsorbent. When the particle size is too great, solution outflow takes place before adsorption during the solution introduction process, and thus sufficient solid phase extraction performance cannot be exhibited. On the other hand, when the particle size is too low, pressure loss takes place in the flow path, so as to decrease solid phase extraction efficiency. The average particle size of particles more preferably ranges from 1 μm to 90 μm, and even further more preferably ranges from 10 μm to 80 μm.

When the amphiphatic copolymer adsorbent of the present invention is prepared, it is more preferable not only to confirm the incorporation of a high-polarity monomer and a high-polarity structure into the adsorbent, but also to determine the composition and the entire structure of the adsorbent. In this respect, various measurement techniques can be employed and they are not limited. For example, for evaluation of the copolymer adsorbent of the present invention, Fourier-transform infrared spectroscopy (FTIR), a solid phase 13C nuclear magnetic resonance method, elementary analysis (based on a combustion method), or the like can be employed. Structures can be identified and analyzed by these techniques.

Regarding the copolymerization ratio, the percentage accounted for by a high-polarity monomer can be appropriately adjusted in accordance with the polarity of a solute to be recovered, and is not particularly limited. However, under conditions where a high-polarity monomer accounts for a too high percentage in the copolymer, the hydrophobicity of the copolymer is decreased and the efficiency of recovering the low-polarity solute molecule is decreased. Under conditions where a high-polarity monomer accounts for a too low percentage in the copolymer, the hydrophilicity of the copolymer is decreased and the efficiency of recovering the high-polarity solute molecule is decreased. Regarding the copolymerization ratio, the percentage accounted for by a high-polarity monomer, which leads to the highest adsorption performance in the present invention, ranges from 5 mol% to 50 mol%, and more preferably 10 mol% to 30 mol% in the copolymer. In the case of monomers having particularly high SP values among high-polarity monomers, decreases in recovery efficiency tend to be suppressed even under conditions of low copolymerization ratio.

Next, a solid phase extraction method using the above amphiphatic copolymer adsorbent is as explained below. The solid phase extraction method of the present invention comprises a step of bringing a solution containing as a solute one or more types selected from a non-polar solute molecule, a low-polarity solute molecule, a moderate-polarity solute molecule, and a high-polarity solute molecule into contact with the above amphiphatic copolymer adsorbent, thereby adsorbing and holding the solute in the solution to the amphiphatic copolymer adsorbent. The types of such a solution to be subjected to treatment are not particularly limited. The amphiphatic copolymer adsorbent and the solid phase extraction method of the present invention are appropriate as means for isolating subject substances from samples for particularly analyzing components in a complicated composition (e.g., trace analysis of water quality, soil, or the like, quantitative analysis of microadditives, poisons, agricultural chemicals, or the like, evaluation of environmental contamination, pharmaceutical development, food nutritional evaluation, functional food nutritional evaluation, drinking water purity evaluation, and TDM analysis). An example of a specimen therefor is a biomatrix (e.g., whole blood, blood plasma, saliva, or urine) containing a solute such as a medicine. Examples of a solution to be used herein also include beverage water and an environmental sample such as polluted water. Preferable examples of a solution to be used in the present invention include blood plasma, serum, blood, urine, a spinal fluid, a synovial fluid, a biological tissue extract, an aqueous solution, ground water, surface water, a soil extract, cosmetics, a food substance, and an extract of a food substance. Furthermore, preferable examples of the solute in the present invention include a medicine, an antibacterial agent, a drug, an insecticide, a herbicide, a poison, a biomolecule, a contaminant, a metabolite thereof, and a degraded product thereof. Further preferred examples of a biomolecule among these examples include a protein, a vitamin, a hormone, a polypeptide, a polynucleotide, a lipid, and a carbohydrate.

The method for isolating a subject solute from a solution comprises four general steps of: conditioning an adsorbent using a solvent that enhances surface properties; introducing a sample solution; washing the entire adsorbent with a washing solvent (water or an organic solvent); and causing the elution of the solute with an elution solvent (organic solvent). The types of a solvent, a washing solvent, and an elution solvent that can be used for a sample solution are not particularly limited, but examples thereof preferably include a polar solvent in order to maintain hydrophilicity of the adsorbent surface. Further preferable examples thereof include hydrous solvents such as water or a mixed solvent of a polar organic solvent and water, and polar organic solvents such as methanol, ethanol, propanol, 2-propanol, acetone, methyl ethyl ketone, methyl isobutyl ketone, methyl acetate, ethyl acetate, acetonitrile, tetrahydrofuran, 1,4-dioxane, N, N-dimethylformamide, and dimethylsulfoxide.

In the conditioning process, an adsorbent is washed with a polar organic solvent and then washed with water, so that the adsorbent surface can be adjusted. In a preferable example of conditioning, a support such as a column is filled with an adsorbent, and the column is treated with methanol and then with water (e.g., 1 ml each). The use of methanol causes the appropriate swelling of the adsorbent, increasing the effective surface area. Treatment with water removes excessive methanol and at the same time hydrates the adsorbent surface. Subsequently, an excessive solvent can be removed, and thus the adsorbent can be maintained in a completely hydrated state.

When a solution of a substance to be subjected to solid phase extraction is a low-viscosity solution such as a medicine solution, serum or whole blood components, from which a protein component and the like have been removed, such a solution can be introduced into an adsorbent without specific treatment. When a solution with high viscosity such as blood plasma is contained, the solution is desirably introduced as a diluted aqueous solution (at least 1 : 1 dilution). Particularly, blood plasma has high viscosity, so that it can inhibit the adsorption of an adsorbent to a solute. Furthermore, a protein as a blood plasma component can be denatured by an organic solvent, and then precipitated to contaminate the adsorbent surface. Hence, dilution with an organic solvent is desirably avoided. Also, the flow rate of a solution is desirably adjusted so that the contact time appropriate for adsorbing and holding a solute is determined.

In an embodiment of the present invention, a solute (e.g., medicine) can be present at the level of 1 ng to 10 $\mu$g per mL of the solution. Furthermore, the amount of a solution that can be applied to a solid phase extraction apparatus depends on the volume of each apparatus. In the case of a solid phase extraction plate, approximately 1 $\mu$L to 100 $\mu$L of a solution sample can be applied. In the case of a solid phase extraction column, approximately 100 $\mu$L to 1 mL of a solution sample can be applied. Cases of using such a solid phase extraction plate are as described below.

An adsorbent to which a solute has been adsorbed can be washed with water and an organic washing solvent. More preferably, the adsorbent is washed with water. An arbitrary amount of a solvent can be used for washing and preferably approximately 50 $\mu$L to 500 $\mu$L of a solvent is used. Through washing with water, salts and contaminants such as water soluble substrates and protein substances other than measurement subjects, which can exist in a sample, are removed. Also, when water-insoluble substrate constituents or organic impurities adhering to an adsorbent surface are contained in a sample, they can be removed using an organic washing solvent. At this time, washing conditions are preferably adjusted so as not to break the adsorption of a solute to the surface of an adsorbent. When conventional silica adsorbents and polymer adsorbents are used for separation, a large amount of a solute can be eluted from the adsorbents in the washing step.

Next, a solute is eluted from the surface of an adsorbent using an elution solvent. Elution takes place when an elution solvent reaches and becomes contact with the adsorption interface of the solute and the adsorbent, and can be performed by applying a specific amount of an elution solvent. A representative elution solvent is selected from a polar organic solvent and an aqueous solution. A solvent to be used herein desirably contains at least about 80 wt% to 90 wt% of an organic component. Examples of a representative organic component include, but are not limited to, alcohol such as methanol, ethanol, and 2-propanol, and acetonitrile. A trailing ion such as trifluoroacetic acid can also be used as an elution solvent component, and is useful for efficiently breaking polar interaction between a polar solute and an adsorbent. An arbitrary amount of a solvent can be used for elution. When elution is performed using a methanol solvent, preferably, approximately 50 $\mu$L to 200 $\mu$L of a solvent is used, for example. With the use of such a solvent, 90% to almost the total amount of all solutes having wide-ranging polarities, which have been adsorbed to and held by the adsorbent, can be recovered.

Furthermore, pretreatment can be performed upon analysis of a sample containing contaminants by solid phase extraction using the amphiphatic copolymer adsorbent of the present invention. Through the pretreatment process with high efficiency and high selectivity, an eluted solution resulting from solid phase extraction is collected, and then a solute adsorbed to and held by an adsorbent can be specified using an analytical technique such as mass spectroscopy (MS), liquid chromatography (LC), or gas chromatography (GC), or a combination thereof. Also, even when a predetermined solute is present in a trace amount (< 1 ng) in a measurement solution, it can be analyzed by evaporating the elution solution, re-dissolving the resultant, and then introducing the resultant into the mobile phase of LC or LC/MS. In this microanalysis, suppressing the solute loss due to the pretreatment process to as low a level as possible is of utmost importance. The solute loss before or after pretreatment accounts for preferably 20% or less, more preferably 10% or less, and further preferably 5% or less of the total amount of the solute in the art, although it differs depending on the sensitivity and the content of the solute. Thus, the amount of solute loss can be further reduced according to the present invention.

A strong point of the amphiphatic copolymer adsorbent and the solid phase extraction method using the same of the present invention is that an eluted solution can be directly applied to an apparatus for identification of a solute. This was not possible to achieve to date with adsorbents of prior art, but now it can be achieved as follows. Specifically, the adsorbent compatible with various solutes can be obtained by forming the amphiphatic copolymer having a low polarity-high polarity structure (the structure having a contrast between low-polarity sites and high-polarity sites). According to prior art, the adsorption and holding of adsorbed wide-ranging solutes and the separation and the recovery of such solutes by solid phase extraction have been difficult because of polarity dependence of a solute. Furthermore, unnecessary components are contained in an eluted solution because of ion suppression effects of adsorbents in MS analysis, making identification of a solute significantly difficult. Also, measurement sensitivity is lowered due to a decrease in recovered amount, so that sufficient MS analysis cannot be conducted. On the other hand, a solid phase extraction apparatus filled with the adsorbent of the present invention is used for pretreatment and thus can be easily used in combination with an LC-MS system, a FIA-MS system, a HPLC system, and other analysis systems, for example.

Next, an adsorbent that is a third embodiment of the present invention and a method for producing the same are as explained below. The present invention is not limited by the following embodiments and various modifications and applications thereof may arbitrarily occur without departing from the scope of the present invention.

[1. Adsorbent]

[1-1. Hydrophobic resin]

The adsorbent according to the embodiment is an adsorbent containing a hydrophobic resin, wherein a hydrophilic group(s) is directly or indirectly bound to a part of the surface of the hydrophobic resin.
Here, the expression "a hydrophilic group(s) binding to a part of the surface" refers to a state in which both hydrophobic sites of the hydrophobic resin and the hydrophilic group are present on the surface of the hydrophobic resin. This state may be a state in which hydrophobic sites are present in a focused manner on a part of the surface, and hydrophilic groups are present in the remaining sites in a focused manner, for example. Alternatively, such a state may be a state in which hydrophobic sites and hydrophilic groups are present in a mixed manner. Hydrophilic groups are bound to only a part of the surface of the hydrophobic resin as described above, so that the adsorbent according to the embodiment has a hydrophilic part and a hydrophobic part (specifically, high-polarity sites and low-polarity sites) in a good balance within the same adsorbent and is capable of adsorbing various substances including medicines.

However, the excessively low amount of a hydrophilic group existing on the surface of a hydrophobic resin can result in excessively large hydrophobicity of the adsorbent. This can also make adsorption of hydrophilic substances difficult. Also the excessively high amount of a hydrophilic group can result in an excessively high degree of hydrophilicity of the adsorbent. This can also make adsorption of hydrophobic substances difficult. The amount of a hydrophilic group can be calculated on the basis of the peak size detected by infrared radiation (IR) absorption spectral measurement, for example.

Also, the expression "a hydrophilic group(s) directly or indirectly binding" may refer to a state in which hydrophilic groups are directly bound to the surface of a hydrophobic resin via covalent bond or the like, or a state in which hydrophilic groups are indirectly bound to a hydrophobic resin via ether bond, ester bond, amide bond, silanol bond, or the like. However, in the adsorbent according to the embodiment, hydrophilic groups are preferably bound to a hydrophobic resin via one or more types of the above listed bonds. In addition, another state is also possible herein, wherein these bonds are possessed by hydrophilic groups and the above bonds function as linking groups so that desired hydrophilic groups are bound to a hydrophobic resin.

In the adsorbent according to the embodiment, the physical properties of a hydrophobic resin and hydrophilic groups contained in the adsorbent are defined by each of their solubility parameters (SP value) δ. In this embodiment, "solubility parameter: δ" is defined by the following formula on the basis of the Hildebrand-Scatchard solution theory.

$$\delta = \left( \Delta Ev/V \right)^{1/2}$$

The above formula is employed in the Hildebrand-Scatchard solution theory, wherein $\Delta Ev$ denotes evaporation energy (cal/mol), V denotes molecular volume (cm$^3$/mol), and $\Delta Ev/V$ denotes cohesive energy density (cal/cm$^3$). Moreover, 1 cal corresponds to 4.2 J.

The higher the solubility parameter, the higher the polarity. This indicates hydrophilicity. Regarding a specific method for calculating solubility parameters in this embodiment, specific parameters can be calculated mainly from the molecular structures of monomers and the actual values of the copolymerization ratio according to the method described in F. Fedors, A Method for Estimating Both the Solubility Parameters and Molar Volumes of Liquids, Polymer Engineering and Science, Vol. 14, No. 2 (1974).

A reason of specifying a hydrophobic resin and hydrophilic group(s) with solubility parameters is as described below.
Specifically, all hydrophilic group(s) contained in the adsorbent according to this embodiment have high-polarity molecular structures, so that they can form firm hydrophilic interaction with the polar structure of a substance to be adsorbed to the adsorbent. Also, the adsorbent according to this embodiment has a high-polarity molecular structure on the surface, so that solvation and wettability with a polar solvent are improved.

Also in conventional techniques for adsorbents, an adsorbent containing a copolymer that has a hydrophobic-hydrophilic structure has been proposed for the purpose of improving the wettability of the adsorbent with a polar solvent. Furthermore, surface modification techniques for hydrophobic resins have also been proposed for the purpose of improving the wettability. However, as a result of examination by the present inventors, adsorbents to be used in these techniques have polarity still lower than that of a hydrophilic group(s) binding to the surface of the adsorbent of the embodiment and thus the contribution of hydrophilic interaction to adsorption of a substance is still low. In particular, conventional adsorbents tend to exhibit decreased capacity to recover high-polarity solute medicines or the like via solid phase extraction, and can merely play an auxiliary role in the above hydrophilic-interaction-mediated adsorption. The present invention was conceived in view of these points. In the embodiment, the following three factors: (1) solubility parameter; (2) specific molecular structure; and (3) intramolecular heteroatom content are focused as indices for a high-polarity structure. Thus, a hydrophilic group(s) existing on the adsorbent surface was defined. In particular, solubility parameter, by which a hydrophobic resin and a hydrophilic group(s) are specified, can be said as a particularly preferable index for the polarity of the adsorbent surface.

The solubility parameter of a hydrophobic resin contained in the adsorbent according to the embodiment is 10 or less, preferably 9.5 or less, and more preferably 9 or less. With the use of a hydrophobic resin having a solubility parameter of 10 or less, a hydrophobic substance can be adsorbed to the surface of the hydrophobic resin by hydrophobic interaction, because such a hydrophobic resin has high affinity for a hydrophobic structure such as a hydrocarbon group. Also, since a hydrophilic group(s) is bound to the surface of the adsorbent according to this embodiment, a hydrophilic substance can also be bound because of the formation of a polarity contrast between the hydrophilic group(s) and the substance.

Specifically, a hydrophobic resin may be of any type as long as it does not significantly decrease the effects of the present invention. Examples thereof include polypropylene, polyethylene, polystyrene, an allyl glycidyl ether polymer, a divinylbenzene polymer, a methyl methacrylate polymer, a methyl acrylate polymer, polyvinyl acetate, and a bisvinylphenylethane polymer. Particularly preferable examples of a hydrophobic resin to be contained in the adsorbent according to the embodiment are the above hydrophobic resins. One type of such hydrophobic resin may be contained independently, or two or more types of the same may be contained in arbitrary proportions and in any combination.

A hydrophobic resin of any shape may be employed herein, as long as it does not significantly decrease the effects of the present invention. Examples thereof include spherical shapes and lepidic shapes. However, in view of easy handling, the shape of a hydrophobic resin is preferably spherical. In addition, the term "spherical (shape)" does not necessarily always refer to a true-spherical hydrophobic resin, but also refers to "spherical" in the broadest sense such as an egg shape, the cross sections of which are oval.

Also, when the shape of a hydrophobic resin is spherical, the average diameter thereof may be any diameter, as long as it does not significantly decrease the effects of the present invention. In general, such a diameter equals the average diameter of an adsorbent after binding of a hydrophilic group(s) to the surface of the hydrophobic resin. Therefore, the average diameter of such a hydrophobic resin generally equals the average diameter of an adsorbent described later.

[1-2. Hydrophilic group]

The adsorbent according to the embodiment is prepared by directly or indirectly binding a hydrophilic group(s) to a part of the surface. The adsorbent according to this embodiment is as explained below with reference to five embodiments of the adsorbent to which different hydrophilic groups are bound.

(Adsorbent according to first embodiment)

The adsorbent according to the first embodiment has the physical properties as described in [1-1. Hydrophobic resin], wherein the difference between the solubility parameter of the above hydrophilic group(s) and the solubility parameter of the above hydrophobic resin is 2.2 or more. The specific solubility parameter value of a hydrophilic group (s) may be any value, as long as it does not significantly decrease the effects of the present invention. Such a specific solubility parameter value may be determined in accordance with the solubility parameter value of the hydrophobic resin contained in the adsorbent according to the first embodiment. However, as described above, the solubility parameter of the hydrophobic resin differs from the solubility parameter of the hydrophilic group(s) by generally 2.2 or more, preferably 2.5 or more, and more preferably 3 or more. When such a difference in solubility parameter is too low, the number of types of substances that can be adsorbed may be limited. When the same is too high, adsorbed substances may not be eluted.

The specific type of such a hydrophilic group(s) may be any type, as long as it does not significantly decrease the effects of the present invention. Examples thereof include an N-phenyl maleimide backbone, a maleic anhydride backbone, a fumaric acid backbone, a maleic acid backbone, and a triallyl isocyanurate backbone. In particular, the above examples are preferred as hydrophilic groups to be contained in the adsorbent according to the first embodiment. One type of a hydrophilic group(s) may be independently contained, or two or more types of the same may also be contained in arbitrary proportions and in any combination.

In addition, the term "backbone (of a compound represented by the term "backbone" attached to the name of the compound)" in the above description refers to a backbone in a state wherein at least one atom in the compound is directly or indirectly bound to the above hydrophobic resin. For example, the term "N-phenyl maleimide backbone" refers to a compound in a state in which at least one carbon atom, oxygen atom, or nitrogen atom of N-phenyl maleimide is directly or indirectly bound to a hydrophobic resin, for example. In the following descriptions, the term "backbone" refers to a meaning similar thereto unless particularly specified.

(Adsorbent according to second embodiment)

The adsorbent according to the second embodiment has physical properties described in [1-1. Hydrophobic resin], wherein the solubility parameter of a hydrophilic group(s) is 11.5 or more. However, when the solubility parameter of a hydrophilic group(s) is preferably 12 or more, and more preferably 13 or more. Moreover, the upper limit of the same is generally 23 or less and preferably 22 or less. When the value of the solubility parameter is too low, adsorption performance for high-polarity substances may be decreased. When the value of the same is too high, adsorbed substances may not be eluted.

A specific type of a hydrophilic group(s) having such a solubility parameter may be any type, as long as it does not significantly decrease the effects of the present invention. The type of a hydrophilic group(s) is preferably the same as that of a hydrophilic group(s) described in the above "Adsorbent according to first embodiment."

(Adsorbent according to third embodiment)

The adsorbent according to the third embodiment has physical properties as described in [1-1. Hydrophobic resin], wherein a hydrophilic group(s) contains a plural number of structures of one or more types selected from the group consisting of an ester bond, a urethane bond, an amide bond, a thioester bond, a tetrahydrofuran ring, a furan ring, a carboxyl group, an amino group, an alkylamino group, and a dialkylamino group and the hydrophilic group(s) contains a hydrocarbon group with a carbon number of 6 or less.

The specific number of the above structure(s) to be contained in the hydrophilic group(s) of the adsorbent according to the third embodiment is not specifically limited, as long as it is plural. Also, examples of the hydrophilic group(s) of the adsorbent according to the third embodiment include hydrocarbon groups having specific carbon numbers. The carbon number of a hydrocarbon group(s) to be included herein is generally 6 or less, and preferably 4 or less. When the carbon number is too high, the hydrophobicity is enhanced, which can result in decreased ability to adsorb high-polarity substances.

Regarding a hydrophilic group(s) that is contained in the adsorbent according to the third embodiment, the mode of binding of the above structure to a hydrocarbon group(s) is not particularly limited. In general, a hydrocarbon group(s) binds to a hydrophobic resin via the above bond. Therefore, specific examples of a hydrophilic group(s) that has such a binding mode include a methylenebis acrylamide backbone, a tetrahydrofurfuryl acrylate backbone, a tetrahydrofurfuryl methacrylate backbone, a diallyl phthalate backbone, a divinyl isophthalate backbone, a diallyl isophthalate backbone, a divinyl terephthalate backbone, a diallyl terephthalate backbone, a furfuryl acrylate backbone, and a furfuryl methacrylate backbone. In particular, the above examples are preferred as hydrophilic group(s) to be contained in the adsorbent according to the third embodiment. One type of these examples may be used independently, or two or more types of the same may also be used in arbitrary proportions and in any combination.

(Adsorbent according to the fourth embodiment)

The adsorbent according to the fourth embodiment has the physical properties described in [1-1. Hhydrophobic resin], wherein a hydrophilic group(s) contains one or more types of backbone selected from the group consisting of an isocyanuric acid ester backbone, a cyanuric acid ester backbone, a hexahydrotriazine backbone, a maleimide backbone, and an imidazole backbone.

More specific examples of a backbone of a hydrophilic group(s) to be contained in the adsorbent according to the fourth embodiment include an N-phenyl maleimide backbone, a triallyl isocyanurate backbone, a triallyl cyanurate backbone, a 1,3,5-triacryloylhexahydro-1,3,5-triazine backbone, an N-phenyl maleimide backbone, and a 1-vinylimidazole backbone. Particularly the above examples are preferable as backbones of a hydrophilic group(s) to be contained in the adsorbent according to the fourth embodiment. One type of these examples may be contained independently, or two or more types of the same may be contained in arbitrary proportions and in any combination.

(Adsorbent according to the fifth embodiment)

The adsorbent according to the fifth embodiment has the physical properties described in [1-1. Hydrophobic resin] is characterized in that a hydrophilic group(s) contains: one or more types of heteroatom selected from the group (1) consisting of an oxygen atom, a nitrogen atom, and a sulfur atom; and one or more types of structure selected from the group (2) consisting of an ether bond, an ester bond, a urethane bond, an amide bond, a thioester bond, a carboxyl group, an amino group, an alkylamino group, a dialkylamino group, and a hetero ring backbone, wherein the total heteroatom content (in the hydrophilic group(s)) is 30 mol% or more with respect to the total number of moles of atoms of the hydrophilic group(s).

A hydrophilic group(s) to be contained in the adsorbent according to the fifth embodiment contains one or more types of heteroatom selected from the group consisting of an oxygen atom, a nitrogen atom, and a sulfur atom. One type of these heteroatoms may be contained independently or two or more types of the same may also be contained in arbitrary proportions and in any combination. In particular, an oxygen atom and a nitrogen atom are preferred as heteroatoms.

Furthermore, a hydrophilic group(s) to be contained in the adsorbent according to the fifth embodiment contains one or more types of the above structure. Examples of these structures include structures containing an oxygen atom, a nitrogen atom, or a sulfur atom. Therefore, the term "total heteroatom content in the hydrophilic group(s) contained in the adsorbent according to the fifth embodiment" refers to the total content of the heteroatoms of (1) above and the heteroatoms contained in that of (2) above. The total heteroatom content is 30 mol% or more, preferably 35 mol% or more, and more preferably 40 mol% or more with respect to the total number of moles of atoms of the hydrophilic group (s). Furthermore, the upper limit thereof is generally 50 mol% or less, and preferably 45 mol% or less. When the total heteroatom content is too low, ability to adsorb high-polarity substances may be decreased. When the total heteroatom content is too high, adsorbed substances may not be eluted.

Specific examples of a hydrophilic group(s) having the above structure include a N,N'-dimethylacrylamide backbone, a maleic acid backbone, a fumaric acid backbone, a methacrylic acid backbone, and an acrylic acid backbone. In particular, the above backbones are preferred as hydrophilic groups to be contained in the adsorbent according to the fifth embodiment. One type of these backbones may be contained independently and two or more types of the same may be contained in arbitrary proportions and in any combination.

[1-3. Physical properties of the adsorbents according to the embodiments]

The shape of the adsorbent according to any one of the embodiments may be any shape, as long as it does not significantly decrease the effects of the present invention. In general, the adsorbent has the same shape as that of the above hydrophobic resin. Therefore, the shape of the adsorbent according to the embodiment is preferably spherical.

When the shape of the adsorbent according to any one of the embodiments is spherical, in view of enduring appropriate filling density of the adsorbent when it is used by being inserted into a column for example, the average diameter is generally 0.5 $\mu$m or more, preferably 1 $\mu$m or more, and more preferably 10 $\mu$m or more, and the upper limit thereof is generally 100 $\mu$m or less, preferably 90 $\mu$m or less, and more preferably 80 $\mu$m or less. When the average diameter is too low, pressure loss may occur in the flow path of a solution containing a substance of interest when the solution is applied to a column and thus the efficiency of solid phase extraction may be decreased. Furthermore, when the average diameter is too high, the solution may flow out before adsorption of a substance of interest to the adsorbent during the process of applying the solution to the column, and thus the efficiency of solid phase extraction may also be decreased. Such an average diameter can be measured using a laser diffraction particle size distribution analyzer.

In addition, the adsorbents according to the embodiments are explained such that the shapes thereof are described as being particulate, but the adsorbents according to the embodiments may also be powdered (that is, a powder). Therefore, if the adsorbents are powdered (and specifically, the adsorbents to which hydrophilic groups have been bound are also generally powdered), a hydrophilic group(s) is bound to the surface, and then the resultant can be used as the adsorbent according to the embodiment.

[1-4. Application of the adsorbents according to embodiments]

The adsorbent according to any one of the embodiments (the adsorbents according to the first embodiment to the fifth embodiment) as explained in [1-2. Hydrophilic group(s)] above enables adsorption of any substance to the adsorbent. Here, the term "adsorption, adsorbed, or the like" in the embodiments refers to, for example, a state in which the adsorbent and a substance are bound by reversible bonding such as hydrophilic interaction or hydrophobic interaction. The term "hydrophilic interaction" refers to general intermolecular force in which polar structures are involved, such as mainly hydrogen bonding, dipole-dipole interaction, ion-dipole interaction, dipole-induced dipole interaction, and London dispersion force.

As a substance that can be adsorbed to the adsorbent according to any one of the embodiments, particularly a medicine is preferred. Therefore, the adsorbent according any one of to the embodiments enables adsorption of medicines having various polarities ranging from high-polarity medicines to low-polarity medicines (that is, hydrophilic medicines to hydrophobic medicines). For example, when defined as described below on the basis of octanol·water distribution coefficient (logP), the term "high-polarity medicine" refers to a medicine having a logP value ranging from -2.0 to 1.5. Similarly, the term "moderate-polarity medicine" refers to a medicine having a logP value ranging from 1.5 to 3.0. The term "low-polarity medicine" refers to a medicine having a logP value of 3.0 or more. In addition, the term "medicine" refers to a chemical or a drug, a remedy or the like and in particular refers to a drug that is prepared according to the purpose of use.

The adsorbent according to any one of the embodiments enables highly efficient adsorption and solid phase extraction of substances (solutes) having wide-ranging polarities. Specifically, for example, a high-polarity medicine (e.g., theophylline ($\log P$ = -0.02)), moderate-polarity solute molecules (e.g., phenobarbital ($\log P$ = 1.7), phenytoin ($\log P$ = 2.5), carbamazepine ($\log P$ = 2.5), and diazepam ($\log P$ = 2.9)), low-polarity solute molecules (e.g., everolimus ($\log P$ = 3.4), rapamycin ($\log P$ = 3.5), and dibutyl phthalate ($\log P$ = 4.7)), and the like can be recovered by solid phase extraction.

[1-5. Advantages of the adsorbents according to the embodiments]

The types of substance that can be held by conventional adsorbents differ depending on composition, surface structure, and the like. Specifically, whether or not holding is possible is generally determined on the basis of the degree of the polarity of the adsorbent surface. When a substance having polarity that makes holding thereof difficult is adsorbed by an adsorbent, the recovery efficiency is decreased upon extraction of a solid layer, so as to make recovery extremely difficult in some cases. Furthermore, if such a substance is adsorbed to the adsorbent surface, the outflow of the adsorbed substance may occur in the washing process after adsorption. Therefore, the washing conditions and the number of washings are limited and the purity of the thus recovered substance can be decreased.

As a result of examination by the present inventors, they have focused on the molecular structure on the adsorbent surface, and thus have discovered as follows. Specifically, an adsorbent to which substances having wide-ranging polarities can be adsorbed can be provided by binding a hydrophilic group(s) with polarity higher than that of a conventional adsorbent to a part of the surface of a hydrophobic resin. The present inventors have further discovered that an adsorbent having low-polarity sites and high-polarity sites (that is, the adsorbent having sites that differ significantly in polarity simultaneously on the surface) can be provided by binding a high-polarity hydrophilic group(s) onto the surface of a hydrophobic resin, so as to form high-polarity sites on the adsorbent surface.

The adsorbent has such a structure, so that both hydrophilic interaction due to the high-polarity sites and hydrophobic interaction due to low-polarity sites take place independently, so as to cause firm adsorption between the substance and the adsorbent. In particular, the efficiency of solid phase extraction of moderate-polarity substances and high-polarity substances can be significantly improved. Furthermore, since the polarity of a hydrophilic group(s) contained in the adsorbent is high, even when the amount of the hydrophilic group(s) binding to the surface of the hydrophobic resin is low, a substance of interest can be sufficiently adsorbed while ensuring wettability with water, a solvent having polarity, such as a polar organic solvent, or the like. Therefore, with the use of the adsorbent according to the embodiments, an amphiphatic adsorbent that enables highly efficient adsorption of high-polarity sites or low-polarity sites of a substance of interest can be produced.

[2. Method for producing the adsorbents]

The adsorbent according to any one of the embodiments can be produced by any method, as long as it does not decrease the effects of the present invention. An example of the method for producing the adsorbent according to any one of the embodiments is as described below. However, the adsorbents according to the embodiments are not produced only by the following production method.

The adsorbents according to the embodiments can be produced by preparing the hydrophobic resin described in [1-1. Hydrophobic resin] above so that they are spherical, for example, and then binding the hydrophilic group(s) as described in [1-2. Hydrophilic group(s)] to the surface of the thus prepared spherical hydrophobic resin.

A hydrophobic resin can be prepared by polymerizing known monomers under known conditions, for example. When polystyrene is used as a hydrophobic resin, for example, polystyrene can be prepared by performing radical polymerization using styrene as a monomer and azobisisobutyronitrile (AIBN), benzoyl peroxide, or the like as a polymerization initiator so that the resultant has a desired molecular weight. Reaction conditions for performing radical polymerization may be any known conditions. Polymerization other than radical polymerization can also be performed. Furthermore, a commercially available product can also be used as a hydrophobic resin.

The thus prepared hydrophobic resin may be shaped into a desired form. The shape of the adsorbent according to any one of the embodiments is generally similar to that of a hydrophobic resin before binding of a hydrophilic group(s) to the surface. Therefore, the hydrophobic resin is generally shaped into the same shape as described in [1-3. Physical properties of the adsorbents according to the embodiments] above. Any known method can be used as a shaping method.

The method for producing the adsorbents according to the embodiments comprises a step of performing one or more types of treatment selected from the group consisting of ozone treatment, plasma treatment, and treatment with an oxidizing agent for the surface of a hydrophobic resin, and then bringing a compound having the hydrophilic group(s) into contact with the surface of the hydrophobic resin after the treatment. Therefore, the above treatment is preferably performed for the surface of the above shaped spherical hydrophobic resin.

As a specific method for the above treatment, any method can be employed, as long as it does not significantly decrease the effects of the present invention. For example, when ozone treatment is performed for the surface of a hydrophobic resin, UV (ultraviolet ray) ozone treatment can be performed using PL21-200 (Sen Lights Corporation) under atmospheric conditions. Also, the intensity of UV radiation may be about 3J/cm2, for example. Furthermore, when plasma treatment is performed for the surface of a hydrophobic resin, oxygen plasma treatment can be performed using a PDC210 plasma dry cleaner (Yamato Scientific Co., Ltd.), for example. As a specific method, for example, treatment is performed in a soft mode using the apparatus with an output of 300 W for 2 minutes of treatment time. Furthermore, when treatment with an oxidizing agent is performed, for example, the surface of a hydrophobic resin may be treated using an oxidizing agent. Specific examples of the type of such an oxidizing agent include potassium permanganate and potassium dichromate. The concentration of an oxidizing agent and the time for treatment with an oxidizing agent can be arbitrarily determined. If an excessive amount of an oxidizing agent is used or a reaction is performed for excessively long time, a hydrophilic group(s) may bind to the entire surface of the hydrophobic resin in the subsequent steps. Therefore, the conditions are preferably determined while appropriately confirming the oxidation degree on the surface using a method such as fluorescent X-ray analysis (XPS: X-ray photoelectron spectroscopy). On the surface of a hydrophobic resin before oxidation, only peaks corresponding to C-H bonding are generally observed in the case of a hydrocarbon-based resin. After oxidation of the surface of the hydrophobic resin, peaks derived from C-O bonding and C=O bonding, respectively, are observed. The peak intensity of C-O bonding or C=O bonding on the sufficiently oxidized surface is regarded as the standard intensity. The oxidation degree is determined based on the intensity, and then the oxidation degree may be adjusted so that only a part of the surface of the hydrophobic resin is oxidized.

In addition, the above treatment may be performed only once or twice or more. When the above treatment is performed twice or more, the same treatment may be repeated or different types of treatment may be performed in combination.

The surface of the hydrophobic resin is oxidized by performing the above treatment for the surface, and thus reactive functional groups (e.g., a hydroxyl group and a carboxyl group) are generated. Therefore, a compound having the above hydrophilic group(s) is brought into contact with the treated surface of the hydrophobic resin, the thus generated reactive functional groups react with the compound having the hydrophilic group(s), and thus the adsorbent according to any one of the embodiments, on which the above hydrophilic group(s) has been bound to the surface of the hydrophobic resin, can be produced.

As described above, the hydrophilic group(s) is bound to the surface of the hydrophobic resin prepared in advance, so that an adsorbent having stable performance can be produced more conveniently at lower cost than in the case of a method that involves copolymerization of a hydrophobic monomer and a hydrophilic monomer.

For example, in the method for producing an adsorbent by copolymerizing a hydrophobic monomer and a hydrophilic monomer (as described in Patent Document 4 above), compounds having conflicting properties, such as water and oil, that is, monomers having low compatibility to each other are polymerized, for example. In such a case, a polymerization method such as suspension polymerization, emulsion polymerization, or emulsion polymerization, is generally employed, for example. These methods are problematic in that the shape of particles is generally controlled with difficulty and the yield is low. However, with the method for producing the adsorbents according to the embodiments, reactive functional groups are generated by performing specific treatment for the surface of a hydrophobic resin, and thus a high-polarity hydrophilic group(s) can be bound.

Examples

The present invention will be further described in detail by examples and comparative examples as follows, but the present invention is not limited by these examples.

First, examples and a comparative example of a heterocyclic-ring-containing copolymer adsorbent and an amphiphatic copolymer adsorbent, which are the first and the second embodiments of the present invention, are as described below.

(1) Particle size measurement

Particle size measurement for polymer particles (adsorbent) was performed by microtrac particle size analyzer (for distribution measurement) (Nikkiso Co., Ltd.) (Microtrac FRA, laser diffraction/scattering). The measurement range is between 0.1 $\mu$m and 700 $\mu$m and the 50% median particle size (is a particle size at which a cumulative curve indicates 50% when the cumulative curve is obtained by taking as 100% the total volume of a group of powders) was designated as the particle size of the polymer particles.

(2) Infrared spectroscopic measurement

Infrared (IR) spectroscopic measurement of polymer particles was performed using a Fourier-transform infrared spectrometer (PerkinElmer Co., Ltd. Spectrum 100, Attenuated Total Reflection: ATR).

(3) Measurement of specific surface area and pore diameter

Measurement of specific surface area and pore distribution was performed using a specific surface area measuring apparatus (QUANTACHROME) (AUTOSORB-1, multi-point measurement (40 point measurement)). Pretreatment of measurement samples was performed at 120°C for 10 minutes (under reduced pressure). Measurement of specific surface area was calculated using BET (Brunauer, Emmett, Teller) adsorption isotherm based on the slope and the intercept of the BET plot. Pore diameter measurement was performed by finding by calculation of the pore distribution using the BJH (Barrett, Joyner, Halenda) method and a change in cumulative pore volume. The peak diameter of the distribution was designated as pore diameter.

(4) Measurement of copolymerization ratio by elementary analysis

The copolymerization ratio of polymer particles was found by quantitatively determining the element ratios of carbon (C), hydrogen (H), and nitrogen (N) by a combustion method, and then finding the copolymerization ratio from the composition ratios of polymer particles. CHN elementary analysis was conducted using an element analyzer (MT-5, Yanagimoto Mfg. Co., Ltd).

(5) Method for filling solid phase extraction plate with heterocyclic-ring-containing copolymer adsorbent or amphiphatic copolymer adsorbent

Filling with the heterocyclic-ring-containing copolymer adsorbent or the amphiphatic copolymer adsorbent was performed by the following method. 2 mg of the heterocyclic-ring-containing copolymer adsorbent or the amphiphatic copolymer adsorbent to be evaluated was slurried in 100 $\mu$L to 200 $\mu$L of methanol and then a solid phase extraction plate (OASIS (registered trademark) $\mu$-Elution plate, Waters) was filled with the resultant.

(6) Evaluation of the adsorption of solutes using a solid phase extraction plate

Solid phase extraction targets in the Examples were the following solutes: a mixed solution of high-polarity solute molecules (vancomycin (logP = -1.4, 2.5 ng/mL), theophylline (logP = -0.02, 25 ng/mL), and solvent : water); a mixed solution of moderate-polarity solute molecules (phenobarbital (logP = 1.7, 25 ng/mL), phenytoin (logP = 2.5, 25 ng/mL), carbamazepine (logP = 2.5, 2.5 ng/mL), diazepam (logP = 2.9, 2.5 ng/mL), and solvent : 20% aqueous methanol solution); and a mixed solution of low-polarity solute molecules (everolimus (logP = 3.4, 20 ng/mL), rapamycin (logP = 3.5, 20 ng/mL), dibutyl phthalate (logP = 4.7, 20 ng/mL), and solvent : 50% aqueous methanol solution).

Solute adsorption was evaluated by the following method. 200 $\mu$L of methanol and then 200 $\mu$L of pure water were applied to the solid phase extraction plate filled with the heterocyclic-ring-containing copolymer adsorbent or the amphiphatic copolymer adsorbent. Next, 100 $\mu$L of a solution was added to a plate, the plate was left to stand for 1 minute, and then the solution was applied by suction. Next, 200 $\mu$L of pure water was applied to the plate and then the adsorbent was washed. After washing, 100 $\mu$L of methanol was applied to the plate, and then solutes adsorbed to the adsorbent were recovered. The percentage accounted for by the amount of each solute recovered by the procedure with respect to the amount of the solutes that has been introduced for evaluation was defined as the recovery rate of the solute resulting from solid phase extraction.

Furthermore, the amount of serum phospholipid adsorbed by the heterocyclic-ring-containing copolymer adsorbent was evaluated by the following method. 200 $\mu$L of methanol and then 200 $\mu$L of pure water were applied to a solid phase extraction plate filled with the heterocyclic-ring-containing copolymer adsorbent. Next, 100 $\mu$L of commercially available control serum was added to the plate, the plate was left to stand for 1 minute, and then the solution was applied by suction. Next, 200 $\mu$L of pure water was applied to the plate, and then the adsorbent was washed. After washing, 100 $\mu$L of methanol was applied to the plate, the peak height of the signal strength of LC-MS corresponding to the mass-to-charge ratio (m/z496) of lysophosphatidylcholine or the mass-to-charge ratio (m/z758) of phosphatidylcholine was designated as the amount of adsorbed phosphatidylcholine. Here, the content of serum phosphatidylcholine cannot be precisely identified, so that it is difficult to evaluate the absolute amount of adsorbed phosphatidylcholine. In the Examples, the highest peak height of signal strength (from among data obtained by performing phospholipid adsorption under the same conditions) was designated as 100%. The levels of adsorption of phosphatidylcholine were compared based on relative signal strength.

Upon evaluation of the elution solutions of some low-polarity solute molecules, each resultant was dissolved again in 100 $\mu$L of a 20% aqueous methanol solution after drying under vacuum. 5 $\mu$L of the solution was subjected to quantitative determination of solutes by LC-MS. Regarding the elution solutions of high-polarity solute molecules, moderate-polarity solute molecules, and low-polarity solute molecules, 10 $\mu$L of each solution was subjected to quantitative determination of solutes by FIA-MS measurement. Each measurement was performed 3 times and the average value was designated as a measurement result. In addition, at the time of LC-MS measurement, a solution supplemented with an internal standard adequately compatible with each target solute was used.

LC-UV measurement was performed using an L-2000 series liquid chromatograph (Hitachi High-Technologies Corporation) (a model L-2100 pump (low-pressure gradient, with a degasser), a model L-2200 autosampler (with a cooling unit), a model L-2400 UV detector (with a semimicroflow cell), and a model D-2000 HPLC system manager). Capcell PAK C18 MG (Shiseido Co., Ltd.) (particle size of 3 $\mu$m, inside diameter of 2.0 mm x length of 75 mm) was used as a column for the LC part.

LC-MS measurement was performed using an L-2000 series liquid chromatograph (Hitachi High-Technologies Corporation) (a model L-2100 pump (low-pressure gradient, with a degasser), a model L-2200 autosampler (with a cooling unit), a model D-2000 HPLC system manager + a 3200Qtrap mass spectrometer (Applied Biosystems)) in combination. Capcell PAK C 18 MG (Shiseido Co., Ltd.) (particle size of 3 $\mu$m, inside diameter of 2.0 mm x length of 75 mm) was used as a column for the LC part. Ionization was performed by electrospray ionization and positive ion measurement. Mass spectroscopy scanning was performed with a mode of mass scan (MS) + product ion scan (MS/MS). LC-MS measurement conditions are as follows.

Eluent: solution A (10 mM ammonium acetate/acetonitrile = 90%/10%), solution B (acetonitrile), and solution C (isopropyl alcohol)

Gradient conditions (solution A/solution B/solution C): 0 min (70%/30%/0%), 10 min (0%/100%/0%), 15 min (0%/0%/100%), 23 min (0%/0%/100%), 23.1 min (70%/30%/0%), and 30 min (70%/30%/0%) Flow rate: 0.2 mL/min

Injection volume of sample: 5 $\mu$L

Measurement time: 30 min

FIA-MS measurement was performed using an L-2000 series liquid chromatograph (Hitachi High-Technologies Corporation) (a model L-2100 pump (low-pressure gradient, with a degasser), a model L-2200 autosampler (with a cooling unit), a model D-2000 HPLC system manager + a 3200Qtrap mass spectrometer (Applied Biosystems)) in combination. Ionization was performed by electrospray ionization and positive ion measurement. Mass spectroscopy scanning was performed with a mode of multiple reaction monitoring (MRM). FIA-MS measurement conditions are as follows.

Eluent: 10 mM ammonium acetate/acetonitrile = 90%/10%
Flow rate: 0.1 mL/min
Injection volume of sample: 10 $\mu$L
Measurement time: 2.0 min

(Example 1) Preparation of divinylbenzene-triallyl isocyanurate copolymer

2.0 g of hydroxy propylcellulose (HPC (Aldrich) with an average molecular weight of up to 10,000 and viscosity of 5 cP (2 wt% aqueous solution, 20°C)) and 100 mL of water were added to a 500-mL separable flask, and then the solution was agitated until complete dissolution. Next, 7.84 g (0.06 mol) of divinylbenzene (DVB, Aldrich, 80% divinylbenzene + 19% ethyl vinyl benzene mixture), 14.95 g (0.06 mol) of triallyl isocyanurate (TAIC, Tokyo Chemical Industry Co., Ltd.)), 11.5 g of toluene (Wako Pure Chemical Industries, Ltd.), and 0.22 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 200 rpm. After agitation was stopped, filtration was performed using a glass filter so as to separate the polymerization solution from resin particles. After repeatedly washing resin particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that resin particles were obtained (yield of 60.5%, 50% average particle size of 60.9 $\mu$m, 80% average particle size of 87.1 $\mu$m, copolymerization ratio of DVB/TAIC = 73.9 mol%/26.1 mol% (elementary analysis), specific surface area of 251 m$^2$/g, and average pore diameter of 360 Å).

(Example 2) Preparation of divinylbenzene-triallyl cyanurate copolymer (1)

2.0 g of hydroxy propylcellulose (HPC (Aldrich) with an average molecular weight of up to 10,000 and viscosity of 5 cP (2 wt% aqueous solution, 20°C)) and 100 mL of water were added to a 500-mL separable flask, and then the solution was agitated until complete dissolution. Next, 7.8 g (0.06 mol) of divinylbenzene (DVB, Aldrich, 80% divinylbenzene + 19% ethyl vinyl benzene mixture), 15.0 g (0.06 mol) of triallyl cyanurate (TACy, Tokyo Chemical Industry Co., Ltd.)), 11.5 g of toluene (Wako Pure Chemical Industries, Ltd.), and 0.2 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 200 rpm. After agitation was stopped, filtration was performed using a glass filter so as to separate the polymerization solution from resin particles. After repeatedly washing resin particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that resin particles were obtained (yield of 46.8%, 50% average particle size of 39.5 $\mu$m, 80% average particle size of 64.5 $\mu$m, copolymerization ratio of DVB/TACy = 85.5 mol%/14.5 mol% (elementary analysis), specific surface area of 436 m$^2$/g, and average pore diameter of 658 Å).

(Example 3) Preparation of divinylbenzene-triallyl cyanurate copolymer (2)

6.0 g of hydroxy propylcellulose (HPC (Aldrich) with an average molecular weight of up to 10,000 and viscosity of 5 cP (2 wt% aqueous solution, 20°C)) and 200 mL of water were added to a 500-mL separable flask, and then the solution was agitated until complete dissolution. Next, 12.5 g (0.10 mol) of divinylbenzene (DVB, Aldrich, 80% divinylbenzene + 19% ethyl vinyl benzene mixture), 6.0 g (0.02 mol) of triallyl cyanurate (TACy, Tokyo Chemical Industry Co., Ltd.)), 8.0 g of toluene (Wako Pure Chemical Industries, Ltd.), and 0.2 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 400 rpm. After agitation was stopped, filtration was performed using a glass filter so as to separate the polymerization solution from resin particles. After repeatedly washing resin particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that resin particles were obtained (yield of 75.0%, 50% average particle size of 70.9 $\mu$m, 80% average particle size of 94.9 $\mu$m, copolymerization ratio of DVB/TACy = 93.9 mol%/6.1 mol% (elementary analysis), specific surface area of 620 m$^2$/g, and average pore diameter of 116 Å).

(Example 4) Preparation of divinylbenzene-triallyl cyanurate copolymer (3)

6.0 g of hydroxy propylcellulose (HPC (Aldrich) with an average molecular weight of up to 10,000 and viscosity of 5 cP (2 wt% aqueous solution, 20°C)) and 200 mL of water were added to a 500-mL separable flask, and then the solution was agitated until complete dissolution. Next, 11.0 g (0.08 mol) of divinylbenzene (DVB, Aldrich, 80% divinylbenzene + 19% ethyl vinyl benzene mixture), 9.0 g (0.04 mol) of triallyl cyanurate (TACy, Tokyo Chemical Industry Co., Ltd.)), 8.0 g of toluene (Wako Pure Chemical Industries, Ltd.), and 0.2 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 400 rpm. After agitation was stopped, filtration was performed using a glass filter so as to separate the polymerization solution from resin particles. After repeatedly washing resin particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that resin particles were obtained (yield of 53.4%, 50% average particle size of 61.9 $\mu$m, 80% average particle size of 87.6 $\mu$m, copolymerization ratio of DVB/TACy = 91.4 mol%/8.6 mol% (elementary analysis), specific surface area of 598 m$^2$/g, and average pore diameter of 102 Å).

(Example 5) Preparation of divinylbenzene-triallyl cyanurate copolymer (4)

8.0 g of hydroxy propylcellulose (HPC (Aldrich) with an average molecular weight of up to 10,000 and viscosity of 5 cP (2 wt% aqueous solution, 20°C)) and 200 mL of water were added to a 500-mL separable flask, and then the solution was agitated until complete dissolution. Next, 11.0 g (0.08 mol) of divinylbenzene (DVB, Aldrich, 80% divinylbenzene + 19% ethyl vinyl benzene mixture), 9.0 g (0.04 mol) of triallyl cyanurate (TACy, Tokyo Chemical Industry Co.,

Ltd.)), 8.0 g of toluene (Wako Pure Chemical Industries, Ltd.), and 0.2 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 300 rpm. After agitation was stopped, filtration was performed using a glass filter so as to separate the polymerization solution from resin particles. After repeatedly washing resin particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that resin particles were obtained (yield of 58.8%, 50% average particle size of 77.0 $\mu$m, 80% average particle size of 96.3 $\mu$m, copolymerization ratio of DVB/TACy = 89.5 mol%/10.3 mol% (elementary analysis), specific surface area of 521 m$^2$/g, and average pore diameter of 95 Å).

(Example 6) Preparation of divinylbenzene-triallyl cyanurate copolymer (5)

8.0 g of hydroxy propylcellulose (HPC (Aldrich) with an average molecular weight of up to 10,000 and viscosity of 5 cP (2 wt% aqueous solution, 20°C)) and 200 mL of water were added to a 500-mL separable flask, and then the solution was agitated until complete dissolution. Next, 11.0 g (0.08 mol) of divinylbenzene (DVB, Aldrich, 80% divinylbenzene + 19% ethyl vinyl benzene mixture), 9.0 g (0.04 mol) of triallyl cyanurate (TACy, Tokyo Chemical Industry Co., Ltd.)), 6.0 g of toluene (Wako Pure Chemical Industries, Ltd.), and 0.2 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 400 rpm. After agitation was stopped, filtration was performed using a glass filter so as to separate the polymerization solution from resin particles. After repeatedly washing resin particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that resin particles were obtained (yield of 66.2%, 50% average particle size of 72.1 $\mu$m, 80% average particle size of 97.1 $\mu$m, copolymerization ratio of DVB/TACy = 88.8 mol%/11.2 mol% (elementary analysis), specific surface area of 539 m$^2$/g, and average pore diameter of 102 Å).

(Example 7) Preparation of divinylbenzene-triallyl cyanurate copolymer (6)

6.0 g of hydroxy propylcellulose (HPC (Aldrich) with an average molecular weight of up to 10,000 and viscosity of 5 cP (2 wt% aqueous solution, 20°C)) and 200 mL of water were added to a 500-mL separable flask, and then the solution was agitated until complete dissolution. Next, 5.5 g (0.05 mol) of divinylbenzene (DVB, Aldrich, 80% divinylbenzene + 19% ethyl vinyl benzene mixture), 17.9 g (0.07 mol) of triallyl cyanurate (TACy, Tokyo Chemical Industry Co., Ltd.)), 6.0 g of toluene (Wako Pure Chemical Industries, Ltd.), and 0.2 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 300 rpm. After agitation was stopped, filtration was performed using a glass filter so as to separate the polymerization solution from resin particles. After repeatedly washing resin particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that resin particles were obtained (yield of 62.9%, 50% average particle size of 44.9 $\mu$m, 80% average particle size of 72.8 $\mu$m, copolymerization ratio of DVB/TACy = 85.5 mol%/14.5 mol% (elementary analysis), specific surface area of 312 m$^2$/g, and average pore diameter of 361 Å).

(Example 8) Preparation of divinylbenzene-triallyl cyanurate copolymer (7)

8.0 g of hydroxy propylcellulose (HPC (Aldrich) with an average molecular weight of up to 10,000 and viscosity of 5 cP (2 wt% aqueous solution, 20°C)) and 200 mL of water were added to a 500-mL separable flask, and then the solution was agitated until complete dissolution. Next, 11.0 g (0.08 mol) of divinylbenzene (DVB, Aldrich, 80% divinylbenzene + 19% ethyl vinyl benzene mixture), 9.0 g (0.04 mol) of triallyl cyanurate (TACy, Tokyo Chemical Industry Co., Ltd.)), 8.0 g of toluene (Wako Pure Chemical Industries, Ltd.), and 0.3 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 400 rpm. After agitation was stopped, filtration was performed using a glass filter so as to separate the polymerization solution from resin particles. After repeatedly washing resin particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that resin particles were obtained (yield of 76.7%, 50% average particle size of 53.4 $\mu$m, 80% average particle size of 67.3 $\mu$m, copolymerization ratio of DVB/TACy = 79.3 mol%/20.7 mol% (elementary analysis), specific surface area of 579 m$^2$/g, and average pore diameter of 96 Å).

(Example 9) Preparation of divinylbenzene-triallyl cyanurate copolymer (8)

6.0 g of hydroxy propylcellulose (HPC (Aldrich) with an average molecular weight of up to 10,000 and viscosity of 5 cP (2 wt% aqueous solution, 20°C)) and 200 mL of water were added to a 500-mL separable flask, and then the solution was agitated until complete dissolution. Next, 7.8 g (0.06 mol) of divinylbenzene (DVB, Aldrich, 80% divinylbenzene + 19% ethyl vinyl benzene mixture), 15.0 g (0.06 mol) of triallyl cyanurate (TACy, Tokyo Chemical Industry Co., Ltd.)), 8.0 g of toluene (Wako Pure Chemical Industries, Ltd.), and 0.3 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 400 rpm. After agitation was stopped, filtration was performed using a glass filter so as to separate the polymerization solution from resin particles. After repeatedly washing resin particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that resin particles were obtained (yield of 76.7%, 50% average particle size of 54.0 $\mu$m, 80% average particle size of 72.3 $\mu$m, copolymerization ratio of DVB/TACy = 66.5 mol%/33.4 mol% (elementary analysis), specific surface area of 108 m$^2$/g, and average pore diameter of 28 Å).

(Example 10) Preparation of heterocyclic-ring-containing copolymer monolith column

12.5 g (0.10 mol) of divinylbenzene (DVB, Aldrich, 80% divinylbenzene + 19% ethyl vinyl benzene mixture), 6.0 g (0.02 mol) of triallyl cyanurate (TACy, Tokyo Chemical Industry Co., Ltd.), 10.0 g of toluene (Wako Pure Chemical Industries, Ltd.), and 0.3 g of azoisobutyronitrile (AIBN, Tokyo Chemical Industry Co., Ltd.) were mixed, and then the solution was subjected to nitrogen substitution. 20 $\mu$L of a monomer solution was poured into a template having the same shape as that of a filling unit of the solid phase extraction plate. Bulk polymerization was performed in a stream of nitrogen at 80°C for 6 h. The thus recovered template (that is, a monolith column filling material) was immersed in and washed with 2-butanone (Wako Pure Chemical Industries, Ltd.), toluene (Wako Pure Chemical Industries, Ltd.), and then 2-butanone, in that order. After drying at room temperature, drying under reduced pressure was performed at 90°C for 15 h, so that the monolith column filling material was obtained (copolymerization ratio of DVB/TACy = 87.8 mol%/12.2 mol% (elementary analysis)).

(Example 11) Preparation of divinylbenzene-triallyl cyanurate copolymer (50% average particle size > 80 $\mu$m)

6.0 g of hydroxy propylcellulose (HPC (Aldrich) with an average molecular weight of up to 10,000 and viscosity of 5 cP (2 wt% aqueous solution, 20°C)) and 200 mL of water were added to a 500-mL separable flask, and then the solution was agitated until complete dissolution. Next, 11.0 g (0.08 mol) of divinylbenzene (DVB, Aldrich, 80% divinylbenzene + 19% ethyl vinyl benzene mixture), 9.0 g (0.04 mol) of triallyl cyanurate (TACy, Tokyo Chemical Industry Co., Ltd.)), 3.0 g of toluene (Wako Pure Chemical Industries, Ltd.), and 0.2 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 400 rpm. After agitation was stopped, filtration was performed using a glass filter so as to separate the polymerization solution from resin particles. After repeatedly washing resin particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that resin particles were obtained (yield of 66.7%, 50% average particle size of 83.6 $\mu$m, 80% average particle size of 129.9 $\mu$m, copolymerization ratio of DVB/TACy = 88.8 mol%/11.2 mol% (elementary analysis), specific surface area of 539 m$^2$/g, and average pore diameter of 102 Å).

(Example 12) Preparation of divinylbenzene-triallyl cyanurate copolymer (50% average particle size < 80 $\mu$m, 80% average particle size > 100 $\mu$m)

4.0 g of hydroxy propylcellulose (HPC (Aldrich) with an average molecular weight of up to 10,000 and viscosity of 5 cP (2 wt% aqueous solution, 20°C)) and 200 mL of water were added to a 500-mL separable flask, and then the solution was agitated until complete dissolution. Next, 12.5 g (0.10 mol) of divinylbenzene (DVB, Aldrich, 80% divinylbenzene + 19% ethyl vinyl benzene mixture), 6.0 g (0.02 mol) of triallyl cyanurate (TACy, Tokyo Chemical Industry Co., Ltd.)), 4.0 g of toluene (Wako Pure Chemical Industries, Ltd.), and 0.3 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 300 rpm. After agitation was stopped, filtration was performed using a glass filter so as to separate the polymerization solution from resin particles. After repeatedly washing resin particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that resin particles were obtained (yield of 84.5%, 50% average particle size of 54.9 $\mu$m, 80% average particle size of 103.1 $\mu$m, copolymerization ratio of DVB/TACy = 86.8 mol%/13.2 mol% (elementary analysis), specific surface area of 412 m$^2$/g, and average pore diameter of 153 Å).

(Comparative example) Divinylbenzene-N-vinylpyrrolidone copolymer

As a comparative example, a resin copolymer of divinylbenzene (DVB) and N-vinylpyrrolidone (NVP) was used. 2.0 g of hydroxy propylcellulose (HPC (Aldrich) with an average molecular weight of up to 10,000, viscosity of 5 cP (2 wt% aqueous solution, 20°C)) and 100 mL of water were added to a 500-mL separable flask and then the solution was agitated until complete dissolution. Next, 17.5 g (0.14 mol) of divinylbenzene (DVB, Aldrich, 80% divinylbenzene + 19% ethyl vinyl benzene mixture), 10.2 g (0.09 mol) of N-vinylpyrrolidone (NVP, Tokyo Chemical Industry Co., Ltd.), 24.2 g of toluene (Wako Pure Chemical Industries, Ltd.), and 0.2 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The polymerization system was agitated with agitating blades for 30 minutes while performing nitrogen substitution. After the solution within the flask reached a homogenous dispersion state, polymerization was performed at 70°C for 20 h with an agitating speed of 300 rpm. After agitation was stopped, filtration was performed using a glass filter so as to separate the polymerization solution from resin particles. After repeatedly washing the resin particles with pure water to completely remove the surfactant, washing was further repeated using 2-butanone (Wako Pure Chemical Industries, Ltd.), toluene (Wako Pure Chemical Industries, Ltd.), and 2-butanone in that order. After drying at room temperature, the resultant was dried under reduced pressure at 90°C for 15 h, so that the resin particles were obtained (yield of 81.2%, 50% average particle size of 66.5 $\mu$m, 80% average particle size of 78.9 $\mu$m, copolymerization ratio of DVB/NVP = 81.7 mol%/18.7 mol% (elementary analysis), specific surface area of 527 m$^2$/g, and average pore diameter of 153 Å).

(Example 13) Comparison of solid phase extraction performance between the heterocyclic-ring-containing copolymer adsorbent and the resin particles of the comparative example

Fig. 1 shows the results of comparing the solid phase extraction performance of the heterocyclic-ring-containing copolymer adsorbents described in Examples 1 and 2 with the same of the resin particles in the comparative example for each solute (phenobarbital, phenytoin, rapamycin, or vancomycin) by LC-MS and FIA-MS. With any heterocyclic-ring-containing copolymer adsorbent described in the Examples, 80% or more of the total amount of each solute (phenobarbital or phenytoin, which is a moderate-polarity solute molecule) could be adsorbed and held, and thus solid phase extraction could be performed. Furthermore, the heterocyclic-ring-containing copolymer adsorbents described in the Examples exhibited a high capacity for recovering vancomycin, which is a high-polarity solute molecule and has a high molecular weight. The above results revealed that the heterocyclic-ring-containing copolymer adsorbents of the present invention are also suitable for solid phase extraction of such a moderate-polarity solute molecule, a high-polarity solute molecule, and a solute having a high molecular weight. The heterocyclic ring backbone has a plurality of heteroatoms.

Hence, it is assumed that hydrophilic adsorption sites capable of adsorbing a solute with higher efficiency than that in the case of a single hydrophilic group were formed, and thus the rates of the recovery of moderate-polarity solute molecules and high-polarity solute molecules by solid phase extraction were increased. Furthermore, plane adsorption sites are thought to be formed through incorporation of the heterocyclic ring structure into the main chain. It is assumed that steric hindrance upon solute adsorption was suppressed so that a molecule having a high molecular weight such as vancomycin could also be easily adsorbed.

On the other hand, the adsorbent comprising the resin particles of the comparative example exhibits decreased performance in the adsorption of particularly moderate-polarity solute molecules and high-polarity solute molecules. Hence, even when similar solid phase extraction treatment was performed, the resulting recovery rate was 80% or less, which was inferior to the recovery rate of the adsorbents of Examples 1 and 2. Furthermore, regarding low-polarity solute molecules, it was observed that the recovery rate tended to decrease for cyclic amphiphatic solute molecules such as rapamycin. This is assumed that functional groups, including a hydrophilic group, existed as side chains that caused steric hindrance, adsorption of cyclic amphiphatic solute molecules such as rapamycin was inhibited, and thus the recovery rate was decreased. As in the present invention, it is assumed that even a solute having a ring structure could also be easily adsorbed since a heterocyclic ring structure providing hydrophilic adsorption sites was incorporated into the main chain, following which steric hindrance upon medicine adsorption was suppressed. Furthermore, upon medicine adsorption, adsorption (hydrophobic interaction) of hydrophobic structures to each other is also an important type of performance in addition to the formation of hydrophilic interaction. Therefore, the ability to recover medicines can be further improved by designing a heterocyclic-ring-containing copolymer adsorbent that has a good balance between hydrophilic interaction and hydrophobic interaction and a good copolymerization ratio of a hydrophilic monomer to a hydrophobic monomer.

As in the above results, solutes could be adsorbed and held with high efficiency because of adsorption by hydrophilic interaction between medicines and heterocyclic-ring-containing copolymers. As revealed by the above results, such an adsorbent containing a specific heterocyclic ring structure is produced, so that the rate of recovering the above solutes can also be improved.

(Example 14) Comparison of heterocyclic-ring-containing copolymer adsorbents regarding the performance of solid phase extraction of solutes having various polarities

Mixed solutions were prepared so that they contained a high-polarity solute molecule (vancomycin (logP = -1.4, 2.5 ng/mL); theophylline (logP = -0.02, 25 ng/mL), solvent : water), moderate-polarity solute molecules (phenobarbital (logP = 1.7, 25 ng/mL), phenytoin (logP = 2.5, 25 ng/mL), carbamazepine (logP = 2.5, 2.5 ng/mL), and diazepam (logP = 2.9, 2.5 ng/mL), solvent : 20% aqueous methanol solution), low-polarity solute molecules (everolimus (logP = 3.4, 20 ng/mL), rapamycin (logP = 3.5, 20 ng/mL), and dibutyl phthalate (logP = 4.7, 20 ng/mL), solvent : 50% aqueous methanol solution)). Solid phase extraction was performed using the heterocyclic-ring-containing copolymer adsorbents described in Examples 1 and 2, and then solute recovery rates were evaluated by LC-MS and FIA-MS. The results are summarized and shown in Fig. 2 and Table 1. In any adsorbent of Examples 1 and 2, 80% or more of the amount of each solute introduced could be adsorbed and held. Thus, solid phase extraction could be performed regardless of solute polarity. Also, with the use of LC-MS and FIA-MS, moderate-polarity solute molecules and low-polarity solute molecules could be recovered with high efficiency from mixed solutions as systems. It was demonstrated that the adsorbents of Examples 1 and 2 are also applicable to analysis of a solution containing a plurality of solutes.

Table 1

|  | Solvent | Solute name | Example 1 | Example 2 |
|---|---|---|---|---|
| High-polarity solute | Water | Vancomycin (2.5ng/mL) | 98% | 89% |
|  |  | Theophylline (25ng/mL) | 90% | 100% |
| Moderate-polarity solute | 20% Aqueous methanol solution | Phenobarbital (25ng/mL) | 90% | 96% |
|  |  | Phenytoin (2.5ng/mL) | 90% | 98% |
|  |  | Carbamazepine (25ng/mL) | 90% | 97% |
|  |  | Diazepam (2.5ng/mL) | 83% | 100% |
| Low-polarity solute | 50% Aqueous methanol solution | Everolimus (20ng/mL) | 83% | 91% |
|  |  | Rapamycin (20ng/mL) | 86% | 100% |
|  |  | Dibutyl phthalate (20ng/mL) | 94% | 96% |

As described above, the divinylbenzene-triallyl cyanurate copolymer (Example 2) exhibited particularly better ability to recover medicines compared with the divinylbenzene-triallyl isocyanurate copolymer (Example 1). This is because the heterocyclic ring main chain structure of triallyl cyanurate has higher affinity for medicine adsorption than the other. Hereinafter, the examples of the divinylbenzene-triallyl cyanurate copolymer as a representative example of the present invention are described.

A heterocyclic ring structure itself is a structure that is also observed in medicines and is thought to have high affinity for medicines. Through the control of the molecular structure of such a heterocyclic ring, the formation of a specific structure becomes possible using intermolecular interactions such as association, hydrogen bonding, and self-organization. Such a heterocyclic ring can also be expected to be applied to, in addition to the polar structure of an adsorbent, provision of structural selectivity and molecular recognition functions.

(Example 15) Evaluation of the amount of adsorbed phospholipid (phosphatidylcholine)

Components to be analyzed by solute analysis of serum, a whole blood component, and the like include impurity components such as phospholipids. An impurity such as phospholipid is a component (of ion suppression) that inhibits ionization of a measurement subject upon mass spectroscopy. The effect of ion suppression to decrease sensitivity is insignificant in the case of an apparatus with which the chromatographic separation process such as LC-MS is performed since a measurement subject is separated from an impurity component(s). However, in the case of analysis using a flow injection system such as FIA-MS, the effect of the same is particularly significant. In this example, a method for reducing adsorption of impurity components such as phospholipids is disclosed.

The amounts of phospholipids (lysophosphatidylcholine (LPC) and phosphatidylcholine (PC)) adsorbed by divinylbenzene-triallyl cyanurate copolymers described in Examples 2 to 9 were evaluated. Table 2 shows the results and Fig. 3 shows the relationship between the triallyl cyanurate (TACy) copolymerization ratio and the relative intensity found from the peak height of the signal strength of LC-MS corresponding to the mass-to-charge ratio (m/z758) of LPC or PC. Here, the relative intensity of LPC or PC subjected to adsorption with the copolymers of other examples was evaluated by designating as 100% the peak height of Example 9 (TACy copolymerization ratio = 33.4 mol%) that was the highest peak height of the signal strength of LC-MS. The results are as follows. With the use of serum samples treated under the same conditions, when the amount of the introduced heterocyclic ring main chain structure (TACy copolymerization ratio) was increased, the relative intensity of the phospholipid (LPC or PC) was increased and the amount of adsorption due to solid phase extraction tended to be increased. The results indicate the following. In the case of solid phase extraction of a solution containing a polar impurity such as a phospholipid that is contained in serum or the like, the ability to adsorb even an unintentional impurity such as a phospholipid having a polar group can be enhanced by enhancing the hydrophilicity (or the polarity of the copolymer) of the entire heterocyclic-ring-containing copolymer. Conversely, it is suggested that the lower the TACy copolymerization ratio, the lower the relative intensity of the phospholipid (LPC or PC) and less adsorption occurs. Therefore, in order to obtain an adsorbent with reduced chances of impurity adsorption, it is desirable that the TACy copolymerization ratio be suppressed to as low a level as possible.

Table 2

|  | Example 2 | Example 3 | Example 4 | Example 5 | Example 6 | Example 7 | Example 8 | Example 9 |
|---|---|---|---|---|---|---|---|---|
| TACy copolymerization ratio (mol%) | 14.5 | 6.1 | 8.6 | 10.3 | 11.2 | 14.5 | 20.7 | 33.4 |
| Relative intensity of LPC signal peak (m/z 496 LC-MS) | 87% | 39% | 16% | 10% | 65% | 73% | 53% | 100% |
| Relative intensity of PC signal peak (m/z 758 LC-MS) | 61% | 45% | 24% | 13% | 55% | 69% | 45% | 100% |

Meanwhile, a decrease in the TACy copolymerization ratio may deteriorate the original solid phase extraction performance of the heterocyclic-ring-containing copolymer adsorbent. Major effects in highly efficient adsorption of medicines are due to introduction of a heterocyclic ring main chain structure. Hence, a decrease in medicine recovery performance with a decrease in the level of phospholipid adsorption is an issue of concern. With regard to this concern, mixed solutions of solute molecules of the divinylbenzene-triallyl cyanurate copolymers of Examples 3, 5, and 7 (Example 3: TACy copolymerization ratio = 6.1 mol%; Example 5: TACy copolymerization ratio = 10.3 mol%; Example 7: TACy copolymerization ratio = 14.5 mol%) were compared for ability to perform solid phase extraction of solutes in a manner similar to Example 13. Mixed solutions were prepared, so that they contained a high-polarity solute molecule (vancomycin (logP = -1.4, 2.5 ng/mL), theophylline (logP = -0.02, 25 ng/mL), solvent : water), moderate-polarity solute molecules (phenobarbital (logP = 1.7, 25 ng/mL), phenytoin (logP = 2.5, 25 ng/mL), carbamazepine (logP = 2.5, 2.5 ng/mL), diazepam (logP = 2.9, 2.5 ng/mL), solvent : 20% aqueous methanol solution), and low-polarity solute molecules (everolimus (logP = 3.4, 20 ng/mL), rapamycin (logP = 3.5, 20 ng/mL), dibutyl phthalate (logP = 4.7, 20 ng/mL), solvent : 50% aqueous methanol solution)). Solid phase extraction was performed using the heterocyclic-ring-containing copolymer adsorbents obtained in Examples 3, 5, and 7, and then the solute recovery rates were evaluated by FIA-MS. The results are each shown in Fig. 4 and Table 3. The copolymers having different copolymerization ratios exhibited solute recovery rates of 80% or more for all solutes. It was revealed that within the copolymerization ratio range of the present invention, high ability to recover medicines can be maintained regardless of TACy copolymerization ratio. In particular, the copolymer of Example 3 with the low amount of introduced TACy exhibited high ability to recover solutes while suppressing impurity adsorption. The heterocyclic ring structure of the present invention is a molecular structure containing a plurality of hydrophilic adsorption sites that enable highly efficient adsorption into the heterocyclic ring. Specifically, a polar group(s) contained in each solute can be adsorbed to and held on a plurality of adsorption sites within the heterocyclic ring structure. Accordingly, it is assumed that even with a small amount of hydrophilic structure, hydrophilic interaction with the hydrophilic part of a solute is exhibited with high efficiency. Furthermore, it is assumed that the introduction of a hydrophilic structure as a heterocyclic ring main chain structure suppresses the effects such as steric hindrance, and thus the introduction of even a small amount of hydrophilic structure can lead to highly efficient solute adsorption.

(Example 16) Evaluation of solid phase extraction performance using heterocyclic-ring-containing copolymer monolith column

Mixed solutions were prepared so that they contained a high-polarity solute molecule (vancomycin (logP = -1.4, 2.5 ng/mL), theophylline (logP = -0.02, 25 ng/mL), solvent : water), moderate-polarity solute molecules (phenobarbital (logP = 1.7, 25 ng/mL), phenytoin (logP = 2.5, 25 ng/mL), carbamazepine (logP = 2.5, 2.5 ng/mL), and diazepam (logP = 2.9, 2.5 ng/mL), solvent : 20% aqueous methanol solution), low-polarity solute molecules (everolimus (logP = 3.4, 20 ng/mL), rapamycin (logP = 3.5, 20 ng/mL), and dibutyl phthalate (logP = 4.7, 20 ng/mL), solvent : 50% aqueous methanol solution)). Solid phase extraction was performed using the divinylbenzene-triallyl cyanurate copolymer monolith column of Example 10, and then solute recovery rates were evaluated by FIA-MS. The results are shown in Fig. 5 and Table 3. Also in the case of the monolith column, 80% or more of the amount of each solute introduced could be adsorbed and held in a manner similar to that in the case of a particulate adsorbent. Thus, solid phase extraction could be performed.
Furthermore, a heterocyclic-ring-containing copolymer is prepared to have a film-shaped porous polymer membrane structure by bulk polymerization, solution polymerization, or solid phase polymerization. Thus, it can be applied to a carrier for thin-layer chromatography or the like or a solid phase adsorption film or the like for a simple test, for example. The heterocyclic-ring-containing copolymer of the present invention is able to exhibit adsorption performance in accordance with the above various copolymer shapes and morphologies.

(Example 17) Comparison of differences in solid phase extraction performance depending on the heterocyclic-ring-containing copolymer adsorbent particle size

The relationship among particle size, particle size distribution, and medicine recovery rate of divinylbenzene-triallyl isocyanurate copolymer adsorbent particles is as described below.
The results obtained using the divinylbenzene-triallyl cyanurate copolymers described in Examples 5, 11, and 12 are as described below. Fig. 6 shows the recovery rate (defined as solute loss) of solute components in each solution (100 μL) (obtained after solute adsorption) and the same in pure water (200 μL) added for washing the adsorbent. Fig. 7 shows the amounts of solute components eluted and recovered with methanol from the adsorbents. In the case of the heterocyclic-ring-containing copolymer of Example 5, the particle size distribution of which was within the specified range, no solute loss was observed and most solute components could be recovered by the addition of methanol.
On the other hand, in the case of the heterocyclic-ring-containing copolymers of Examples 11 and 12, solute loss occurred. Thus it was confirmed that the medicine recovery rate tended to decrease (Table 3). In the case of the adsorbent particles of Example 11 having large particle sizes, solution outflow may take place before adsorption during the solution introduction process, and thus sufficient solid phase extraction performance cannot be exhibited because of the low effective surface area of the adsorbent. Also, in the case of the particles of Example 12 having a large particle size distribution and containing many particles of 100 $\mu$m or more, solid phase extraction performance tended to be lowered. Both adsorbent particles of Examples 11 and 12 are porous particles having a specific surface area of 400 m$^2$/g or more. However, the adsorbents of Examples 11 and 12 contain many large particles with a particle size of 100 $\mu$m or more, as shown in Fig. 8. In the case of such an adsorbent containing many particles having a particle size of 100 $\mu$m or more, only the surfaces of particles are involved in adsorption upon introduction of a solution, so that the solution may be unable to penetrate the particles. As described above, extraction efficiency can be improved by controlling the particle size distribution of adsorbent particles so as to lower the content of particles of 100 $\mu$m or more.

Table 3

| | Solvent | Solute name | Example 3 | Example 5 | Example 7 | Example 10 | Example 11 | Example 12 |
|---|---|---|---|---|---|---|---|---|
| High-polarity solute | Water | Vancomycin (2.5ng/mL) | 89% | 88% | 100% | 89% | 60% | 24% |
| | | Theophylline (25ng/mL) | 86% | 88% | 100% | 92% | 85% | 37% |
| Moderate-polarity solute | 20%Aqueous methanol solution | Phenobarbital (25ng/mL) | 100% | 100% | 100% | 90% | 87% | 82% |
| | | Phenytoin (2.5ng/mL) | 86% | 92% | 87% | 84% | 71% | 54% |
| | | Carbamazepine (25ng/mL) | 85% | 81% | 83% | 82% | 79% | 56% |
| | | Diazepam (2.5ng/mL) | 84% | 82% | 83% | 86% | 69% | 58% |
| Low-polarity solute | 50%Aqueous methanol solution | Everolimus (20ng/mL) | 85% | 83% | 95% | 84% | 61% | 44% |
| | | Rapamycin (20ng/mL) | 95% | 86% | 93% | 83% | 68% | 48% |
| | | Dibutyl phthalate (20ng/mL) | 94% | 92% | 90% | 87% | 71% | 36% |

EP 2 564 923 A1

The 50% average particle size of copolymer particles is preferably within the range of 0.5 μm to 100 μm in order to ensure an effective surface area involved in adsorption and appropriate filling density for an adsorbent. When the particle size is too high, the effective surface area of the adsorbent is lowered, solution outflow takes place before adsorption during the solution introduction process, and thus sufficient solid phase extraction performance cannot be exhibited.

Furthermore, even in the case of particles having a small 50% average particle size as in Example 12, solid phase extraction performance may be lowered when the particles have a large particle size distribution and include many particles of 100 μm or more. Only the surfaces of particles are involved in adsorption upon solution introduction in the case of particles of 100 μm or more. Hence, a major factor thereof inferred herein is that a solution does not penetrate into the particles. As a result of intensive studies concerning solid phase extraction conditions, it was discovered that extraction efficiency can be even more improved by controlling the particle size distribution of adsorbent particles to lower the content of particles of 100 μm or more. Specifically, under more desired particle size distribution conditions, the 50% average particle size of particles ranges from 0.5 μm to 80 μm and the 80% average particle size of particles ranges from 0.5 μm to 100 μm. In the case of particles that satisfy the conditions, a solution penetrates into the particles, and the effective surface area of the adsorbent involved in adsorption is increased, so that more efficient solute adsorption becomes possible.

Meanwhile, when the particle size is too low, pressure loss is significantly increased in the flow path and thus the efficiency of solid phase extraction is lowered. Accordingly, an example of a method for controlling particle size distribution within the range appropriate for solid phase extraction is a method by which particles are prepared under polymerization conditions so that the particle size is within a predetermined range as in the case of the example. Furthermore, the particle size distribution can be controlled so that it is within a narrow range using known classification techniques (e.g., classification sieving, wet classification, and dry classification) in combination.

(Example 18) Preparation of divinylbenzene-triallyl isocyanurate copolymer

2.0 g of hydroxy propylcellulose (HPC (Aldrich) with an average molecular weight of up to 10,000 and viscosity of 5 cP (2 wt% aqueous solution, 20°C)) and 100 mL of water were added to a 500-mL separable flask, and then the solution was agitated until complete dissolution. Next, 7.84 g (0.06 mol) of divinylbenzene (DVB, Aldrich, 80% divinylbenzene + 19% ethyl vinyl benzene mixture), 14.95 g (0.06 mol) of triallyl isocyanurate (TAIC, Tokyo Chemical Industry Co., Ltd.)), 11.5 g of toluene (Wako Pure Chemical Industries, Ltd.), and 0.22 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 200 rpm. After agitation was stopped, filtration was performed using a glass filter so as to separate the polymerization solution from polymer particles. After repeatedly washing polymer particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that the amphiphatic copolymer adsorbent of interest was obtained (yield of 60.5%, particle size of 60.9 μm, and composition ratio of DVB/TAIC = 73.9/26.1 (mol%) (elementary analysis).

(Example 19) Preparation of divinylbenzene-maleic anhydride copolymer

2.0 g of hydroxy propylcellulose (HPC (Aldrich) with an average molecular weight of up to 10,000 and viscosity of 5 cP (2 wt% aqueous solution, 20°C)) and 100 mL of water were added to a 500-mL separable flask, and then the solution was agitated until complete dissolution. Next, 7.84 g (0.06 mol) of divinylbenzene (DVB, Aldrich, 80% divinylbenzene + 19% ethyl vinyl benzene mixture), 5.94 g (0.06 mol) of maleic anhydride (MAn, Tokyo Chemical Industry Co., Ltd.)), 17.2 g of toluene (Wako Pure Chemical Industries, Ltd.), and 0.14 g of azoisobutyronitrile (AIBN, Tokyo Chemical Industry Co., Ltd.) were mixed and then the mixture was heated to 50°C. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 200 rpm. After agitation was stopped, filtration was performed using a glass filter so as to separate the polymerization solution from polymer particles. After repeatedly washing polymer particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that the amphiphatic copolymer adsorbent of interest was obtained (yield of 64.9%, particle size of 57.9 μm, and composition ratio of DVB/MAn = 84.8/15.2 (mol%) (elementary analysis).

(Example 20) Preparation of divinylbenzene-diallyl isophthalate copolymer

2.0 g of hydroxy propylcellulose (HPC (Aldrich) with an average molecular weight of up to 10,000 and viscosity of 5 cP (2 wt% aqueous solution, 20°C)) and 100 mL of water were added to a 500-mL separable flask, and then the solution was agitated until complete dissolution. Next, 7.84 g (0.06 mol) of divinylbenzene (DVB, Aldrich, 80% divinylbenzene + 19% ethyl vinyl benzene mixture), 14.78 g (0.06 mol) of diallyl isophthalate (IPDA, Tokyo Chemical Industry Co., Ltd.)), 11.5 g of toluene (Wako Pure Chemical Industries, Ltd.), and 0.22 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 200 rpm. After agitation was stopped, filtration was performed using a glass filter so as to separate the polymerization solution from polymer particles. After repeatedly washing polymer particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that the amphiphatic copolymer adsorbent of interest was obtained (yield of 40.8%, particle size of 34.2 μm, and composition ratio of DVB/IPDA = 91.3/8.7 (mol%) (elementary analysis).

(Example 21) Preparation of divinylbenzene-tetrahydrofurfuryl acrylate copolymer

8.0 g of hydroxy propylcellulose (HPC (Aldrich) with an average molecular weight of up to 10,000 and viscosity of 5 cP (2 wt% aqueous solution, 20°C)) and 200 mL of water were added to a 500-mL separable flask, and then the solution was agitated until complete dissolution. Next, 7.84 g (0.06 mol) of divinylbenzene (DVB, Aldrich, 80% divinylbenzene + 19% ethyl vinyl benzene mixture), 9.37 g (0.06 mol) of tetrahydrofurfuryl acrylate (THFA, Tokyo Chemical Industry Co., Ltd.)), 13.8 g of toluene (Wako Pure Chemical Industries, Ltd.), and 0.16 g of azoisobutyronitrile (AIBN, Tokyo Chemical Industry Co., Ltd.) were mixed and then the mixture was heated to 50°C. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 200 rpm. After agitation was stopped, filtration was performed using a glass filter so as to separate the polymerization solution from polymer particles. After repeatedly washing polymer particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that the amphiphatic copolymer adsorbent of interest was obtained (yield of 81.9%, particle size of 42.2 μm, and composition ratio of DVB/THFA = 64.7/35.3 (mol%) (elementary analysis).

(Example 22) Preparation of divinylbenzene-triallyl cyanurate copolymer

2.0 g of hydroxy propylcellulose (HPC (Aldrich) with an average molecular weight of up to 10,000 and viscosity of 5 cP (2 wt% aqueous solution, 20°C)) and 100 mL of water were added to a 500-mL separable flask, and then the solution was agitated until complete dissolution. Next, 7.84 g (0.06 mol) of divinylbenzene (DVB, Aldrich, 80% divinylbenzene + 19% ethyl vinyl benzene mixture), 14.95 g (0.06 mol) of triallyl cyanurate (TACy, Tokyo Chemical Industry Co., Ltd.)), 11.5 g of toluene (Wako Pure Chemical Industries, Ltd.), and 0.22 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 200 rpm. After agitation was stopped, filtration was performed using a glass filter so as to separate the polymerization solution from polymer particles. After repeatedly washing polymer particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that the amphiphatic copolymer adsorbent of interest was obtained (yield of 46.8%, particle size of 39.5 μm, and composition ratio of DVB/TACy = 85.5/14.5 (mol%) (elementary analysis).

(Example 23) Preparation of divinylbenzene-N,N-dimethylacrylamide copolymer

8.0 g of hydroxy propylcellulose (HPC (Aldrich) with an average molecular weight of up to 10,000 and viscosity of 5 cP (2 wt% aqueous solution, 20°C)) and 200 mL of water were added to a 500-mL separable flask, and then the solution was agitated until complete dissolution. Next, 7.84 g (0.06 mol) of divinylbenzene (DVB, Aldrich, 80% divinylbenzene + 19% ethyl vinyl benzene mixture), 5.94 g (0.06 mol) of N,N-dimethylacrylamide (DMAA, Tokyo Chemical Industry Co., Ltd.)), 13.5 g of toluene (Wako Pure Chemical Industries, Ltd.), and 0.14 g of azoisobutyronitrile (AIBN, Tokyo Chemical Industry Co., Ltd.) were mixed. After complete dissolution, the solution was added to the separable flask. A nitrogen-induction tube and a cooling tube were connected to the separable flask. The solution within the polymerization system was agitated with agitating blades for 30 minutes while performing nitrogen substitution. After the solution within the flask reached a homogenous dispersion state, polymerization was performed at 80°C for 6 h with an agitating speed of 300 rpm. After agitation was stopped, filtration was performed using a glass filter so as to separate the polymerization solution from polymer particles. After repeatedly washing polymer particles with pure water to completely remove the surfactant, washing was further repeated using 2-butanone (Wako Pure Chemical Industries, Ltd.), toluene (Wako Pure Chemical Industries, Ltd.), and 2-butanone, in that order. After drying at room temperature, the resultant was dried under reduced pressure at 90°C for 15 h, so that the amphiphatic copolymer adsorbent of interest was obtained (yield of 58.6%, particle size of 78.2 $\mu$m, and composition ratio of DVB/TACy = 85.5/14.5 (mol%) (elementary analysis).

(Example 24) Comparison of solid phase extraction performance between the amphiphatic copolymer adsorbents and the adsorbent of comparative example

Fig. 9 shows the results of comparing the solid phase extraction performance of the amphiphatic copolymer adsorbents prepared in Examples 18 to 23 with the same of the adsorbent of the comparative example for each solute (phenobarbital, phenytoin, or rapamycin) by LC-UV and FIA-MS. With any one of amphiphatic copolymer adsorbents of Examples 18-23, 80% or more of the total amount of each solute (moderate-polarity solute molecules, phenobarbital and phenytoin) could be adsorbed and held, and thus solid phase extraction could be performed. On the other hand, the adsorbent of the comparative example exhibited decreased ability to adsorb particularly moderate-polarity solute molecules and high-polarity solute molecules. Thus, the resulting recovery rate was 80% or less that was inferor to the above results even when similar solid phase extraction had been performed. Furthermore, regarding low-polarity solute molecules, a tendency of decrease in recovery rate was observed for a cyclic amphiphatic solute molecule such as rapamycin. The above results revealed that firm adsorption mediated by hydrophilic interaction is essential for some solute structures, and the recovery rate for such a solute can also be improved by the use of the adsorbent of the present invention containing a high-polarity structure.

(Example 25) Comparison of solid phase extraction performance among amphiphatic copolymer adsorbents for solutes having various polarities

Mixed solutions were prepared so that they contained a high-polarity solute molecule (theophylline (logP = -0.02, 25 ng/mL), solvent : water), moderate-polarity solute molecules (phenobarbital (logP = 1.7, 25 ng/mL), phenytoin (logP = 2.5, 25 ng/mL), carbamazepine solvent (logP = 2.5, 2.5 ng/mL), and diazepam (logP = 2.9, 2.5 ng/mL), solvent : 20% aqueous methanol solution), low-polarity solute molecules (everolimus (logP = 3.35, 20 ng/mL), rapamycin (logP = 3.5, 20 ng/mL), and dibutyl phthalate (logP = 4.7, 20 ng/mL), solvent : 50% aqueous methanol solution)). Solid phase extraction was performed using the amphiphatic copolymer adsorbents of Examples 18 to 23, and then solute recovery rates were evaluated by LC-MS and FIA-MS. The results are summarized and shown in Figs. 10 to 12 and Table 4. With all adsorbents of Examples 18 to 23, 80% or more of the amount of each solute introduced could be adsorbed and held regardless of solute polarity, and thus solid phase extraction could be performed. The result obtained with the use of an eluted solution that had been subjected to solid phase extraction was similar to that obtained by LC-UV, indicating that the adsorbents of Examples 18 to 23 are also applicable to solute analysis by LC-MS. Furthermore, with the use of LC-MS and FIA-MS, it was demonstrated that each solute can be recovered with high efficiency in a system of a mixed solution of moderate-polarity solute molecules and low-polarity solute molecules, and the adsorbents of Examples 18 to 23 are also applicable to analysis of a solution containing a plurality of solutes.

Table 4

Table 4. Evaluation results of solute recovery rates

| | Solvent | Solute name | Example 18 | Example 19 | Example 20 | Example 21 | Example 22 | Example 23 |
|---|---|---|---|---|---|---|---|---|
| High-polarity solute | Water | Theophylline (25ng/mL) | 90% | 90.2% | 93% | 87% | 100% | 90% |
| Moderate-polarity solute | 20% Aqueous methanol solution | Phenobarbital (25ng/mL) | 91% | 87% | 87% | 89% | 94% | 83% |
| | | Carbamazepine (25ng/mL) | 89% | 83% | 90% | 89% | 97% | 84% |
| | | Phenytoin (2.5ng/mL) | 91% | 90% | 92% | 97% | 98% | 86% |
| | | Diazepam (2.5ng/mL) | 83% | 84% | 84% | 100% | 100% | 82% |
| Low-polarity solute | 50% Aqueous methanol solution | Rapamycin (20ng/mL) | 86% | 89% | 93% | 98% | 99% | 91% |
| | | Everolimus (20ng/mL) | 83% | 84% | 89% | 90% | 91% | 87% |
| | | Dibutyl phthalate (20ng/mL) | 94% | 96% | 97% | 97% | 96% | 97% |

Furthremore, as an example of solid phase extraction and quantitative analysis of substances other than medicines such as immunosuppressive agents and anticonvulsants, dibutyl phthalate could be analyzed in the above example. Phthalate ester molecules represented by dibutyl phthalate are mainly used as polyvinyl chloride (PVC) plasticizers, but are subject to restrictions since human's endocrine disturbance because of PVC plasticizers is a concern in recent years. Through solid phase extraction using the heterocyclic-ring-containing copolymer adsorbents and the amphiphatic copolymer adsorbents of the present invention, the adsorbents can be applied to environmental analyses of aqueous solutions, ground water, surface water, soil extracts, and the like, and component analyses of cosmetics, foods, extracts thereof, and the like. Furthermore, a trace of a solute, such as a drug, an insecticide, a herbicide, a poison, a biomolecule, a contaminant, a metabolite thereof, or a degraded product thereof can also be analyzed with high precision. Moreover, solid phase extraction and quantitative analysis can be performed regardless of solute type and solute form such as a single substance or a mixture.

The above results revealed that: solutes having a broad chromatographic polarity range can be isolated using the heterocyclic-ring-containing copolymer adsorbents and the amphiphatic copolymer adsorbents of the present invention; and this makes it possible to perform a highly efficient solid phase extraction method and to construct a system using the solid phase extraction method.

Next, examples are shown below concerning the adsorbent of the third embodiment of the present invention, but they are not limited these examples, the adsorbent can be used through arbitrarily modifications without departing from the scope of the present invention.

Binding of hydrophilic group(s) on the surfaces of the adsorbents produced in the following Examples 24 to 39 and the comparative example was confirmed by infrared (IR) spectrometry. As an IR infrared spectrometer, a Fourier-transform infrared spectrometer (Spectrum 100 (PerkinElmer Co., Ltd.), Attenuated Total Reflection: ATR) was used.

(Example 24)

10 g of polystyrene (MORITEX Corporation, 3040A, SP value $\delta$ (values described in the literature; Polymer Handbook, John Wiley & Sons) = 8.6 to 10.3) particles having an average particle size of 40 $\mu$m was added to a glass plate and oxygen plasma treatment (soft mode) was performed in a PDC210 plasma dry cleaner with an output of 300 W and treatment time of 2 minutes. Next, after plasma treatment, polystyrene particles and ethyl chloroglyoxylate were agitated within a flask. Excess ethyl chloroglyoxylate was removed by filtration. Polystyrene particles after contact were washed with alcohol and then dried. An ester-bond-derived peak was observed by IR spectrometry for polystyrene particles after contact, so that it was confirmed that ethyl glyoxylate had been immobilized via ester bond on the surfaces of polystyrene particles. The ethyl glyoxalate (ester) had an SP value $\delta$ of 11.7 as calculated on the basis of the above formula.

(Example 25)

Polystyrene particles (treated with plasma by a method similar to that of Example 24) and methyl chloroglyoxylate were agitated within a flask. Excess methyl chloroglyoxylate was removed by filtration. Polystyrene particles after contact were washed with alcohol and then dried. An ester-bond-derived peak was observed by IR spectrometry for polystyrene particles after contact, so that it was confirmed that methyl glyoxylate had been immobilized via ester bond on the surfaces of polystyrene particles. The methyl glyoxalate (ester) had an SP value $\delta$ of 12.4 as calculated on the basis of the above formula.

(Example 26)

Polystyrene particles (treated with plasma by a method similar to that of Example 24 were immersed in a methylene chloride solution of thionyl chloride. After evaporation of excess thionyl chloride solution by distillation under reduced pressure, the resultant and the methylene chloride solution of allantoin were agitated within a flask. Excess allantoin/methylene chloride solution was removed by filtratration. Polystyrene particles after contact were washed with alcohol and then dried. An amide-bond-derived peak was observed by IR spectrometry for polystyrene particles after contact, so that it was confirmed that allantoin had been immobilized via amide bond on the surfaces of polystyrene particles. Allantoin had an SP value $\delta$ of 21.1 as calculated on the basis of the above formula.

(Example 27)

Polystyrene particles (treated with plasma by a method similar to that of Example 24) were immersed in a methanol solution of 3-ureidopropyltriethoxysilane. Excess 3-ureidopropyltriethoxysilane solution was removed by filtratration. Polystyrene particles after contact were washed with alcohol and then dried. An silanol-bond-derived peak was observed by IR spectrometry for polystyrene particles after contact, so that it was confirmed that 3-ureidopropyl had been immobilized via silanol bond on the surfaces of polystyrene particles after contact. 3-ureidopropyl had an SP value $\delta$ of 13.8 as calculated on the basis of the above formula.

(Example 28)

Polymethylmethacrylate (Toyobo Co., Ltd., FH-S010, SP value $\delta$ (values described in the literature; Polymer Handbook, John Wiley & Sons) = 9.1 to 9.5) particles having an average particle size of 10 $\mu$m were treated by a method similar to that in Example 24, so that polymethylmethacrylate particles with ethyl glyoxylate (ester) immobilized on the surfaces thereof via ester bond were prepared.

(Example 29)

Polymethylmethacrylate particles (used in Example 28) having an average particle size of 10 $\mu$m were treated by a method similar to that in Example 25, so that polymethylmethacrylate particles with methyl glyoxalate (ester) immobilized on the surfaces thereof via ester bond were prepared.

(Example 30)

Polymethylmethacrylate particles (used in Example 28) having an average particle size of 10 $\mu$m were treated by a method similar to that in Example 26, so that polymethylmethacrylate particles with allantoin immobilized on the surfaces thereof via amide bond were prepared.

(Example 31)

Polymethylmethacrylate particles (used in Example 28) having an average particle size of 10 $\mu$m were treated by a method similar to that in Example 27, so that polymethylmethacrylate particles with 3-ureidopropyl immobilized on the surfaces thereof via silanol bond were prepared.

(Example 32)

Polyethylene (SP value $\delta$ (values described in the literature; Polymer Handbook, John Wiley & Sons) = 7.7 to 8.4) fine powder (Sumitomo Seika Chemicals Co., Ltd., FLO-THENE UF-20S) having a median particle size of 15 $\mu$m to 25 $\mu$m was treated by a method similar to that of Example 24, so that a polyethylene fine powder with ethyl glyoxylate (ester) immobilized onto the surface thereof via ester bond was prepared.

(Example 33)

Polyethylene fine powder (used in Example 32) having an median particle size ranging from 15 $\mu$m to 25 $\mu$m was treated by a method similar to that in Example 25, so that the polyethylene fine powder with methyl glyoxalate (ester) immobilized on the surface thereof via ester bond was prepared.

(Example 34)

Polyethylene fine powder (used in Example 32) having an median particle size ranging from 15 $\mu$m to 25 $\mu$m was treated by a method similar to that in Example 26, so that the polyethylene fine powder with allantoin immobilized on the surface thereof via amide bond was prepared.

(Example 35)

Polyethylene fine powder (used in Example 32) having an median particle size ranging from 15 $\mu$m to 25 $\mu$m was treated by a method similar to that in Example 27, so that the polyethylene fine powder with 3-ureidopropyl immobilized on the surface thereof via silanol bond was prepared.

(Example 36)

10 g of polystyrene (MORITEX Corporation, 3040A, SP value $\delta$ (values described in the literature; Polymer Handbook, John Wiley & Sons) = 8.6 to 10.3) particles having an average particle size of 40 $\mu$m were added to a glass plate and UV ozone treatment was performed under astmospheric conditions using PL21-200 (Sen Lights Corporation). UV irradiation was performed at about 3J/cm$^2$. Next, after UV ozone treatment, polystyrene particles and ethyl chloroglyoxylate were agitated within a flask. Excess ethyl chloroglyoxylate was removed by filtration. Polystyrene particles after contact were washed with alcohol and then dried. An ester-bond-derived peak was observed by IR spectrometry for polystyrene particles after contact, so that it was confirmed that ethyl glyoxylate had been immobilized via ester bond on the surfaces of polystyrene particles.

(Example 37)

Polystyrene particles that had been treated with UV ozone by a method similar to that in Example 36 and methyl chloroglyoxylate were agitated in a flask. Excess methyl chloroglyoxylate was removed by filtration, polystyrene particles were washed with alcohol after contact, and then the resultant was dried. An ester bond-derived peak was observed by IR spectrometry for polystyrene after contact. Thus, it was confirmed that methyl glyoxylate had been immobilized on the surfaces of polystyrene particles via ester bond.

(Example 38)

Polystyrene particles that had been treated with UV ozone by a method similar to that in Example 36 were immersed in a methylene chloride solution of thionyl chloride. After evaporation of excess thionyl chloride solution by distillation under reduced pressure, the resultant and the methylene chloride solution of allantoin were agitated within a flask. Excess allantoin/methylene chloride solution was removed by filtration. Polystyrene particles were washed with alcohol after contact, and then the resultant was dried. An amide bond-derived peak was observed by IR spectrometry for polystyrene particles after contact. Thus, it was confirmed that allantoin had been immobilized on the surfaces of polystyrene particles via amide bond.

(Example 39)

Polystyrene particles that had been treated with UV ozone by a method similar to that in Example 36 were immersed in a methanol solution of 3-ureidopropyltriethoxysilane. Excess 3-ureidopropyltriethoxysilane solution was removed by filtration. Polystyrene particles were washed with alcohol after contact, and then the resultant was dried. A silanol bond-derived peak was observed by IR spectrometry for polystyrene particles after contact. Thus, it was confirmed that 3-ureidopropyl had been immobilized on the surfaces of polystyrene particles via silanol bond.

The adsorbents prepared in Examples 24 to 39 and the above comparative example were evaluated for adsorption of medicines according to the following methods.

[Evaluation method]

(1) Method for filling solid phase extraction plates with adsorbents

2 mg each of the produced adsorbents was dispersed in methanol (100 $\mu$L to 200 $\mu$L) to prepare a slurry and then a solid phase extraction plate (OASIS $\mu$-Elution plate) was filled with the slurry. Adsorption of medicines was evaluated according to the method described in (2) below using the thus obtained solid phase extraction plates.

(2) Evaluation of adsorbents for adsorption of medicines

Adsorption of medicines was evaluated by the following method using medicine solutions containing as substances to be adsorbed to each adsorbent, theophylline (solvent: water), phenobarbital, phenytoin, carbamazepine, diazepam (solvent: 20% aqueous methanol solution), everolimus, rapamycin, and dibutyl phthalate (solvent: 50% aqueous methanol solution).

200 $\mu$L of methanol and then 200 $\mu$L of pure water were applied to each solid phase extraction plate filled with each adsorbent as in (1) above. Next, 100 $\mu$L of each of the above medicine solutions was poured into each plate and then it was left to stand for 1 minute. The medicine solution was applied by suction from the lower part of the plate. Next, 200 $\mu$L of pure water was applied to the plate to wash the adsorbent. After washing, 100 $\mu$L of methanol was applied and then each medicine adsorbed to the adsorbent was recovered.

Among the thus recovered solutions, 10 $\mu$L of the solution containing theophylline, the same containing phenobarbital, the same containing phenytoin, the same containing carbamazepine, and the same containing diazepam were collected. The thus recovered medicines were quantitatively determined by FIA-MS measurement.

Measuring apparatuses and measurement conditions for FIA-MS are similar to those in Examples 1 to 23 above.

Among the thus recovered solutions, each solution containing everolimus, rapamycin, or dibutyl phthalate was dried under vacuum. The thus generated solid products were each dissolved again in 100 μL of a 20% aqueous methanol solution. Medicines were quantitatively determined by LC-UV and LC-MS using 5 μL each of the solutions.

Measuring apparatuses and measurement conditions (using these measuring apparatuses) for LC-UV and LC-MS are similar to those in Examples 1 to 23 above.

The result found by dividing the amount of each medicine recovered by the above procedure by the amount of the medicine applied to the solid phase extraction plate was defined as the recovery rate. Specifically, the recovery rate was obtained by dividing the amount of a medicine recovered by the amount of the same that had been applied, and then calculating the result times 100. Table 5 shows the results.

EP 2 564 923 A1

Table 5

| | Theophylline | Phenobarbital | Phenytoin | Carbamazepine | Diazepam | Everolimus | Rapamycin | Dibutyl phthalate |
|---|---|---|---|---|---|---|---|---|
| Example 24 | 91% | 83% | 92% | 90% | 91% | 85% | 91% | 94% |
| Example 25 | 92% | 85% | 93% | 91% | 92% | 86% | 93% | 95% |
| Example 26 | 95% | 93% | 95% | 94% | 95% | 92% | 94% | 97% |
| Example 27 | 92% | 90% | 93% | 92% | 93% | 91% | 93% | 93% |
| Example 28 | 90% | 82% | 92% | 89% | 90% | 83% | 92% | 94% |
| Example 29 | 91% | 85% | 92% | 90% | 91% | 82% | 92% | 94% |
| Example 30 | 94% | 93% | 95% | 93% | 93% | 91% | 95% | 96% |
| Example 31 | 92% | 85% | 94% | 92% | 92% | 87% | 94% | 93% |
| Example 32 | 85% | 70% | 87% | 83% | 84% | 75% | 70% | 90% |
| Example 33 | 86% | 71% | 88% | 84% | 83% | 77% | 71% | 89% |
| Example 34 | 94% | 87% | 95% | 92% | 93% | 88% | 92% | 96% |
| Example 35 | 88% | 81% | 89% | 86% | 88% | 86% | 81% | 94% |
| Example 36 | 88% | 80% | 90% | 87% | 88% | 82% | 88% | 93% |
| Example 37 | 90% | 81% | 90% | 88% | 90% | 82% | 91% | 95% |
| Example 38 | 92% | 91% | 93% | 91% | 92% | 89% | 92% | 98% |
| Example 39 | 90% | 88% | 90% | 89% | 90% | 89% | 91% | 93% |
| Comparative example | Not measured | 74% | Not measured | Not measured | Not measured | 77% | 79% | Not measured |

48

As shown in Table 5, a high recovery rate was exhibited in any case of using the adsorbents of Examples 24 to 39. In particular, when phenobarbital, everolimus, or rapamycin had been used, a recovery rate better than the case of using the conventional adsorbent (comparative example) was exhibited. It was demonstrated that the adsorbents according to this embodiment have high ability to adsorb various substances including medicines.

In addition, the present invention is not limited to the above examples, but includes various modifications thereof. For example, the above Examples are described in detail to facilitate the understanding of the present invention, and thus the present invention is not always limited to those provided with all configurations described above. Furthermore, a portion of the configuration of an example can be deleted, or the configuration may be substituted with the configuration of another example. Moreover, the configuration of another example may also be added to the configuration of another example.

All publications, patents, and patent applications cited herein are incorporated herein by reference in their entirety.

**Claims**

1.   An adsorbent, which comprises a copolymer containing:

at least one type of multifunctional heterocyclic-ring-containing monomer that has a heterocyclic ring containing at least two heteroatoms in a ring system and two or more polymerizable functional groups; and
a monomer that has one or more polymerizable functional groups copolymerizable with the multifunctional heterocyclic-ring-containing monomer, wherein
the heterocyclic ring constitutes the main chain structure.

2.   The adsorbent according to claim 1, wherein the polymerizable functional groups are functional groups containing unsaturated hydrocarbons.

3.   The adsorbent according to claim 1 or 2, wherein the heteroatoms contained in the multifunctional heterocyclic-ring-containing monomer are of one or more types selected from the group consisting of nitrogen, oxygen, phosphorus, sulfur, selenium, and tellurium.

4.   The adsorbent according to any one of claims 1 to 3, wherein the heterocyclic ring contained in the multifunctional heterocyclic-ring-containing monomer is a 5-membered ring or a 6-membered ring.

5.   The adsorbent according to claim 4, wherein the heterocyclic ring contained in the multifunctional heterocyclic-ring-containing monomer is a diazole ring, a triazole ring, a tetrazole ring, a diazine ring, a triazine ring, or a tetrazine ring.

6.   The adsorbent according to claim 4 or 5, wherein the multifunctional heterocyclic-ring-containing monomer is one or more types selected from the group consisting of triallyl cyanurate or a derivative thereof, triallyl isocyanurate or a derivative thereof, and a melamine derivative.

7.   The adsorbent according to any one of claims 4 to 6, wherein the multifunctional heterocyclic-ring-containing monomer is one or more types selected from the group consisting of triallyl isocyanurate, diallyl isocyanurate, triallyl cyanurate, and 1,3,5-triacryloylhexahydro-1,3,5-triazine.

8.   The adsorbent according to any one of claims 1 to 7, wherein the monomer having one or more polymerizable functional groups is a hydrophobic monomer.

9.   The adsorbent according to any one of claims 1 to 8, wherein the monomer having one or more polymerizable functional groups is one or more types selected from the group consisting of allyl glycidyl ether, styrene, divinylbenzene, methyl methacrylate, methyl acrylate, vinyl acetate, and bisvinylphenylethane.

10.   The adsorbent according to any one of claims 1 to 9, wherein the copolymer is a random copolymer, an alternating copolymer, or a block copolymer.

11.   The adsorbent according to any one of claims 1 to 10, wherein the copolymerization ratio of the multifunctional heterocyclic-ring-containing monomer ranges from 0.5 mol% to 35 mol%.

12.   An adsorbent provided with a contact surface to which a solute can be adsorbed, which comprises a copolymer containing:

one or more types of monomer unit that is composed of a high-polarity monomer having a high-polarity molecular structure; and
one or more types of monomer unit that is composed of a low-polarity monomer having a solubility parameter (SP value) of 10.0 or less,
wherein the difference in SP value between the two monomers is at least 2.2.

13. An adsorbent provided with a contact surface to which a solute can be adsorbed, which comprises a copolymer containing:

one or more types of monomer unit that is composed of a high-polarity monomer having an SP value of 11.5 or more; and
one or more types of monomer unit that is composed of a low-polarity monomer having an SP value of 10.0 or less.

14. The adsorbent according to claim 12 or 13, wherein the SP value of the copolymer is 9.5 or more.

15. The adsorbent according to any one of claims 12 to 14, wherein the high-polarity monomer is selected from N-phenyl maleimide, maleic anhydride, fumaric acid, maleic acid, and triallyl isocyanurate.

16. An adsorbent provided with a contact surface to which a solute can be adsorbed, which comprises a copolymer containing:

one or more types of monomer unit that is composed of a high-polarity monomer having a plural number of high-polarity molecular structures of one or more types selected from an ester bond, a urethane bond, an amide bond, a thioester bond, a tetrahydrofuran ring, a furan ring, a carboxyl group, an amino group, an alkylamino group, and a dialkylamino group, wherein the number of carbon atoms contained between two structures each of the plural number of high-polarity molecular structures is 4 or less; and
one or more types of monomer unit that is composed of a low-polarity monomer having an SP value of 10.0 or less.

17. The adsorbent according to claim 16, wherein the high-polarity monomer is selected from methylenebis acrylamide, tetrahydrofurfuryl acrylate, tetrahydrofurfuryl methacrylate, diallyl phthalate, divinyl isophthalate, diallyl isophthalate, divinyl terephthalate, diallyl terephthalate, furfuryl acrylate, and furfuryl methacrylate.

18. An adsorbent provided with a contact surface to which a solute can be adsorbed, which comprises a copolymer containing:

one or more types of monomer unit that is composed of a high-polarity monomer having a high-polarity molecular structure that is selected from an isocyanuric acid ester backbone, a cyanuric acid ester backbone, a hexahydrotriazine backbone, a maleimide backbone, and an imidazole backbone; and
one or more types of monomer unit that is composed of a low-polarity monomer having an SP value of 10.0 or less.

19. The adsorbent according to claim 18, wherein the high-polarity monomer is selected from N-phenyl maleimide, triallyl isocyanurate, triallyl cyanurate, 1,3,5-triacryloylhexahydro-1,3,5-triazine, N-phenyl maleimide, and 1-vinylimidazole.

20. An adsorbent provided with a contact surface to which a solute can be adsorbed, which comprises a copolymer containing:

one or more types of monomer unit that is composed of a high-polarity monomer having one or more types of high-polarity molecular structure selected from an ether bond, an ester bond, a urethane bond, an amide bond, a thioester bond, a carboxyl group, an amino group, an alkylamino group, a dialkylamino group, and a hetero ring, wherein the weight ratio of heteroatoms in the high-polarity monomer is 30 wt% or more; and
one or more types of monomer unit that is composed of a low-polarity monomer having an SP value of 10.0 or less.

21. The adsorbent according to claim 20, wherein the high-polarity monomer is selected from N,N-dimethylacrylamide, maleic acid, fumaric acid, methacrylic acid, and acrylic acid.

**22.** The adsorbent according to any one of claims 12 to 21, wherein at least one type of monomer constituting a copolymer is a multifunctional monomer containing two or more polymerizable unsaturated functional groups.

**23.** The adsorbent according to any one of claims 12 to 22, wherein the low-polarity monomer is selected from allyl glycidyl ether, styrene, divinylbenzene, methyl methacrylate, methyl acrylate, vinyl acetate, and bisvinylphenylethane.

**24.** An adsorbent provided with a contact surface to which a solute can be adsorbed, which contains:

a monomer unit that is composed of a high-polarity monomer selected from triallyl isocyanurate, maleic anhydride, diallyl isophthalate, tetrahydrofurfuryl acrylate, triallyl cyanurate, and N,N-dimethylacrylamide; and
a monomer unit that is composed of divinylbenzene as a low-polarity monomer.

**25.** The adsorbent according to any one of claims 1 to 24, which is in the form of copolymer particles prepared by suspension polymerization, emulsion polymerization, emulsion polymerization, a spray-drying method, grinding, or crushing.

**26.** The adsorbent according to claim 25, which is a massive copolymer particle.

**27.** The adsorbent according to claim 25, which is a spherical copolymer particle.

**28.** The adsorbent according to any one of claims 25 to 27, which is in the form of porous copolymer particles through which water and an organic solvent can penetrate.

**29.** The adsorbent according to any one of claims 25 to 28, wherein the 50% average particle size of the copolymer particles ranges from 0.5 $\mu$m to 100 $\mu$m.

**30.** The adsorbent according to any one of claims 25 to 28, wherein the 50% average particle size of the copolymer particles ranges from 0.5 $\mu$m to 80 $\mu$m and the 80% average particle size ranges from 0.5 $\mu$m to 100 $\mu$m.

**31.** The adsorbent according to any one of claims 1 to 24, which comprises a monolith porous polymer structure prepared by bulk polymerization or solution polymerization.

**32.** The adsorbent according to any one of claims 1 to 24, which comprises a porous polymer membrane structure prepared by bulk polymerization, solution polymerization, or solid phase polymerization.

**33.** An adsorbent containing a hydrophobic resin, wherein
a hydrophilic group is directly or indirectly bound to a part of the surface of the hydrophobic resin,
the solubility parameter of the hydrophobic resin is 10 or less, and the difference between the solubility parameter of the hydrophilic group and the solubility parameter of the hydrophobic resin is 2.2 or more.

**34.** An adsorbent containing a hydrophobic resin, wherein
a hydrophilic group is directly or indirectly bound to a part of the surface of the hydrophobic resin,
the solubility parameter of the hydrophobic resin is 10 or less, and the solubility parameter of the hydrophilic group is 11.5 or more.

**35.** The adsorbent according to claim 33 or 34, wherein the hydrophilic group contains one or more types of backbone selected from the group consisting of an N-phenyl maleimide backbone, a maleic anhydride backbone, a fumaric acid backbone, a maleic acid backbone, and a triallyl isocyanurate backbone.

**36.** An adsorbent containing a hydrophobic resin, wherein
a hydrophilic group is directly or indirectly bound to a part of the surface of the hydrophobic resin,
the solubility parameter of the hydrophobic resin is 10 or less,
the hydrophilic group contains a plural number of structures of one or more types selected from the group consisting of an ester bond, a urethane bond, an amide bond, a thioester bond, a tetrahydrofuran ring, a furan ring, a carboxyl group, an amino group, an alkylamino group, and a dialkylamino group, and
the hydrophilic group comprises a hydrocarbon group having a carbon number of 6 or less.

37. The adsorbent according to claim 36, wherein the hydrophilic group contains one or more types of backbone selected from the group consisting of a methylenebis acrylamide backbone, a tetrahydrofurfuryl acrylate backbone, a tetrahydrofurfuryl methacrylate backbone, a diallyl phthalate backbone, a divinyl isophthalate backbone, a diallyl isophthalate backbone, a divinyl terephthalate backbone, a diallyl terephthalate backbone, a furfuryl acrylate backbone, and a furfuryl methacrylate backbone.

38. An adsorbent containing a hydrophobic resin, wherein
a hydrophilic group is directly or indirectly bound to a part of the surface of the hydrophobic resin,
the solubility parameter of the hydrophobic resin is 10 or less, and
the hydrophilic group contains one or more types of backbone selected from the group consisting of an isocyanuric acid ester backbone, a cyanuric acid ester backbone, a hexahydrotriazine backbone, a maleimide backbone, and an imidazole backbone.

39. The adsorbent according to claim 38, wherein the hydrophilic group contains one or more types of backbone selected from the group consisting of an N-phenyl maleimide backbone, a triallyl isocyanurate backbone, a triallyl cyanurate backbone, a 1,3,5-triacryloylhexahydro-1,3,5-triazine backbone, an N-phenyl maleimide backbone, and a 1-vinylimidazole backbone.

40. An adsorbent containing a hydrophobic resin, wherein
a hydrophilic group is directly or indirectly bound to a part of the surface of the hydrophobic resin,
the solubility parameter of the hydrophobic resin is 10 or less,
the hydrophilic group contains
one or more types of heteroatom selected from the group consisting of an oxygen atom, a nitrogen atom, and a sulfur atom, and
one or more types of structure selected from the group consisting of an ether bond, an ester bond, a urethane bond, an amide bond, a thioester bond, a carboxyl group, an amino group, an alkylamino group, a dialkylamino group, and a hetero ring backbone, and
the total content of heteroatoms in the hydrophilic group is 30 mol% or more with respect to the total number of moles of atoms of the hydrophilic group.

41. The adsorbent according to claim 40, wherein the hydrophilic group contains one or more types of backbone selected from the group consisting of a N,N'-dimethylacrylamide backbone, a maleic acid backbone, a fumaric acid backbone, a methacrylic acid backbone, and an acrylic acid backbone.

42. The adsorbent according to any one of claims 33 to 41, which contains one or more types of hydrophobic resin selected from the group consisting of polypropylene, polyethylene, polystyrene, an allyl glycidyl ether polymer, a divinylbenzene polymer, a methyl methacrylate polymer, a methyl acrylate polymer, polyvinyl acetate, and a bisvinylphenylethane polymer.

43. The adsorbent according to any one of claims 33 to 42, wherein, when the hydrophilic group indirectly binds to the hydrophobic resin, the hydrophilic group binds to the hydrophobic resin via one or more types of bond selected from the group consisting of an ether bond, an ester bond, an amide bond, and a silanol bond.

44. The adsorbent according to any one of claims 33 to 43, which has a spherical shape.

45. The adsorbent according to claim 44, wherein the average diameter is 0.5 $\mu$m or more and 100 $\mu$m or less.

46. A method for producing the adsorbent according to any one of claims 33 to 45, which comprises a step of performing one or more types of treatment selected from the group consisting of ozone treatment, plasma treatment, and treatment with an oxidizing agent for the surface of a hydrophobic resin, and then bringing the surface of the hydrophobic resin after treatment into contact with a compound having a hydrophilic group.

47. A solid phase extraction method, which comprises a step of bringing a solution that contains one or more types of solute selected from the group consisting of a non-polar solute molecule, a low-polarity solute molecule, a moderate-polarity solute molecule, and a high-polarity solute molecule into contact with the adsorbent of any one of claims 1 to 32, so that one or more types of solute contained in the solution is adsorbed and held.

48. The solid phase extraction method according to claim 47, wherein the solution contains a polar solvent.

**49.** The solid phase extraction method according to claim 48, wherein the polar solvent is water or a mixed solvent of one or more types of polar organic solvent and water.

**50.** The solid phase extraction method according to claim 48, wherein the polar solvent contains one or more types selected from the group consisting of methanol, ethanol, propanol, 2-propanol, acetone, methyl ethyl ketone, methyl isobutyl ketone, methyl acetate, ethyl acetate, acetonitrile, tetrahydrofuran, 1,4-dioxane, N,N-dimethylformamide, and dimethylsulfoxide.

**51.** The solid phase extraction method according to any one of claims 47 to 50, wherein the solution to be brought into contact with the adsorbent contains, blood plasma, serum, blood, urine, a spinal fluid, a synovial fluid, a biological tissue extract, an aqueous solution, ground water, surface water, a soil extract, cosmetics, a food substance, or an extract of the food substance.

**52.** The solid phase extraction method according to any one of claims 47 to 51, wherein the solute to be subjected to solid phase extraction is a chemical, a medicine, an antibacterial agent, an anticonvulsant, an immunosuppressive agent, a drug, an insecticide, a herbicide, a poison, a biomolecule, a contaminant, a metabolic medicine, a metabolite thereof, or a degraded product thereof.

**53.** The solid phase extraction method according to claim 52, wherein the biomolecule is a protein, a vitamin, a hormone, a polypeptide, a polynucleotide, a lipid, or a carbohydrate.

**54.** A solid phase extraction cartridge, which is provided with the adsorbent according to any one of claims 1 to 32 in a container having an open end.

**55.** A solid phase extraction column, which is provided with the adsorbent according to any one of claims 1 to 32 in a container having an open end.

**56.** A liquid chromatography/mass spectroscopy (LC-MS) system, which comprises performing, as pretreatment, solid phase extraction for a solute using the solid phase extraction cartridge of claim 54 or the solid phase extraction column of claim 55.

**57.** A liquid chromatography/ultraviolet spectroscopy (LC-UV) system, which comprises performing, as pretreatment, solid phase extraction for a solute using the solid phase extraction cartridge of claim 54 or the solid phase extraction column of claim 55.

**58.** A flow injection analysis mass spectroscopy (FIA-MS) system, which comprises performing, as pretreatment, solid phase extraction for a solute using the solid phase extraction cartridge of claim 54 or the solid phase extraction column of claim 55.

Fig. 1

# Fig. 2

# Fig. 3

Fig. 4

Fig. 5

Fig. 6

Fig. 7

# Fig. 8

Fig. 9

Fig. 10

Fig. 11

Fig. 12

## INTERNATIONAL SEARCH REPORT

| | International application No. |
|---|---|
| | PCT/JP2011/060370 |

A. CLASSIFICATION OF SUBJECT MATTER
*B01J20/281*(2006.01)i, *G01N30/88*(2006.01)i

According to International Patent Classification (IPC) or to both national classification and IPC

B. FIELDS SEARCHED

Minimum documentation searched (classification system followed by classification symbols)
B01J20/281, G01N30/88

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2010/018810 A1 (Wako Pure Chemical Industries, Ltd.), 18 February 2010 (18.02.2010), entire text & EP 2314635 A1 | 1-11,25-32, 47-58 |
| A | WO 1999/64480 A1 (WATERS INVESTMENTS LTD.), 16 December 1999 (16.12.1999), entire text & JP 2002-517574 A & US 6322695 B1 & EP 1091981 A1 | 1-11,25-32, 47-58 |
| A | JP 57-186167 A (Sekisui Chemical Co., Ltd.), 16 November 1982 (16.11.1982), entire text (Family: none) | 1-11,25-32, 47-58 |

☐ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 July, 2011 (27.07.11) | 09 August, 2011 (09.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

| INTERNATIONAL SEARCH REPORT | International application No. |
| --- | --- |
| | PCT/JP2011/060370 |

**Box No. II**  **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**  **Observations where unity of invention is lacking (Continuation of item 3 of first sheet)**

This International Searching Authority found multiple inventions in this international application, as follows:

```
See extra sheet
```

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
   The inventions of claims 1-11 and parts of claims 25-32 and 47-58 dependent on claims 1-11

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2011/060370

Continuation of Box No.III of continuation of first sheet(2)

The claims of this international application contain the following three (groups of) inventions.

(Invention group 1) the inventions of claims 1-11 and parts of claims 25-32 and 47-58 dependent on claims 1-11
An adsorbent which is composed of a copolymer that contains: at least one kind of a multifunctional heterocyclic ring-containing monomer which has two or more polymerizable functional groups and a heterocyclic ring having at least two heteroatoms in the ring structure; and at least one kind of a monomer that has one or more polymerizable functional groups that are copolymerizable with the multifunctional heterocyclic ring-containing monomer. The main chain structure of the adsorbent is configured of the heterocyclic ring.
(Invention group 2) the inventions of claims 12-24 and parts of claims 25-32 and 47-58 dependent on claims 12-24
An adsorbent which is composed of a copolymer that contains: at least one kind of a monomer unit that is composed of a high-polarity monomer having a high-polarity molecular structure and at least one kind of a monomer unit that is composed of a low-polarity monomer having a solubility parameter (an SP value) of 10.0 or less, with the difference between the SP values of the monomers being at least 2.2. The adsorbent has a contact surface to which a solute can be adsorbed.
(Invention group 3) the inventions of claims 33-46
An adsorbent containing a hydrophobic resin, wherein: a hydrophilic group is directly or indirectly bonded to a part of the surface of the hydrophobic resin; the solubility parameter of the hydrophobic resin is 10 or less; and the difference between the solubility parameter of the hydrophilic group and the solubility parameter of the hydrophobic resin is 2.2 or more.

With respect to the invention group 2, the technical feature common to independent claims 12, 13, 16, 18, 20 and 24 is "an adsorbent which is composed of a copolymer that contains: at least one kind of a monomer unit that is composed of a high-polarity monomer having a high-polarity molecular structure and at least one kind of a monomer unit that is composed of a low-polarity monomer having a solubility parameter (an SP value) of 10.0 or less, said adsorbent having a contact surface to which a solute can be adsorbed". The common technical feature, however, cannot be considered as a special technical feature since it does not make a contribution over the prior art in view of the disclosure of document 3 (JP 57-186167 A (Sekisui Chemical Co., Ltd.), 16 November 1982 (16.11.1982), entire text). In addition, there is no other same or corresponding special technical feature among those inventions. Consequently, the invention group 2 contains the following six (groups of) inventions.

(Invention group 2-1) the inventions of claim 12 and parts of claims 13, 14, 22, 23, 25-32 and 47-58 dependent on claim 12
(Invention group 2-2) the inventions of claim 13 and parts of claims 13, 14, 22, 23, 25-32 and 47-58 dependent on claim 13
(Invention group 2-3) the inventions of claim 16 and parts of claims 17, 22, 23, 25-32 and 47-58 dependent on claim 16
(Invention group 2-4) the inventions of claim 18 and parts of claims 19, 22, 23, 25-32 and 47-58 dependent on claim 18

(Continued to next sheet)

Form PCT/ISA/210 (extra sheet) (July 2009)

<table>
<tr><td>**INTERNATIONAL SEARCH REPORT**</td><td>International application No.<br>PCT/JP2011/060370</td></tr>
</table>

　　(Invention group 2-5) the inventions of claim 20 and parts of claims 21-23, 25-32 and 47-58 dependent on claim 20
　　(Invention group 2-6) the inventions of claim 24 and parts of claims 25-32 and 47-58 dependent on claim 24

　　Consequently, the claims of this international application contain eight (groups of) inventions.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5618438 A
- US 5882521 A
- US 6106721 A
- US 9738774 B
- US 03102061 A

- JP 2000005598 A
- JP 2010270421 A
- JP 2010104201 A
- JP 2010140691 A

**Non-patent literature cited in the description**

- **MCDONALD.** Solid Phase Extraction Applications Guide and Bibliography. Waters, 1995
- **E. M. THURMAN ; M. S. MILLS.** Solid-Phase Extraction Principles and Practice. Wiley and Sons, 1998
- **N. J. K. SIMPSON.** Solid-Phase Extraction: Principles, Techniques and Application. Marcel Dekker, 2000

- Bakerbond SPE Bibliography. JTBaker, Inc, 1995
- **F. FEDORS.** A Method for Estimating Both the Solubility Parameters and Molar Volumes of Liquids. *Polymer Engineering and Science,* 1974, vol. 14 (2
- Polymer Handbook. John Wiley & Sons